(19) Europäisches Patentamt European Patent Office Office européen des brevets

(11) **EP 4 624 170 A1**

(12) **EUROPEAN PATENT APPLICATION**

(43) Date of publication:
01.10.2025 Bulletin 2025/40

(21) Application number: 25165912.4

(22) Date of filing: 25.03.2025

(51) International Patent Classification (IPC):
**B41J 2/175** (2006.01) **B41J 2/14** (2006.01)
**B41J 2/19** (2006.01)

(52) Cooperative Patent Classification (CPC):
**B41J 2/17513; B41J 2/14233; B41J 2/17563;
B41J 2/19;** B41J 2202/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.03.2024 JP 2024056382

(71) Applicant: **CANON KABUSHIKI KAISHA**
**Tokyo 146-8501 (JP)**

(72) Inventors:
• **KITASE, Yushi**
**Tokyo (JP)**
• **YOSHII, Kazuya**
**Tokyo (JP)**
• **NABESHIMA, Naozumi**
**Tokyo (JP)**

(74) Representative: **WESER & Kollegen**
**Patentanwälte PartmbB**
**Radeckestraße 43**
**81245 München (DE)**

(54) **LIQUID EJECTION HEAD AND LIQUID EJECTION APPARATUS**

(57) An object is to provide a liquid ejection head (1) and liquid ejection apparatus (50) capable of suppressing the occurrence of ejection failure and ink leakage. To this end, the amount of gas permeation through a region of a gas permeable membrane (710) of polypropylene (PP) with an area of 0.36 cm$^2$ is set to 0.01 cc/day or more in a case where the pressure difference between a bubble accumulation chamber (520) and a depressurization chamber (760) is set to 50 kPa.

FIG.27A

**Description**

BACKGROUND

Field of the Invention

The present disclosure relates to a liquid ejection head and a liquid ejection apparatus.

Description of the Related Art

Japanese Patent Laid-Open No. 2008-173961 discloses a method in which bubbles are trapped into an upstream channel in a print head by bringing the bubbles into contact with a permeable defining wall that is a wall forming part of the channel and is provided at a portion adjoining a space to be depressurized. According to Japanese Patent Laid-Open No. 2008-173961, the gas in the trapped bubbles permeates through the permeable defining wall. As a result, the gas is collected into a gas collection hollow portion.

Note that the permeable defining wall needs to have a certain thickness since it is formed by molding. Accordingly, it takes a certain time for a bubble to permeate through the permeable defining wall. In a case where a large amount of bubbles has dissolved in an ink, there is a possibility of failing to handle the permeation and let bubbles flow into pressure chambers and cause ejection failure, depending on the ink type or the condition in which the apparatus has been left unused. Further, in a case where the residual bubbles due to the failure to handle the permeation are left to stand, there is a possibility that the bubbles expand in response to an environmental change and cause ink leakage.

SUMMARY

In view of the above, the present disclosure provides a liquid ejection head and liquid ejection apparatus capable of suppressing the occurrence of ejection failure and ink leakage.

The present invention in its first aspect provides liquid ejection head as in claims 1 to 15.

The present invention in its first aspect provides liquid ejection apparatus as in claims 16 to 17.

According to the present disclosure, it is possible to provide a liquid ejection head and liquid ejection apparatus capable of suppressing the occurrence of ejection failure and ink leakage.

Further features of the present invention will become apparent from the following description of exemplary embodiments with reference to the attached drawings.

BRIEF DESCRIPTION OF THE DRAWINGS

Figs. 1A and 1B are a view and a diagram describing a liquid ejection apparatus;
Fig. 2 is a schematic diagram illustrating channels in an ink supply unit;
Fig. 3 is a schematic diagram describing a pressure chamber pressurizing operation;
Fig. 4 is a schematic diagram describing a pressurization maintaining operation;
Fig. 5 is a schematic diagram describing an ink replenishing operation;
Fig. 6 is a schematic diagram describing a bubble discharge depressurization operation;
Fig. 7 is an exploded perspective view of a liquid ejection head;
Figs. 8A and 8B are cross-sectional views of the liquid ejection head and ejection modules;
Fig. 9 is a schematic external view of a circulation unit;
Figs. 10A and 10B are vertical cross-sectional views illustrating a circulation path;
Fig. 11 is a block diagram schematically illustrating the circulation path;
Figs. 12A to 12C are cross-sectional views illustrating an example of pressure adjustment units;
Figs. 13A and 13B are external perspective views of a circulation pump;
Fig. 14 is a cross-sectional view of the circulation pump illustrated in Fig. 13A along the XIV-XIV line;
Figs. 15A to 15E are views describing a flow of an ink inside the liquid ejection head;
Figs. 16A and 16B are schematic views illustrating circulation paths in an ejection unit;
Fig. 17 is a view illustrating an opening plate;
Fig. 18 is a view illustrating an ejection element substrate;
Figs. 19A to 19C are cross-sectional views illustrating ink flows in the ejection unit;
Figs. 20A and 20B are cross-sectional views illustrating the vicinity of an ejection port;
Figs. 21A and 21B are cross-sectional views illustrating a comparative example of the vicinity of an ejection port;

Fig. 22 is a view illustrating a comparative example of the ejection element substrate;

Figs. 23A and 23B are views illustrating a channel configuration of the liquid ejection head;

Figs. 24A and 24B are views schematically illustrating backflow of inks in the vicinity of ejection ports;

Figs. 25A and 25B are views describing ink supply inside an ejection module;

Fig. 26 is a schematic view illustrating a state where a main body part of the liquid ejection apparatus and the liquid ejection head are connected;

Figs. 27A and 27B are schematic views of bubble discharge units;

Figs. 28A and 28B are cross-sectional views illustrating modifications of the bubble discharge units;

Fig. 29 is a cross-sectional view illustrating a modification of a deformation suppression member;

Figs. 30A to 30C are schematic views illustrating modifications of the deformation suppression member;

Figs. 31A to 31C are schematic views illustrating initial filling and operation of the bubble discharge units;

Fig. 32 is a view schematically illustrating a first configuration example of an ink path;

Fig. 33 is a view schematically illustrating a first modification of a circulation path;

Figs. 34A to 34D are views schematically illustrating the vicinity of a heating-type circulation pump;

Fig. 35 is a view schematically illustrating the first modification of the circulation path;

Fig. 36 is a view schematically illustrating a second modification of a circulation path;

Fig. 37 is a view schematically illustrating the second modification of the circulation path;

Fig. 38 is a view schematically illustrating a third modification of a circulation path;

Fig. 39 is a view schematically illustrating the third modification of the circulation path;

Fig. 40 is a view schematically illustrating a second configuration example of an ink path;

Fig. 41 is a view schematically illustrating a fourth modification of a circulation path;

Fig. 42 is a view schematically illustrating the fourth modification of the circulation path;

Fig. 43 is a view schematically illustrating a fifth modification of a circulation path;

Fig. 44 is a view schematically illustrating the fifth modification of the circulation path;

Fig. 45 is a view schematically illustrating a sixth modification of a circulation path;

Fig. 46 is a view schematically illustrating the sixth modification of the circulation path;

Fig. 47 is a block diagram schematically illustrating another modification of a circulation path;

Fig. 48 is a block diagram schematically illustrating another modification of a circulation path; and

Fig. 49 is a block diagram schematically illustrating another modification of a circulation path.

DESCRIPTION OF THE EMBODIMENTS

<<Embodiment 1>>

A preferred embodiment of the present disclosure will be specifically described with reference to the accompanying drawings. Note that the following embodiment does not limit the contents of the present disclosure, and not all of the combinations of the features described in the embodiment are necessarily essential for the solution to be provided by the present disclosure. Note that identical constituent elements are denoted by the same reference numeral. The present embodiment will be described using an example in which a thermal-type ejection element that ejects a liquid by generating a bubble with an electrothermal conversion element is employed as each ejection element that ejects a liquid, but is not limited to this example. The present embodiment is applicable also to liquid ejection heads employing an ejection method in which a liquid is ejected using a piezoelectric element as well as liquid ejection heads employing other ejection methods. Moreover, the pumps, pressure adjustment units, and so on to be described below are not limited to the configurations described in the embodiment and illustrated in the drawings. In the following description, a basic configuration of the present disclosure will be discussed first, and then characteristic features of the present disclosure will be described.

<Liquid Ejection Apparatus>

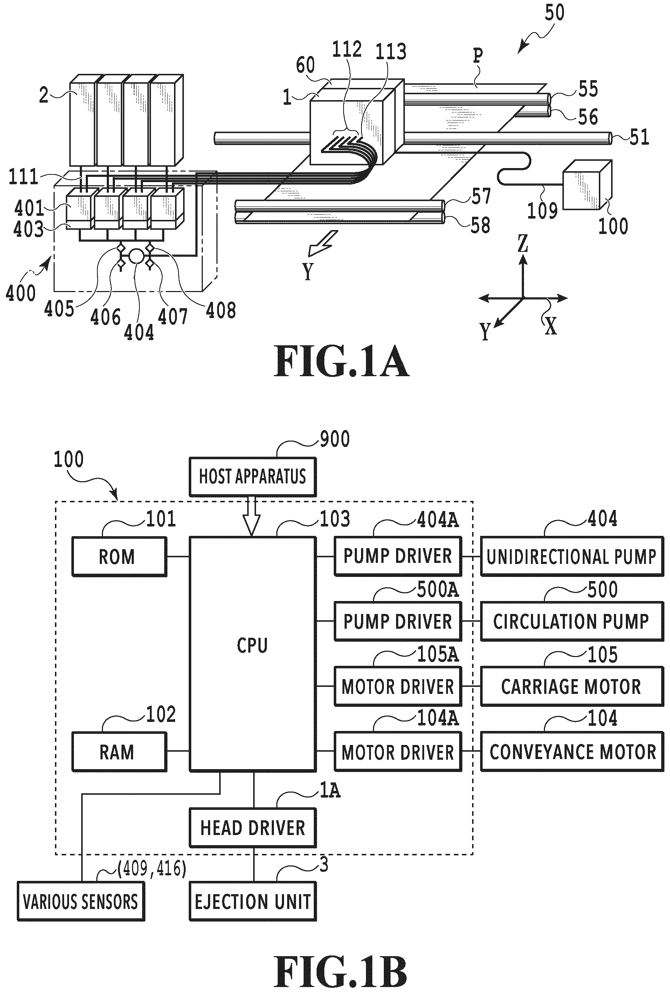

Figs. 1A is a view for describing a liquid ejection apparatus, and is an enlarged view of a liquid ejection head of the liquid ejection apparatus and its vicinity. First, a schematic configuration of a liquid ejection apparatus 50 in the present embodiment will be described with reference to Figs. 1A and 1B. Fig. 1A is a perspective view schematically illustrating a liquid ejection apparatus on which a liquid ejection head 1 can be mounted. The liquid ejection apparatus 50 in the present embodiment is configured as a serial inkjet printing apparatus that performs printing on a print medium P by ejecting inks as liquids while scanning the liquid ejection head 1.

The liquid ejection head 1 is mounted on a carriage 60. The carriage 60 reciprocally moves in a main scanning direction (X direction) along a guide shaft 51. The print medium P is conveyed in a sub scanning direction (Y direction) crossing (in this example, orthogonally crossing) the main scanning direction by upstream conveyance rollers 55 and 56 and downstream conveyance rollers 57 and 58. Note that, in drawings to be referred to below, the Z direction represents a vertical direction and crosses (in this example, orthogonally crosses) an X-Y plane defined by the X direction and the Y direction. The liquid ejection head 1 is configured to be attachable to and detachable from the carriage 60 by a user.

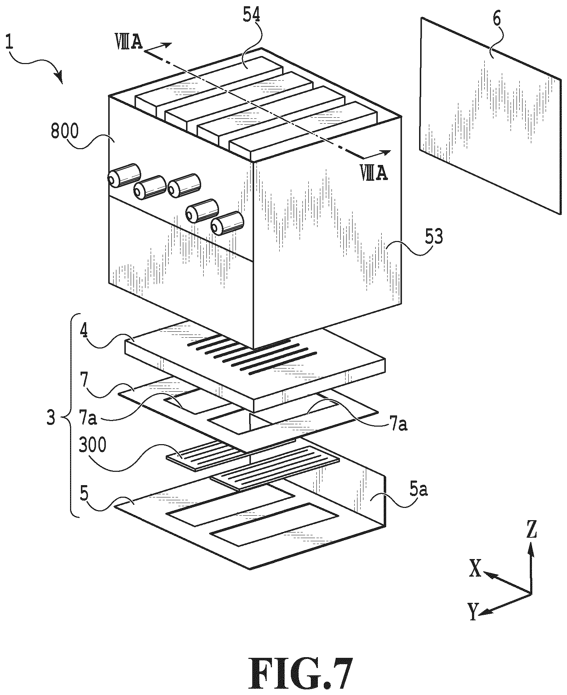

The liquid ejection head 1 includes circulation units 54 (see Fig. 7) and an ejection unit 3 (see Fig. 7) to be described later. While a specific configuration will be described later, the ejection unit 3 is provided with a plurality of ejection ports and energy generation elements (hereinafter referred to as "ejection elements") that generate ejection energy for ejecting liquids from the ejection ports.

The liquid ejection apparatus 50 is also provided with ink tanks 2 serving as ink supply sources and an ink supply unit 400. The inks stored in the ink tanks 2 are supplied to the liquid ejection head 1 through respective first supply paths 111 and second supply paths 112 by the ink supply unit 400. Also, gases such as bubbles generated in the liquid ejection head 1 are discharged to the outside of the liquid ejection head 1 through a third air channel 113 by the ink supply unit 400.

The liquid ejection apparatus 50 forms a predetermined image on the print medium P by repeating a printing scan involving performing printing by causing the liquid ejection head 1 mounted on the carriage 60 to eject the inks while moving in the main scanning direction, and a conveyance operation involving conveying the print medium P in the sub scanning direction. Note that the liquid ejection head 1 in the present embodiment is capable of ejecting four types of inks, namely black (K), cyan (C), magenta (M), and yellow (Y) inks, and printing full-color images with these inks. Here, the inks ejectable from the liquid ejection head 1 are not limited to the above four types of inks. The present disclosure is also applicable to liquid ejection heads for ejecting other types of inks. In short, the types and number of inks to be ejected from the liquid ejection head are not limited. For example, one, two, or three types of inks or even five or more types of inks may be ejected from the liquid ejection head.

The liquid ejection apparatus 50 is also provided with a control unit 100 and a cap member (not illustrated) capable of covering the ejection port surface of the liquid ejection head 1 in which its ejection ports are formed. The cap member is provided at a position in the liquid ejection apparatus 50 separated from the conveyance path for the print medium P in the X direction. The cap member covers the ejection port surface of the liquid ejection head 1 during a non-print operation, and is used for prevention of drying of the ejection ports, protection of the ejection ports, an ink suction operation from the ejection ports, and so on. Signals output from the control unit 100 are sent to the liquid ejection head 1 and other elements through a signal line 109.

Fig. 1B is a block diagram illustrating a control system of the liquid ejection apparatus 50. The control unit 100 of the liquid ejection apparatus 50 has a central processing unit (CPU) 103, a random access memory (RAM) 102, a read-only memory (ROM) 101, a head driver 1A, motor drivers 104A and 105A, and pump drivers 404A and 500A. The CPU 103 functions as a control unit that controls operation of elements of the liquid ejection apparatus 50 based on a program such as a process procedure stored in the ROM 101. The RAM 102 is used as a work area or the like for the CPU 103 to execute processes. The CPU 103 receives image data from a host apparatus 900 outside the liquid ejection apparatus 50 and controls the head driver 1A with it to control the driving of the ejection elements provided in the ejection unit 3. The CPU 103 also controls drivers for various actuators provided in the liquid ejection apparatus. For example, the CPU 103 controls the motor driver 104A that drives a conveyance motor 104 for conveying the print medium P. The CPU 103 controls the motor driver 105A that drives a carriage motor 105 for moving the carriage 60. The CPU 103 controls the pump driver 500A that drives circulation pumps 500 to be described later. The CPU 103 controls the pump driver 404A that drives unidirectional pumps 404 to be described later. Also, the control unit 100 receives signals output from various sensors such as inner volume sensors, pressure sensors 409, and liquid sensors 416 to be described later. Note that Fig. 1B illustrates a configuration in which image data is received from the host apparatus 900 and processes are performed, but the liquid ejection apparatus 50 may perform processes regardless of whether data is given from the host apparatus 900.

<Ink Supply Unit>

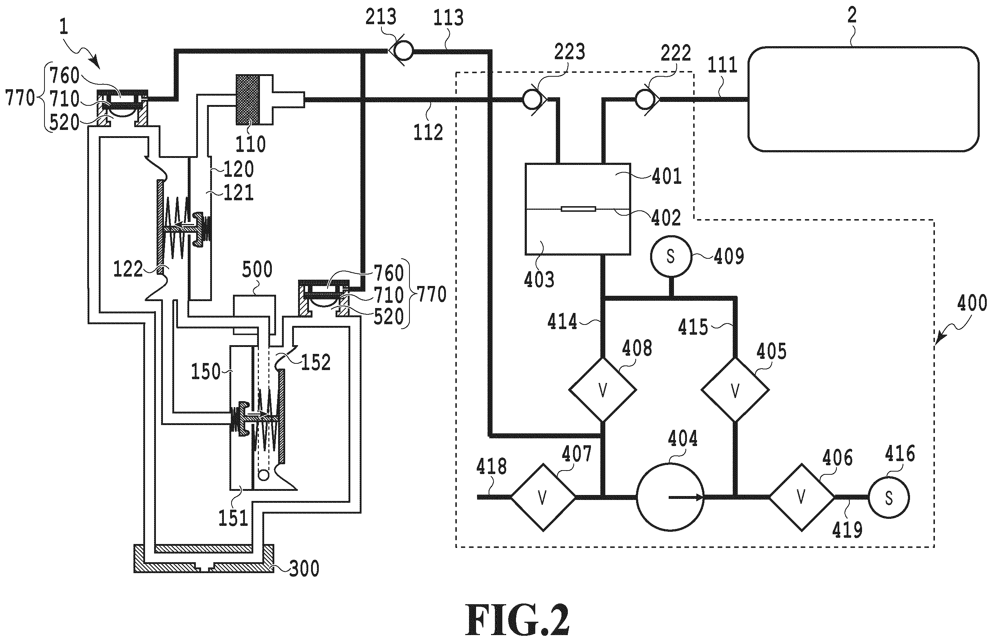

Next, a configuration of the ink supply unit 400 will be described using Fig. 2. Fig. 2 is a schematic diagram illustrating channels in the ink supply unit 400.

The ink supply unit 400 has intermediate tanks 401 each of which temporarily stores the ink supplied from the corresponding ink tank 2, which is configured to be detachably attachable to the liquid ejection apparatus 50, through the corresponding first supply path 111. A first check valve 222 is provided at an intermediate portion of the first supply path 111, and the first check valve 222 prevents backflow of the ink into the ink tank 2 from the intermediate tank 401. At least one side of the intermediate tank 401 is formed of a flexible film 402, making the inner volume of the intermediate tank 401 variable. The intermediate tank 401 is provided with an inner volume sensor (not illustrated). The inner volume sensor is capable of detecting the inner volume of the intermediate tank 401 by measuring displacement of the flexible film 402. The amount of the ink in the intermediate tank 401 can be estimated from the inner volume of the intermediate tank 401 detected by the inner volume sensor. The amount of the ink in the intermediate tank 401 may be estimated from the inner volume of the intermediate tank 401 detected by the inner volume sensor and the amount of the ink consumed by formation of an image on a print medium, suction of the ink by the cap member, or the like.

The intermediate tank 401 is in abutment with a pressure chamber filled with air with the flexible film 402 therebetween. The pressure chamber by the intermediate tank 401 will be hereinafter referred to as "intermediate pressure chamber 403." The pressure on the ink stored in the intermediate tank 401 can be changed by changing the pressure on the gas (air) inside the intermediate pressure chamber 403. The ink stored in the intermediate tank 401 is supplied to the liquid ejection head 1 through the second supply path 112, which is connected to the intermediate tank 401 and a filter 110 of the liquid ejection head 1. A second check valve 223 is provided at an intermediate portion of the second supply path 112 and the second check valve 223 prevents backflow of the ink into the intermediate tank 401 from the liquid ejection head 1. The ink supply unit 400 has an unidirectional pump 404, which is driven by the pump driver 404A. The unidirectional pump 404 is constructed using a diaphragm pump or the like, for example, and is capable of sucking in and jetting air in one direction by being driven by the pump driver 404A.

The intermediate pressure chamber 403 and the suction side of the unidirectional pump 404 are connected through a first air channel 414. A first on-off valve 408 is provided at an intermediate portion of the first air channel 414, and the first air channel 414 can be switched between a communicating state and a closed state in response to actuation of the first on-off valve 408 to open or close it. The first air channel 414 has a first branched air channel 418 branching off from between the first on-off valve 408 and the unidirectional pump 404 and connected at one end thereof to the atmosphere. The first branched air channel 418 is provided with a third on-off valve 407, and the suction side of the unidirectional pump 404 can be switched between a tightly closed state and a state of being open to the atmosphere in response to actuation of the third on-off valve 407 to close or open it.

Also, the intermediate pressure chamber 403 and the jetting side of the unidirectional pump 404 are connected through a second air channel 415. A second on-off valve 405 is provided at an intermediate portion of the second air channel 415, and the second air channel 415 can be switched between a communicating state and a closed state in response to actuation of the second on-off valve 405 to open or close it. The second air channel 415 has a second branched air channel 419 branching off from between the second on-off valve 405 and the unidirectional pump 404 and connected at one end thereof to the atmosphere. The second branched air channel 419 is provided with a fourth on-off valve 406, and the jetting side of the unidirectional pump 404 can be switched between a tightly closed state and a state of being open to the atmosphere in response to actuation of the fourth on-off valve 406 to close or open it. A liquid sensor 416 is provided at the end of the second branched air channel 419 that is open to the atmosphere. The liquid sensor 416 is capable of detecting the ink that has entered the air channel. A pressure sensor 409 is provided at any position that is in communication with the intermediate pressure chamber 403. The pressure sensor 409 is capable of detecting the pressure on the gas (air) inside the intermediate pressure chamber 403. The unidirectional pump 404 and depressurization chambers 760 of bubble discharge units 770 in the liquid ejection head 1 are connected through the third air channel 113. A third check valve 213 is provided at an intermediate portion of the third air channel 113, and the third check valve 213 prevents backflow of a gas (air) into the depressurization chamber 760 from the ink supply unit 400.

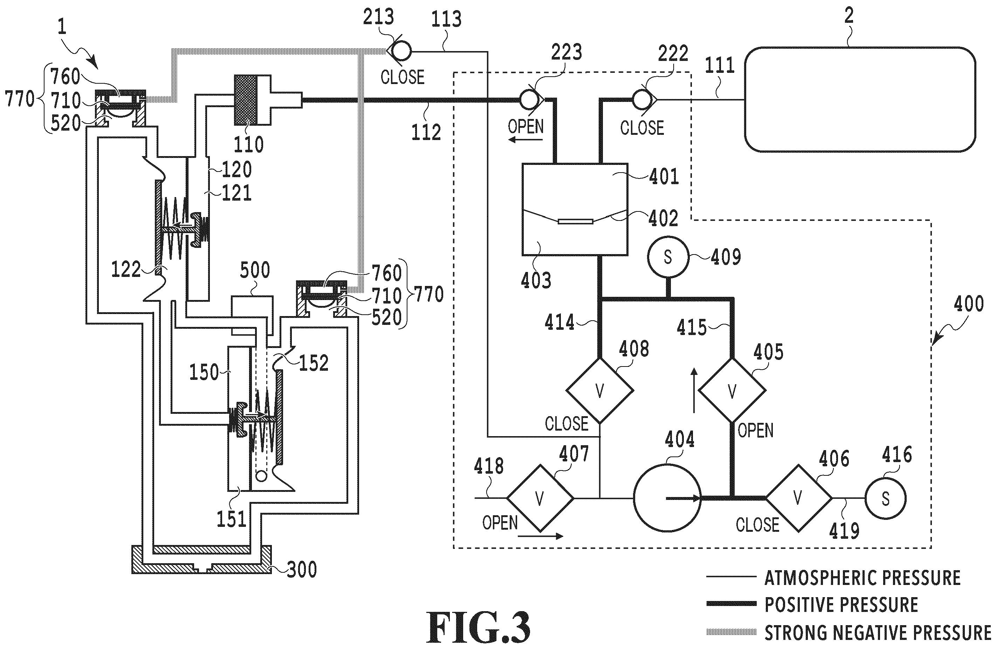

Next, operation of the ink supply unit 400 will be described using Figs. 3 to 6. In the present embodiment, the ink supply unit 400 performs mainly four operations (a pressure chamber pressurizing operation, a pressurization maintaining operation, an ink replenishing operation, and a bubble discharge depressurization operation) in order to perform printing on the print medium P. Note that the CPU 103 controls the unidirectional pump 404 and the first to fourth on-off valves based on the results of the detections by the inner volume sensor (not illustrated), the pressure sensor 409, and so on to perform the pressure chamber pressurizing operation, the pressurization maintaining operation, the ink replenishing operation, and the bubble discharge depressurization operation, which will be described next.

<Pressure Chamber Pressurizing Operation>

First, the pressure chamber pressurizing operation will be described using Fig. 3. Fig. 3 is a schematic diagram describing the pressure chamber pressurizing operation. In the liquid ejection head 1 according to the present embodiment, each ink is supplied by pressurization. This allows stable ink ejection regardless of the change in the flow rate of the ink due to a difference in the amount of ejection from the liquid ejection head 1 and the change in the pressure loss of the ink due to the viscosity of the ink or the like. The pressure chamber pressurizing operation is an operation of pressurizing the ink in the intermediate tank 401 through the flexible film 402 by pressurizing the intermediate pressure chamber 403 to supply the pressurized ink to the liquid ejection head 1 through the second supply path 112. As the ink in the intermediate tank 401 is consumed, the inner volume of the intermediate pressure chamber 403 in abutment with the intermediate tank 401 with the flexible film 402 therebetween increases, so that the pressure on the gas in the intermediate pressure chamber 403 decreases. Also, in the ink replenishing operation to be described later, the pressure on the gas in the intermediate pressure chamber 403 is lowered and then the first on-off valve 408 and the third on-off valve 407 are actuated to open to thereby open the intermediate pressure chamber 403 to the atmosphere. In this case, the pressure on the gas in the intermediate pressure chamber 403 becomes the atmospheric pressure. The pressure chamber pressurizing operation will be needed in a case where the pressure on the gas in the intermediate pressure chamber 403 drops or the pressure on the gas in the intermediate pressure chamber 403 becomes the atmospheric pressure as above. The pressure sensor 409 monitors the pressure on the gas in the intermediate pressure chamber 403, and the ink supply unit 400 performs the pressure chamber pressurizing operation in a case where the pressure on the gas in the intermediate pressure chamber 403 is lower than a predetermined pressure required for the liquid ejection head 1 to perform stable ejection. In the pressure chamber pressurizing operation, the ink supply unit 400 drives the unidirectional pump 404 with the first on-off valve 408 actuated to close, the second on-off valve 405 actuated to open, the third on-off valve 407 actuated to open, and the fourth on-off valve 406 actuated to close to thereby raise the pressure on the gas in the intermediate pressure chamber 403. As the pressure on the gas in the intermediate pressure chamber 403 rises, the ink in the intermediate tank 401 is pressurized through the flexible film 402, so that the ink in the second supply path 112 is pressurized through the second check valve 223. As a result, the ink is supplied to the liquid ejection head 1 by pressurization. The pressure sensor 409 monitors the pressure on the gas in the intermediate pressure chamber 403, and the ink supply unit 400 stops driving the unidirectional pump 404 in a case where the pressure on the gas in the intermediate pressure chamber 403 is the predetermined pressure or more. During the above, the depressurization chamber 760 is closed by the third check valve 213, so that the pressure in the depressurization chamber 760 is maintained at a low pressure (negative pressure).

<Pressurization Maintaining Operation>

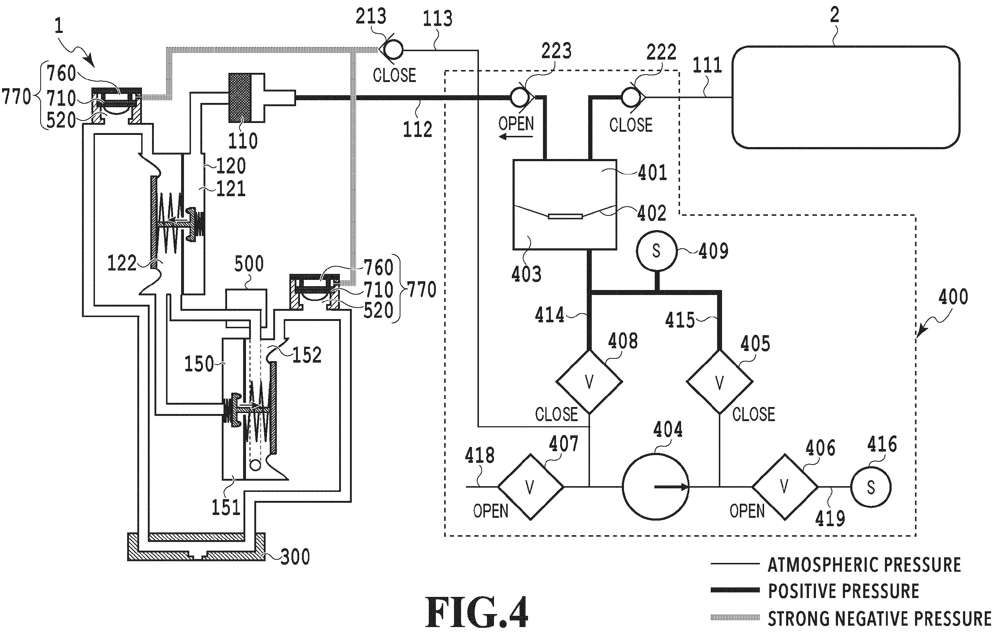

Next, the pressurization maintaining operation will be described using Fig. 4. Fig. 4 is a schematic diagram describing the pressurization maintaining operation. The pressurization maintaining operation is an operation of maintaining the pressure on the gas in the intermediate pressure chamber 403 raised by the pressure chamber pressurizing operation at the high level. The ink supply unit 400 performs the pressurization maintaining operation in a case where the pressure on the gas in the intermediate pressure chamber 403 is the predetermined pressure or more when printing is performed on a print medium. Also, in a case where the pressure on the gas in the intermediate pressure chamber 403 remains high when next printing is started, the next printing can be started more quickly without performing the pressure chamber pressurizing operation. Hence, it is desirable to maintain the pressure on the gas in the intermediate pressure chamber 403 at a high level. The ink supply unit 400 therefore performs the pressurization maintaining operation also in a case where the pressure on the gas in the intermediate pressure chamber 403 is the predetermined pressure or more during a standby time during which no printing is performed on a print medium. In a case where the pressure on the gas in the intermediate pressure chamber 403 is the predetermined pressure or more after the pressure chamber pressurizing operation is performed, the ink supply unit 400 switches to a state where the first on-off valve 408 is actuated to close and the second on-off valve 405 is actuated to close as the pressurization maintaining operation. At this time, the third on-off valve 407 and the fourth on-off valve 406 may be actuated to close or actuated to open. As a result, the pressure on the gas in the intermediate pressure chamber 403 raised by the pressure chamber pressurizing operation is maintained at the high pressure. Thereafter, the pressure sensor 409 monitors the pressure change by the change in the inner volume of the intermediate pressure chamber 403, and the ink supply unit 400 performs the pressure chamber pressurizing operation again in a case where the pressure on the gas in the intermediate pressure chamber 403 is lower than the predetermined pressure. During the above, the depressurization chamber 760 is closed by the third check valve 213, so that the pressure in the depressurization chamber 760 is maintained at a low pressure (negative pressure).

<Ink Replenishing Operation>

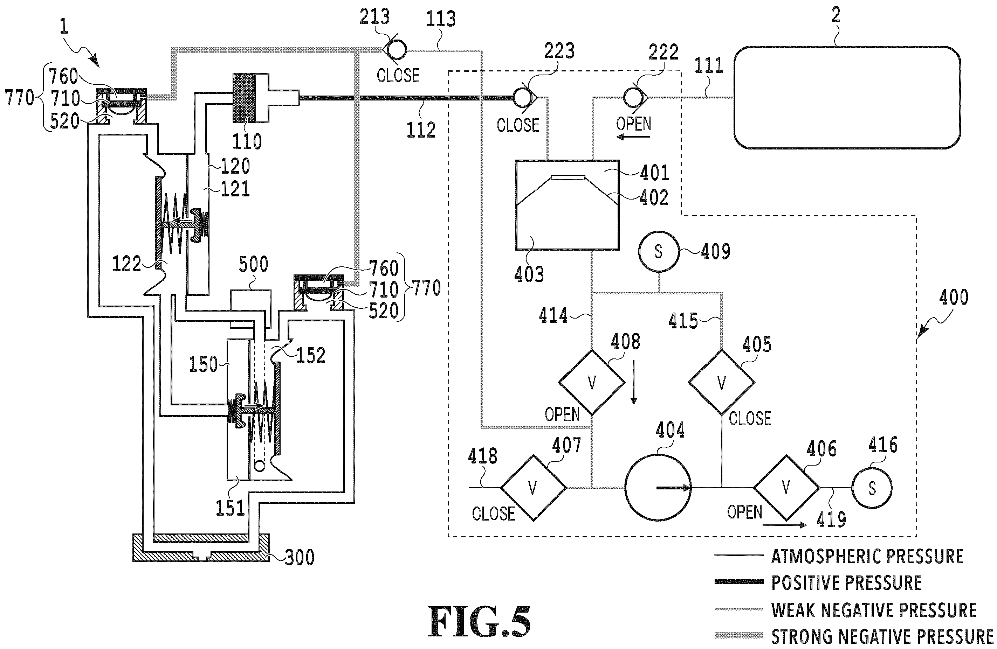

Next, the ink replenishing operation will be described using Fig. 5. Fig. 5 is a schematic diagram describing the ink replenishing operation. The ink replenishing operation is an operation of drawing the ink stored in the ink tank 2 into the intermediate tank 401 through the first supply path 111 in a case where the amount of the ink in the intermediate tank 401 has decreased to below an ink amount that is sufficient for performing printing. The ink supply unit 400 performs the ink replenishing operation in a case where the inner volume of the intermediate tank 401 detected by the inner volume sensor (not illustrated) indicates that the amount of the ink in the intermediate tank 401 is less than the predetermined ink amount that is sufficient for performing printing. In the ink replenishing operation, the ink supply unit 400 drives the unidirectional pump 404 with the first on-off valve 408 actuated to open, the second on-off valve 405 actuated to close, the third on-off valve 407 actuated to close, and the fourth on-off valve 406 actuated to open to thereby lower the pressure on the gas in the intermediate pressure chamber 403. As the pressure on the gas in the intermediate pressure chamber 403 drops, the pressure on the ink in the intermediate tank 401 becomes low through the flexible film 402. By bringing the pressure on the ink in the intermediate tank 401 to a low pressure (negative pressure), the ink stored in the ink tank 2 is drawn into the intermediate tank 401 through the first supply path 111. The ink supply unit 400 stops driving the unidirectional pump 404 in a case where the inner volume of the intermediate tank 401 detected by the inner volume sensor indicates that the amount of the ink in the intermediate tank 401 is the predetermined ink amount or more. Further, the ink supply unit 400 stops drawing the ink into the intermediate tank 401 by actuating the first on-off valve 408 and the third on-off valve 407 to open them to thereby open the intermediate pressure chamber 403 to the atmosphere. After opening the intermediate pressure chamber 403 to the atmosphere, the ink supply unit 400 performs the pressure chamber pressurizing operation described earlier in order to raise the pressure on the gas in the intermediate pressure chamber 403 from the atmospheric pressure. During the above, the depressurization chamber 760 is closed by the third check valve 213, so that the pressure in the depressurization chamber 760 is maintained at a low pressure (negative pressure).

<Bubble Discharge Depressurization Operation>

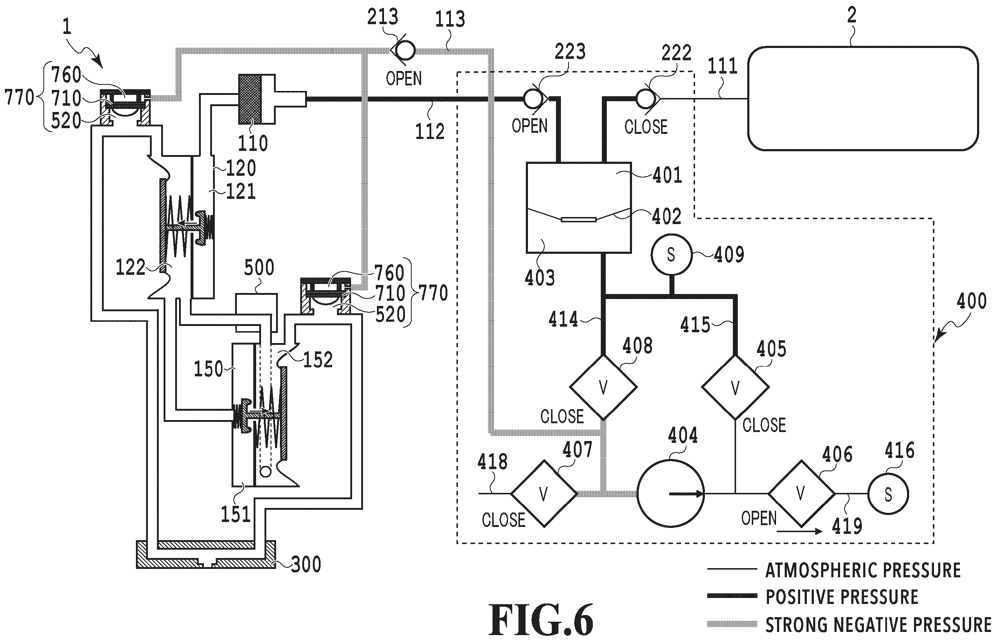

Next, the bubble discharge depressurization operation will be described using Fig. 6. Fig. 6 is a schematic diagram describing a bubble discharge depressurization operation. The bubble discharge depressurization operation is an operation of lowering the pressure in the depressurization chamber 760. The speed of movement of a gas from a bubble accumulation chamber 520 of each bubble discharge unit 770 to its depressurization chamber 760 through a gas permeable membrane 710 in the liquid ejection head 1 is proportional to the difference between the pressure in the bubble accumulation chamber 520 and the pressure in the depressurization chamber 760. For this reason, the pressure in the depressurization chamber 760 is desirably maintained at a low pressure. The third check valve 213 provided at an intermediate portion of the third air channel 113 prevents a gas from flowing into the depressurization chamber 760 from the third air channel 113. Nonetheless, the pressure in the depressurization chamber 760 gradually rises over time due to a gas flowing in from the bubble accumulation chamber 520 through the gas permeable membrane 710 and also a slight amount of a gas flowing in through a member forming the depressurization chamber 760. The bubble discharge depressurization operation, which lowers the pressure in the depressurization chamber 760, will be needed in a case where the pressure in the depressurization chamber 760 gradually rises over time as described above. The ink supply unit 400 performs the bubble discharge depressurization operation in a case where the pressure in the depressurization chamber 760 is estimated to exceed a predetermined pressure based on the time elapsed since the last bubble discharge depressurization operation or the like. **In** the bubble discharge depressurization operation, the ink supply unit 400 drives the unidirectional pump 404 with the first on-off valve 408 actuated to close, the second on-off valve 405 actuated to close, the third on-off valve 407 actuated to close, and the fourth on-off valve 406 actuated to open to thereby lower the pressure in the depressurization chamber 760. The ink supply unit 400 stops driving the unidirectional pump 404 in a case where a predetermined time has elapsed since the unidirectional pump 404 was driven and the pressure in the depressurization chamber 760 is estimated to have dropped to the predetermined pressure or less. During this period, the first on-off valve 408 and the second on-off valve 405 are closed, so that the pressure on the gas in the intermediate pressure chamber 403 is maintained at a positive pressure. Even in a case where the pressures in the intermediate pressure chamber 403 and the first to third air channels change after the bubble discharge depressurization operation due to the pressure chamber pressurizing operation, the pressurization maintaining operation, or the ink replenishing operation described earlier or the like, the pressure in the depressurization chamber 760 will be maintained at a low pressure (negative pressure) since the third check valve 213 is closed. The bubble discharge depressurization operation in the present embodiment is performed once per day. However, the frequency of the bubble discharge depressurization operation is not limited to this and may be increased, for example, after the delivery of the apparatus or after cleaning, during which bubbles are more likely to form. The frequency of the bubble discharge depressurization operation may be decreased with the elapse of time after the delivery of the apparatus or after cleaning. Also, the frequency of the bubble discharge depressurization operation may be varied based on temperature, use conditions, or the like.

<Liquid Ejection Head>

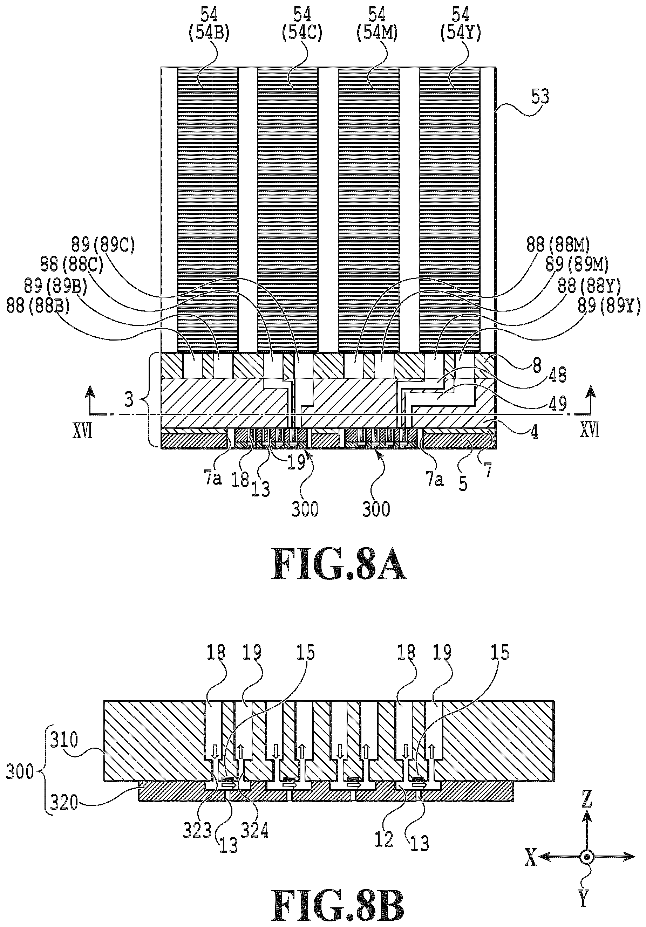

Fig. 7 is an exploded perspective view of the liquid ejection head 1 in the present embodiment. Figs. 8A and 8B are cross-sectional views of the liquid ejection head 1 and ejection modules 300. Fig. 8A is a cross-sectional view of the liquid ejection head 1 illustrated in Fig. 7 along the VIIIA-VIIIA line. Fig. 8B is an enlarged cross-sectional view of an ejection module 300 illustrated in Fig. 8A. A basic configuration of the liquid ejection head 1 in the present embodiment will be described below with reference mainly to Figs. 7 to 8B and to Fig. 1 as appropriate.

As illustrated in Fig. 7, the liquid ejection head 1 includes the circulation units 54 and the ejection unit 3 for ejecting the inks supplied from the circulation units 54 onto the print medium P. The liquid ejection head 1 in the present embodiment is fixed to and supported on the carriage 60 of the liquid ejection apparatus 50 by a positioning unit and electric contacts not illustrated which are provided to the carriage 60. The liquid ejection head 1 performs printing on the print medium P by ejecting the inks while moving along with the carriage 60 in the main scanning direction (X direction) illustrated in Fig. 1.

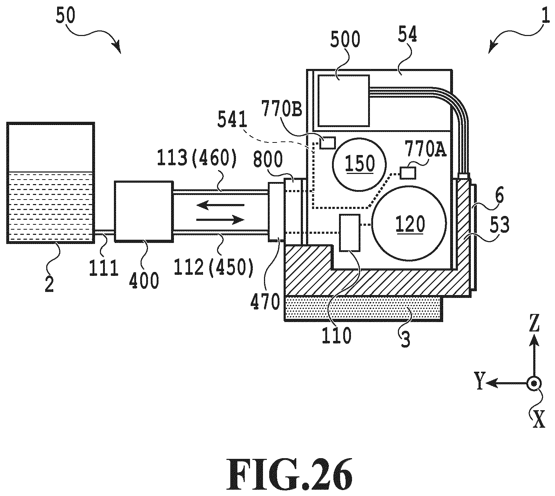

The ink supply unit 400 connected to the ink tanks 2 serving as ink supply sources is provided with the first supply paths 111 and the second supply paths 112. A main body-side connecting member 470 (see Fig. 26) is provided at tips of the second supply paths 112. In a case of mounting the liquid ejection head 1 to the liquid ejection apparatus 50, the main body-side connecting member 470 provided at the tips of the second supply paths 112 is detachably connected to a head-side connecting member 800 provided to a head housing 53 of the liquid ejection head 1. As a result, ink supply path extending from the ink tanks 2 to the liquid ejection head 1 through the ink supply unit 400 (the first supply paths 111 and the second supply paths 112) are formed. In the present embodiment, four types of inks are used. Hence, four sets of an ink tank 2, a first supply path 111, a second supply path 112, and a circulation unit 54 are provided for the respective inks, and four ink supply paths corresponding to the respective inks are formed independently of each other. Thus, the liquid ejection apparatus 50 in the present embodiment includes ink supply systems to which the inks are supplied from the ink tanks 2 provided outside the liquid ejection head 1.

As illustrated in Fig. 8A, a circulation unit 54B for the black ink, a circulation unit 54C for the cyan ink, a circulation unit 54M for the magenta ink, and a circulation unit 54Y for the yellow ink are provided as the circulation units 54. The circulation units have substantially the same configuration, and each circulation unit will be denoted as "circulation unit 54" in the present embodiment unless otherwise distinguished. Note that the liquid ejection head 1 illustrated in Fig. 8A represents an example where four circulation units 54 corresponding to the four types of inks are included in the liquid ejection head 1, but it suffices that circulation units 54 corresponding to the types of liquids to be ejected are included. Also, a plurality of circulation units 54 may be included for the same type of liquid. In sum, the liquid ejection head 1 can have a configuration including one or more circulation units. The liquid ejection head 1 may be configured not to circulate all of the four types of inks but only circulate at least one of the inks.

In Figs. 7 and 8A, the ejection unit 3 includes two ejection modules 300, a first support member 4, a second support member 7, an electric wiring member (electric wiring tape) 5, and an electric contact substrate 6. As illustrated in Fig. 8B, each ejection module 300 includes a silicon substrate 310 with a thickness of 0.5 mm to 1 mm and a plurality of ejection elements 15 provided in one surface of the silicon substrate 310. The ejection elements 15 in the present embodiment each include an electrothermal conversion element (heater) that generates thermal energy as ejection energy for ejecting the liquid. Each ejection element 15 is supplied with electric power through an electric wiring formed on the silicon substrate 310 by a film forming technique.

Also, an ejection port forming member 320 is formed on the front surface of the silicon substrate 310 (the lower surface in Fig. 8B). In the ejection port forming member 320, a plurality of pressure chambers 12 corresponding to the plurality of ejection elements 15 and a plurality of ejection ports 13 through which to eject the inks are formed by a photolithographic technique. Moreover, common supply channels 18 and common collection channels 19 are formed in the silicon substrate 310. Furthermore, in the silicon substrate 310, there are formed supply connection channels 323 through which the common supply channels 18 and the pressure chambers 12 communicate with one another, and collection connection channels 324 through which the common collection channels 19 and the pressure chambers 12 communicate with one another. In the present embodiment, one ejection module 300 is configured to eject two types of inks. Specifically, of the two ejection modules illustrated in Fig. 8A, the ejection module 300 located on the left side in Fig. 8A ejects the black and cyan inks, and the ejection module 300 located on the right side in Fig. 8A ejects the magenta and yellow inks. Note that this combination is a mere example, and any combination of inks may be employed. The configuration may be such that one ejection module ejects one type of ink or ejects three or more types of inks. The two ejection modules 300 do not have to eject the same number of types of inks. The configuration may be such that only one ejection module 300 is included, or three or more ejection modules 300 are included. Moreover, in the example illustrated in Figs. 8A and 8B, two ejection port arrays extending in the Y direction are formed for an ink of one color. Pressure chambers 12, a common supply channel 18, and a common collection channel 19 are formed for the plurality of ejection ports 13 forming each ejection port array.

Later-described ink supply ports and ink collection ports are formed on the back surface (the upper surface in Fig. 8B) side of the silicon substrate 310. Through the ink supply ports, the inks are supplied into the plurality of common supply channels 18 from ink supply channels 48. Through the ink collection ports, the inks are collected into ink collection channels 49 from the plurality of common collection channels 19.

Note that the ink supply ports and the ink collection ports here refer to openings for supplying and collecting the inks during later-described forward ink circulation. Specifically, during the forward ink circulation, the inks are supplied from the ink supply ports into the common supply channels 18, and the inks are collected from the common collection channels 19 into the ink collection ports. Note that ink circulation in which the inks are caused to flow in the opposite direction may also be performed. In this case, the inks are supplied from the above-described ink collection ports into the common collection channels 19, and the inks are collected from the common supply channels 18 into the ink supply ports.

As illustrated in Fig. 8A, the back surfaces (the upper surfaces in Fig. 8A) of the ejection modules 300 are adhesively fixed to one surface (the lower surface in Fig. 8A) of the first support member 4. In the first support member 4, the ink supply channels 48 and the ink collection channels 49 are formed, which penetrate therethrough from one surface to the opposite surface. The openings of the ink supply channels 48 on one side communicate with the above-mentioned ink supply ports in the silicon substrate 310. The openings of the ink collection channels 49 on the one side communicate with the above-mentioned ink collection ports in the silicon substrate 310. Note that the ink supply channels 48 and the ink collection channels 49 are provided independently for each type of ink.

Also, the second support member 7 having openings 7a (see Fig. 7) through which to insert the ejection modules 300 are adhesively fixed to one surface (the lower surface in Fig. 8A) of the first support member 4. The electric wiring member 5 to be electrically connected to the ejection modules 300 is held on the second support member 7. The electric wiring member 5 is a member for applying electric signals for ink ejection to the ejection modules 300. The electrically connecting parts of the ejection modules 300 and the electric wiring member 5 are sealed with a sealant (not illustrated) to be protected from corrosion by the inks and external impacts.

Also, the electric contact substrate 6 is joined to an end portion 5a of the electric wiring member 5 (see Fig. 7) by thermocompression bonding with an anisotropic conductive film not illustrated, and the electric wiring member 5 and the electric contact substrate 6 are electrically connected to each other. The electric contact substrate 6 has external signal input terminals (not illustrated) for receiving electric signals from the liquid ejection apparatus 50.

Moreover, a joint member 8 (Fig. 8A) is provided between the first support member 4 and the circulation units 54. In the joint member 8, a supply port 88 and a collection port 89 are formed for each type of ink. Through the supply ports 88 and the collection ports 89, the ink supply channels 48 and the ink collection channels 49 in the first support member 4 and channels formed in the circulation units 54 communicate with each other. Incidentally, in Fig. 8A, a supply port 88B and a collection port 89B are for the black ink, and a supply port 88C and a collection port 89C are for the cyan ink. Moreover, a supply port 88M and a collection port 89M are for the magenta ink, and a supply port 88Y and a collection port 89Y are for the yellow ink.

Note that the openings at the ends of the ink supply channels 48 and the ink collection channels 49 in the first support member 4 on one side have small opening areas matching the ink supply ports and the ink collection ports in the silicon substrate 310. On the other hand, the openings at the ends of the ink supply channels 48 and the ink collection channels 49 in the first support member 4 on the opposite side have shapes that are made larger to have the same opening areas as the areas of the large openings in the joint member 8 formed to match the channels in the circulation units 54. Employing such a configuration can suppress a rise in channel resistance on the ink collected from each collection channel. Note that the shapes of the openings at the ends of the ink supply channels 48 and the ink collection channels 49 on the one and opposite sides are not limited to the above example.

In the liquid ejection head 1 having the above configuration, the inks supplied to the circulation units 54 pass through the supply ports 88 in the joint member 8 and the ink supply channels 48 in the first support member 4 and flow into the common supply channels 18 from the ink supply ports in the ejection modules 300. Thereafter, from the common supply channels 18, the inks flow into the pressure chambers 12 through the supply connection channels 323. Part of the inks having flowed into the pressure chambers is ejected from the ejection ports 13 as the ejection elements 15 are driven. The remaining inks not ejected pass through the collection connection channels 324 and the common collection channels 19 from the pressure chambers 12, and flow into the ink collection channels 49 in the first support member 4 from the ink collection ports. Then, the inks having flowed into the ink collection channels 49 flow into the circulation units 54 through the collection ports 89 in the joint member 8 and are collected.

<Constituent Elements of Circulation Units>

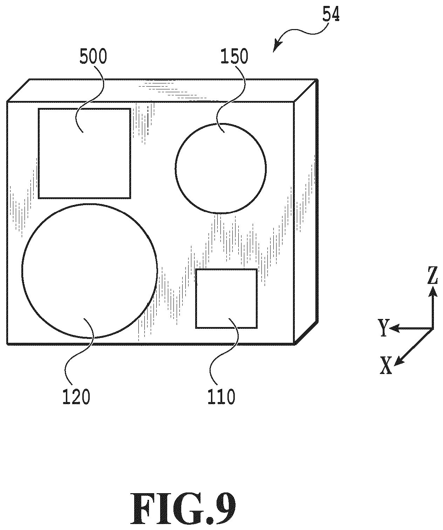

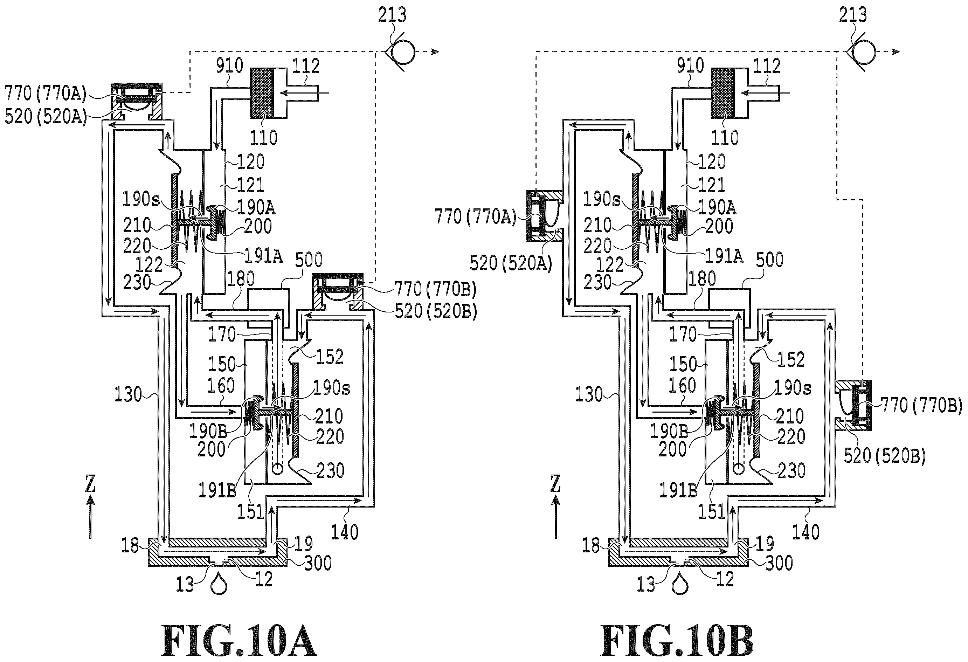

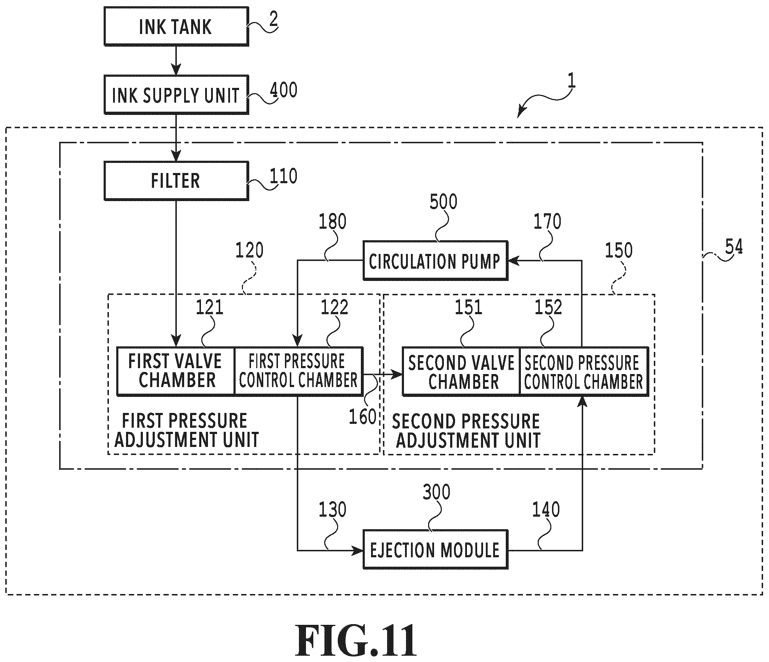

Fig. 9 is a schematic external view of one circulation unit 54 for one type of ink used in the liquid ejection apparatus 50 in the present embodiment. In the circulation unit 54, a filter 110, a first pressure adjustment unit 120, a second pressure adjustment unit 150, and a circulation pump 500 are disposed. These constituent elements are connected by channels as illustrated in Figs. 10A and 10B and Fig. 11 to thereby form a circulation path for supplying and collecting the ink to and from the ejection module 300 inside the liquid ejection head 1.

<Circulation Path inside Liquid Ejection Head>

Figs. 10A and 10B are vertical cross-sectional views schematically illustrating the circulation path for one type of ink (ink of one color) formed inside the liquid ejection head 1. The relative positions of the elements in Figs. 10A and 10B (such as the first pressure adjustment unit 120, the second pressure adjustment unit 150, and the circulation pump 500) are simplified for a clearer description of the circulation path. Thus, the relative positions of the elements are different from those of the elements in Fig. 9. Incidentally, Fig. 11 is a block diagram schematically illustrating the circulation path illustrated in Fig. 10. As illustrated in Figs. 10A and 10B and Fig. 11, the first pressure adjustment unit 120 includes a first valve chamber 121 and a first pressure control chamber 122. The second pressure adjustment unit 150 includes a second valve chamber 151 and a second pressure control chamber 152. The first pressure adjustment unit 120 is configured such that the controlled pressure therein is higher than that in the second pressure adjustment unit 150. In the present embodiment, these two pressure adjustment units 120 and 150 are used to implement circulation within a certain pressure range inside the circulation path. Also, the configuration is such that the ink flows through the pressure chambers 12 (ejection elements 15) at a flow rate corresponding to the pressure difference between the first pressure adjustment unit 120 and the second pressure adjustment unit 150. A circulation path in the liquid ejection head 1 and a flow of the ink in the circulation path will be described below with reference to Figs. 10A and 10B and Fig. 11. Note that the arrows in Figs. 10A and 10B and Fig. 11 indicate the flow direction of the ink.

Also, in the present embodiment, the bubble discharge units 770 are provided in the liquid ejection head 1 and configured to discharge bubbles formed in the liquid ejection head 1 to the outside of the liquid ejection head 1. While Figs.

10A and 10B illustrate configurations in which two bubble discharge units 770 are provided at different positions, there may be only one bubble discharge unit. Moreover, the arrangement of the bubble discharge units is not limited to these configurations as long as they can discharge bubbles to the outside of the liquid ejection head 1. A specific configuration of the bubble discharge units 770 will be described later.

Incidentally, in the examples illustrated in Figs. 10A and 10B, one of the two bubble discharge units 770 will be referred to as "first bubble discharge unit 770A," and the other of the two bubble discharge units 770 will be referred to as "second bubble discharge unit 770B." As mentioned above, the number of bubble discharge units 770 is not limited to two, and only one bubble discharge unit 770 may be provided in the liquid ejection head 1, or three or more bubble discharge units 770 may be provided in the liquid ejection head 1. Also, the first bubble discharge unit 770A and the second bubble discharge unit 770B are each provided with one bubble accumulation chamber 520, which will be described later. The bubble accumulation chamber 520 provided in the first bubble discharge unit 770A will be referred to as "first bubble accumulation chamber 520A," and the bubble accumulation chamber 520 provided in the second bubble discharge unit 770B will be referred to as "second bubble accumulation chamber 520B." In Fig. 11, illustration of the bubble discharge units 770 and the gas channels connected to the bubble discharge units 770 (e.g., the third air channel 113 and the like) is omitted.

First, how the constituent elements in the liquid ejection head 1 are connected will be described.

The ink supply unit 400, which supplies the inks stored in the ink tanks 2 on the outside of the liquid ejection head 1 to the liquid ejection head 1, is connected to each circulation unit 54 through the corresponding second supply path 112 (see Fig. 26). The ink channel located on an upstream side of the circulation unit 54 is provided with the filter 110. The ink supply path located downstream of the filter 110 (third supply path 910) is connected to the first valve chamber 121 of the first pressure adjustment unit 120. The first valve chamber 121 communicates with the first pressure control chamber 122 through a communication port 191A openable and closable by a valve 190A illustrated in Figs. 10A and 10B.

The first pressure control chamber 122 is connected to a supply channel 130, a bypass channel 160, and a pump outlet channel 180 of the circulation pump 500. The supply channel 130 is connected through the above-mentioned ink supply ports provided in the ejection module 300 to the common supply channels 18. Also, the bypass channel 160 is connected to the second valve chamber 151 provided in the second pressure adjustment unit 150. The second valve chamber 151 communicates with the second pressure control chamber 152 through a communication port 191B that is opened and closed by a valve 190B illustrated in Figs. 10A and 10B. Note that Figs. 10A and 10B and Fig. 11 illustrate an example where one end of the bypass channel 160 is connected to the first pressure control chamber 122 of the first pressure adjustment unit 120, and the other end of the bypass channel 160 is connected to the second valve chamber 151 of the second pressure adjustment unit 150. However, the one end of the bypass channel 160 may be connected to the supply channel 130, and the other end of the bypass channel may be connected to the second valve chamber 151.

The second pressure control chamber 152 is connected to a first collection channel 140. The first collection channel 140 is connected through the above-mentioned ink collection ports provided in the ejection module 300 to the common collection channels 19. Moreover, the second pressure control chamber 152 is connected to the circulation pump 500 through a pump inlet channel 170.

Next, the flow of an ink inside the liquid ejection head 1 having the above configuration will be described. As illustrated in Fig. 11, the ink stored in the ink tank 2 is pressurized by the unidirectional pump 404 (see Fig. 2) of the ink supply unit 400 provided in the liquid ejection apparatus 50 to thereby become an ink flow at a positive pressure and is supplied to the circulation unit 54 of the liquid ejection head 1.

The ink supplied to the circulation unit 54 passes through the filter 110, so that foreign substances such as dust and bubbles are removed. The ink then flows into the first valve chamber 121 provided in the first pressure adjustment unit 120. The pressure on the ink drops due to the pressure loss by the passage through the filter 110, but the pressure on the ink is still positive at this point. Thereafter, in a case where the valve 190A is open, the ink having flowed into the first valve chamber 121 passes through the communication port 191A and flows into the first pressure control chamber 122. Due to the pressure loss by the passage through the communication port 191A, the pressure on the ink having flowed into the first pressure control chamber 122 switches from the positive pressure to a negative pressure.

Next, the flow of the ink in the circulation path will be described. The circulation pump 500 operates so as to send the ink which the pump has sucked in from the pump inlet channel 170 located upstream of the pump to the pump outlet channel 180 located downstream of the pump. This pump inlet channel 170 is provided on a vertically lower side of the second pressure adjustment unit 150. In this way, the configuration is such that bubbles flowing into the second pressure adjustment unit 150 through the bypass channel 160 will float instead of joining the ink flow, and stagnate on the vertically upper side of the second pressure adjustment unit 150. Note that this pump inlet channel 170 does not necessarily need to be provided on the vertically lower side of the second pressure adjustment unit 150, and the configuration is not limited to this as long as bubbles flowing into the second pressure adjustment unit 150 will float and be trapped in the second bubble accumulation chamber 520B. As the pump is driven, the ink supplied to the first pressure control chamber 122 flows into the supply channel 130 and the bypass channel 160 along with the ink sent from the pump outlet channel 180. In the present embodiment, while details will be described later, a piezoelectric diaphragm pump using a piezoelectric element attached to a diaphragm as a driving source is used as a circulation pump capable of sending the liquid. The piezoelectric diaphragm pump is a pump that sends a liquid by inputting a driving voltage to a piezoelectric element to change the inner volume of a pump chamber and causing two check valves to alternatively move with the change in pressure.

The ink having flowed into the supply channel 130 flows into the pressure chambers 12 from the ink supply ports in the ejection module 300 through the common supply channels 18. Part of that ink is ejected from the ejection ports 13 as the ejection elements 15 are driven (generate heat). Also, the remaining ink not used in the ejection flows through the pressure chambers 12 and passes through the common collection channels 19. Thereafter, the ink flows into the first collection channel 140 connected to the ejection module 300. The ink having flowed into the first collection channel 140 flows into the second pressure control chamber 152 of the second pressure adjustment unit 150.

On the other hand, the ink having flowed into the bypass channel 160 from the first pressure control chamber 122 flows into the second valve chamber 151 and then passes through the communication port 191B to flow into the second pressure control chamber 152. The ink having flowed into the second pressure control chamber 152 through the bypass channel 160 and the ink collected from the first collection channel 140 are sucked into the circulation pump 500 through the pump inlet channel 170 as the circulation pump 500 is driven. Then, the inks sucked into the circulation pump 500 are sent to the pump outlet channel 180 and flow into the first pressure control chamber 122 again. Thereafter, the ink flowing into the second pressure control chamber 152 from the first pressure control chamber 122 through the supply channel 130 and the ejection module 300 and the ink flowing into the second pressure control chamber 152 through the bypass channel 160 will flow into the circulation pump 500. The inks are then sent from the circulation pump 500 to the first pressure control chamber 122. The ink circulation is performed within the circulation path in this manner.

Here, a channel through which the first pressure adjustment unit 120 and the pressure chambers 12 communicate with each other will be referred to as "first channel," and a channel through which the pressure chambers 12 and the circulation pump 500 communicate with each other will be referred to as "second channel." Specifically, the supply channel 130 will be referred to as "first channel," and the first collection channel 140, the second pressure adjustment unit 150, and the pump inlet channel 170 will be collectively referred to as "second channel." Note that the second channel does not have to include the second pressure adjustment unit 150 and the pump inlet channel 170. Also, the pump outlet channel 180 will be referred to as "third channel" as well. Thus, in the present embodiment, the ink flows through the circulation pump 500, the third channel, the first pressure adjustment unit 120, the first channel, the pressure chambers 12, the second channel, and the circulation pump 500 in this order as a circulation path.

As described above, in the present embodiment, the liquids (inks) can be circulated through the respective circulation paths formed in the liquid ejection head 1 with the respective circulation pumps 500. This makes it possible to suppress thickening of the inks and deposition of precipitating components of the inks of the color materials inside the ejection modules 300. Accordingly, the fluidity of the inks in the ejection modules 300 and ejection characteristics at the ejection ports can be maintained well.

Also, the circulation paths in the present embodiment are configured to complete within the liquid ejection head 1. Thus, the length of the circulation paths is significantly short as compared to a case where the inks are circulated between the ink tanks 2 provided outside the liquid ejection head 1 and the liquid ejection head. Accordingly, the inks can be circulated with small circulation pumps.

Moreover, the configuration is such that only channels for supplying the inks are included as the channels connecting the liquid ejection head 1 and the ink tanks 2. In other words, a configuration that does not require channels for collecting the inks from the liquid ejection head 1 into the ink tanks 2 is employed. Accordingly, only ink supply tubes need to be provided to connect the ink tanks 2 and the liquid ejection head 1, and no ink collection tube needs to be provided. The inside of the liquid ejection apparatus 50 therefore has a simpler configuration with less tubes. This can downsize the entire apparatus. Moreover, the reduction in the number of tubes reduces the fluctuations in ink pressure due to the swinging of the tubes caused by main scanning of the liquid ejection head 1. Also, the swinging of the tubes during main scanning of the liquid ejection head 1 imposes a driving load on the carriage motor driving the carriage 60. Hence, the reduction in the number of tubes reduces the driving load of the carriage motor, which makes it possible to simplify the main scanning mechanism including the carriage motor and the like. Furthermore, since the inks do not need to be collected into the ink tanks from the liquid ejection head, the unidirectional pumps 404 of the ink supply units 400 (see Fig. 2) can be downsized as well. As described above, according to the present embodiment, it is possible to downsize the liquid ejection apparatus 50 and reduce costs.

<Pressure Adjustment Units>

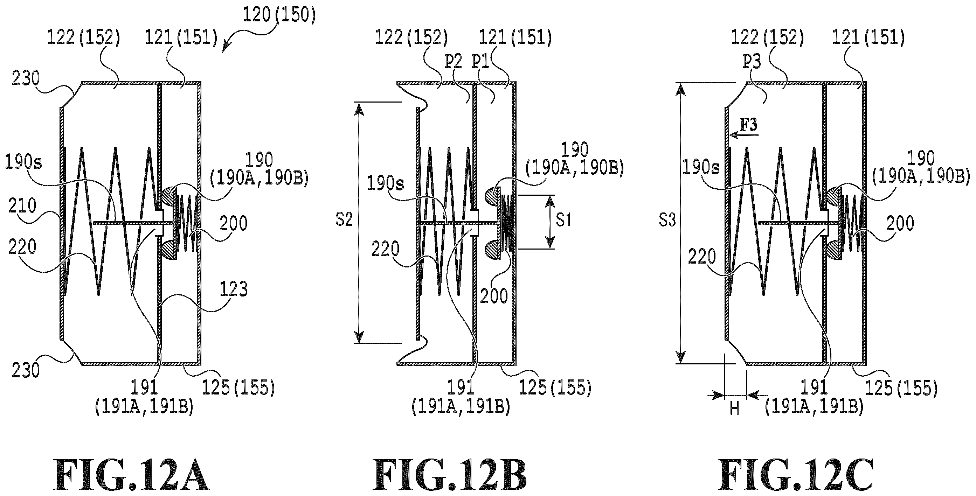

Figs. 12A to 12C are cross-sectional views illustrating an example of the pressure adjustment units. Configurations and operation of the pressure adjustment units incorporated in the above-described liquid ejection head 1 (first pressure adjustment unit 120 and second pressure adjustment unit 150) will be described in more detail with reference to Figs. 12A to 12C. Note that the first pressure adjustment unit 120 and the second pressure adjustment unit 150 have substantially the same configuration. Thus, the following description will be given by taking the first pressure adjustment unit 120 as an example. As for the second pressure adjustment unit 150, only the reference signs of its portions corresponding to those of the first pressure adjustment unit are presented in Figs. 12A to 12C. In a case of the second pressure adjustment unit 150, the first valve chamber 121 and the first pressure control chamber 122 described below should be read as the second valve chamber 151 and the second pressure control chamber 152, respectively.

The first pressure adjustment unit 120 has the first valve chamber 121 and the first pressure control chamber 122 formed in a cylindrical housing 125. The first valve chamber 121 and the first pressure control chamber 122 are separated by a partition 123 provided inside the cylindrical housing 125. However, the first valve chamber 121 communicates with the first pressure control chamber 122 through a communication port 191 formed in the partition 123. A valve 190, which switches between allowing communication between the first valve chamber 121 and the first pressure control chamber 122 through the communication port 191 and blocking the communication, is provided in the first valve chamber 121. The valve 190 is held by a valve spring 200 at a position opposite to the communication port 191, and is configured to capable of being in tight contact with the partition 123 by a biasing force from the valve spring 200. The valve 190 blocks the ink flow through the communication port 191 by being in tight contact with the partition 123. Note that the portion of the valve 190 to be in contact with the partition 123 is preferably formed of an elastic member in order to enhance the tightness of the contact with the partition 123. Also, a valve shaft 190s to be inserted through the communication port 191 is provided in a protruding manner on a center portion of the valve 190. By pressing this valve shaft 190s against the biasing force from the valve spring 200, the valve 190 gets separated from the partition 123, thereby allowing the ink to flow through the communication port 191. In the following, the state where the valve 190 blocks the ink flow through the communication port 191 will be referred to as "closed state," and the state where the ink can flow through the communication port 191 will be referred to as "open state."

The opening portion of the cylindrical housing 125 is closed by a flexible member 230 and a pressing plate 210. These flexible member 230 and pressing plate 210, the peripheral wall of the housing 125, and the partition 123 form the first pressure control chamber 122. The first pressure control chamber 122 is capable of changing its inner volume, and the pressing plate 210 is configured to be displaceable with displacement of the flexible member 230. While the materials of the pressing plate 210 and the flexible member 230 are not particularly limited, for example, the pressing plate 210 can be made from a molded resin component, and the flexible member 230 can be made from a resin film. In this case, the pressing plate 210 can be fixed to the flexible member 230 by thermal welding.

A pressure adjustment spring 220 (biasing member) is provided between the pressing plate 210 and the partition 123. As illustrated in Fig. 12A, the pressing plate 210 and the flexible member 230 are biased by a biasing force from the pressure adjustment spring 220 in a direction in which the inner volume of the first pressure control chamber 122 increases. Also, as the pressure in the first pressure control chamber 122 decreases, the pressing plate 210 and the flexible member 230 get displaced against the pressure from the pressure adjustment spring 220 in the direction in which the inner volume of the first pressure control chamber 122 decreases. Then, in a case where the inner volume of the first pressure control chamber 122 decreases to a certain volume, the pressing plate 210 abuts the valve shaft 190s of the valve 190. As the inner volume of the first pressure control chamber 122 then decreases further, the valve 190 moves with the valve shaft 190s against the biasing force from the valve spring 200, thereby being separated from the partition 123. As a result, the communication port 191 shifts to the open state (the state of Fig. 12B).

In the present embodiment, the connections in the circulation path are set such that the pressure in the first valve chamber 121 in a case where the communication port 191 shifts to the open state is higher than the pressure in the first pressure control chamber 122. In this way, in a case where the communication port 191 shifts to the open state, the ink flows from the first valve chamber 121 into the first pressure control chamber 122. The inflow of the ink displaces the flexible member 230 and the pressing plate 210 in the direction in which the inner volume of the first pressure control chamber 122 increases. As a result, the pressing plate 210 gets separated from the valve shaft 190s of the valve 190, and the valve 190 is brought into tight contact with the partition 123 by the biasing force from the valve spring 200 so that the communication port 191 shifts to the closed state (the state of Fig. 12C).

As described above, in the first pressure adjustment unit 120 in the present embodiment, in a case where the pressure in the first pressure control chamber 122 decreases to a certain pressure or less (e.g., in a case where the negative pressure becomes strong), the ink flows in from the first valve chamber 121 through the communication port 191. This configuration keeps the pressure in the first pressure control chamber 122 from decreasing any further. Accordingly, the pressure in the first pressure control chamber 122 is controlled to be maintained within a certain range.

Next, the pressure in the first pressure control chamber 122 will be described in more detail.

Consider a state where the flexible member 230 and the pressing plate 210 are displaced according to the pressure in the first pressure control chamber 122 as described above so that the pressing plate 210 abuts the valve shaft 190s and brings the communication port 191 into the open state (the state of Fig. 12B). The relation between the forces acting on the pressing plate 210 at this time is represented by Equation (1) below.

$$P2 \times S2 + F2 + (P1 - P2) \times S1 + F1 = 0 \ldots (1)$$

P1: Pressure (gauge pressure) in the first valve chamber 121
P2: Pressure (gauge pressure) in the first pressure control chamber 122
F1: Spring force of the valve spring 200
F2: Spring force of the pressure adjustment spring 220
S1: Pressure reception area of the valve 190
S2: Pressure reception area of the pressing plate 210

Moreover, by summarizing Equation (1) for P2, Equation (2) below is obtained.

$$P2 = -(F1 + F2 + P1 \times S1) / (S2 - S1) \ \dots \ (2)$$

Here, as for the spring force F1 of the valve spring 200 and the spring force F2 of the pressure adjustment spring 220, the direction in which they push the valve 190 and the pressing plate 210 is defined as the forward direction (the leftward direction in Figs. 12A to 12C). Also, the configuration is such that the pressure P1 in the first valve chamber 121 and the pressure P2 in the first pressure control chamber 122 satisfy a relation of P1 $\geq$ P2.

The pressure P2 in the first pressure control chamber 122 when the communication port 191 shifts to the open state is determined by Equation (2). Since the configuration is such that the pressure P1 in the first valve chamber 121 and the pressure P2 in the first pressure control chamber 122 satisfy the relation of P1 $\geq$ P2, the ink flows from the first valve chamber 121 into the first pressure control chamber 122 in a case where the communication port 191 shifts to the open state. As a result, the pressure P2 in the first pressure control chamber 122 does not decrease any further, and is kept at a pressure within a certain range.

As illustrated in Fig. 12C, the relation between the forces acting on the pressing plate 210 in a case where the pressing plate 210 comes out of abutment with the valve shaft 190s and the communication port 191 shifts to the closed state is represented by Equation (3) below.

$$P3 \times S3 + F3 = 0 \ \dots \ (3)$$

F3: Spring force of the pressure adjustment spring 220 in a state where the pressing plate 210 and the valve shaft 190s are out of abutment with each other
P3: Pressure (gauge pressure) in the first pressure control chamber 122 in the state where the pressing plate 210 and the valve shaft 190s are out of abutment with each other
S3: Pressure reception area of the pressing plate 210 in the state where the pressing plate 210 and the valve shaft 190s are out of abutment with each other

Here, by summarizing Equation (3) for P3, Equation (4) below is obtained.

$$P3 = -F3/S3 \ \dots \ (4)$$

Incidentally, Fig. 12C illustrates a state where the pressing plate 210 and the flexible member 230 are displaced in the leftward direction in Fig. 12C to the limit to which they can be displaced. The pressure P3 in the first pressure control chamber 122, the spring force F3 of the pressure adjustment spring 220, and the pressure reception area S3 of the pressing plate 210 change depending on the amount of displacement of the pressing plate 210 and the flexible member 230 in displacement to the state of Fig. 12C. Specifically, in a case where the pressing plate 210 and the flexible member 230 are situated on the right side in Fig. 12C relative to themselves in Fig. 12C, the pressure reception area S3 of the pressing plate 210 is smaller and the spring force F3 of the pressure adjustment spring 220 is larger. Accordingly, the pressure P3 in the first pressure control chamber 122 is smaller in accordance with the relation in Equation (4). Thus, with Equations (2) and (4), the pressure in the first pressure control chamber 122 gradually increases (that is, the negative pressure weakens toward a value close to the positive pressure side) in shifting from the state of Fig. 12B to the state of Fig. 12C. Specifically, the pressure in the first pressure control chamber 122 gradually increases while the pressing plate 210 and the flexible member 230 are gradually displaced in the leftward direction from the state where the communication port 191 is in the open state until the inner volume of the first pressure control chamber reaches the limit to which the pressing plate 210 and the flexible member 230 can be displaced. In other words, the negative pressure weakens. In the present embodiment, the first pressure adjustment unit 120 adjusts the pressure on the liquid in the first channel, and the second pressure adjustment unit 150 adjusts the pressure on the liquid in the pump inlet channel 170 (inlet channel).

EP 4 624 170 A1

<Circulation Pumps>

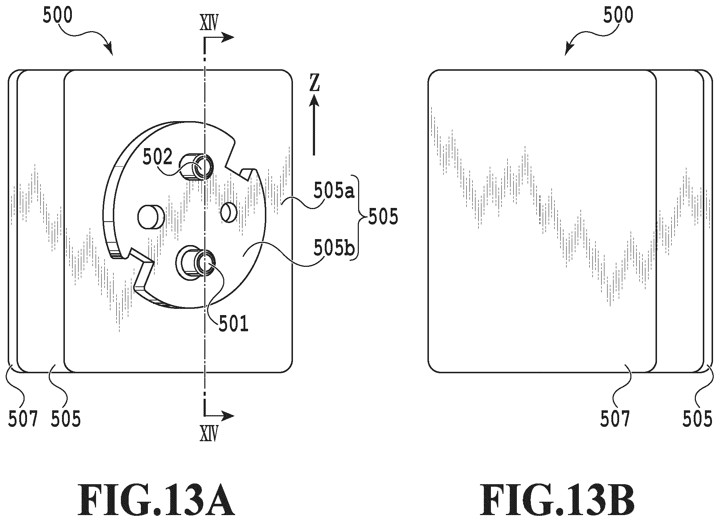

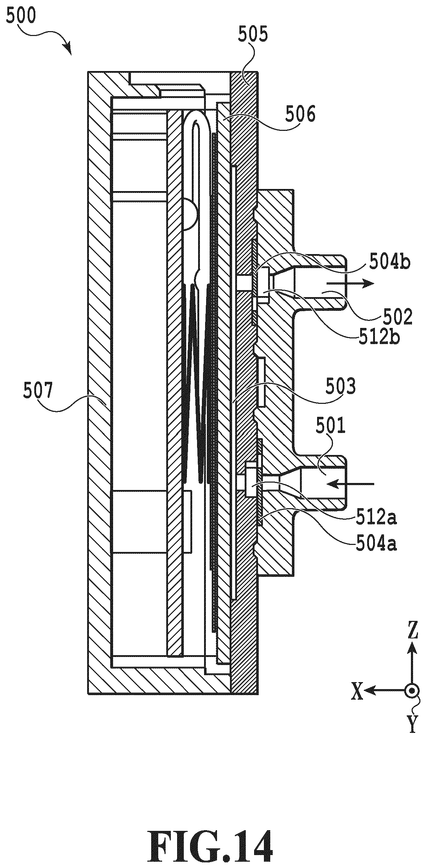

Next, a configuration and operation of each circulation pump 500 incorporated in the above liquid ejection head 1 will be described in detail with reference to Figs. 13A and 13B and Fig. 14.

Figs. 13A and 13B are external perspective views of the circulation pump 500. Fig. 13A is an external perspective view illustrating the front side of the circulation pump 500, and Fig. 13B is an external perspective view illustrating the back side of the circulation pump 500. An outer shell of the circulation pump 500 includes a pump housing 505 and a cover 507 fixed to the pump housing 505. The pump housing 505 includes a housing-part main body 505a and a channel connecting member 505b adhesively fixed to the outer surface of the housing-part main body 505a. In each of the housing-part main body 505a and the channel connecting member 505b, a pair of through-holes communicating with each other are formed at two different positions. One of the pair of through-holes provided at one position forms a pump supply hole 501. The other of the pair of through-holes provided at the other position forms a pump discharge hole 502. The pump supply hole 501 is connected to the pump inlet channel 170 connected to the second pressure control chamber 152. The pump discharge hole 502 is connected to the pump outlet channel 180 connected to the first pressure control chamber 122. The ink supplied from the pump supply hole 501 passes through a later-described pump chamber 503 (see Fig. 14) and is discharged from the pump discharge hole 502.

Fig. 14 is a cross-sectional view of the circulation pump 500 illustrated in Fig. 13A along the XIV-XIV line. A diaphragm 506 is joined to the inner surface of the pump housing 505, and the pump chamber 503 is formed between this diaphragm 506 and a recess formed in the inner surface of the pump housing 505. The pump chamber 503 communicates with the pump supply hole 501 and the pump discharge hole 502, which are formed in the pump housing 505. Also, a check valve 504a is provided at an intermediate portion of the pump supply hole 501. A check valve 504b is provided at an intermediate portion of the pump discharge hole 502. That is, the circulation pump 500 includes check valves in channels through which the second channel and the third channel communicate with each other. Specifically, the check valve 504a is disposed such that a part thereof is movable in the leftward direction in Fig. 14 within a space 512a formed at an intermediate portion of the pump supply hole 501. The check valve 504b is disposed such that a part thereof is movable in the rightward direction in Fig. 14 within a space 512b formed at an intermediate portion of the pump discharge hole 502.

As the diaphragm 506 is displaced so as to increase the inner volume of the pump chamber 503, the pump chamber 503 is depressurized. In response to this displacement, the check valve 504a is separated from the opening of the pump supply hole 501 in the space 512a (that is, moves in the leftward direction in Fig. 14). By being separated from the opening of the pump supply hole 501 in the space 512a, the check valve 504a shifts to an open state in which the ink is allowed to flow through the pump supply hole 501. Also, as the diaphragm 506 is displaced so as to reduce the inner volume of the pump chamber 503, the pump chamber 503 is pressurized. In response to this displacement, the check valve 504a comes into tight contact with the wall around the opening of the pump supply hole 501. The check valve 504a is thus in a closed state in which the check valve 504a blocks the ink flow through the pump supply hole 501.

The check valve 504b, on the other hand, comes into tight contact with the wall around an opening in the pump housing 505 as the pump chamber 503 is depressurized, thereby shifting to a closed state in which the check valve 504b blocks the ink flow through the pump discharge hole 502. Also, as the pump chamber 503 is pressurized, the check valve 504b is separated from the opening in the pump housing 505 and moves toward the space 512b (that is, moves in the rightward direction in Fig. 14), thereby allowing the ink to flow through the pump discharge hole 502.

Note that the material of each of the check valves 504a and 504b only needs to be one that is deformable according to the pressure in the pump chamber 503. For example, the material of each of the check valves 504a and 504b can made from an elastic material such as ethylene propylene diene monomer (EPDM) or an elastomer, or a film or thin plate of polypropylene or the like. However, the material is not limited to these.

As described above, the pump chamber 503 is formed by joining the pump housing 505 and the diaphragm 506. Thus, the pressure in the pump chamber 503 changes as the diaphragm 506 is deformed. For example, in a case where the diaphragm 506 is displaced toward the pump housing 505 (displaced toward the right side in Fig. 14), thereby reducing the inner volume of the pump chamber 503, the pressure in the pump chamber 503 increases. As a result, the check valve 504b disposed so as to face the pump discharge hole 502 shifts to the open state so that the ink in the pump chamber 503 is discharged. At this time, the check valve 504a disposed so as to face the pump supply hole 501 is in tight contact with the wall around the pump supply hole 501, thereby suppressing backflow of the ink from the pump chamber 503 into the pump supply hole 501.

Conversely, in a case where the diaphragm 506 is displaced in the direction in which the pump chamber 503 widens, the pressure in the pump chamber 503 decreases. As a result, the check valve 504a disposed so as to face the pump supply hole 501 shifts to the open state so that the ink is supplied into the pump chamber 503. At this time, the check valve 504b disposed in the pump discharge hole 502 comes into tight contact with the wall around an opening formed in the pump housing 505 to close this opening. This suppresses backflow of the ink from the pump discharge hole 502 into the pump chamber 503.

As described above, in the circulation pump 500, the ink is sucked and discharged as the diaphragm 506 is

14

deformed and thereby changes the pressure in the pump chamber 503. At this time, in a case where bubbles have entered the pump chamber 503, the displacement of the diaphragm 506 changes the pressure in the pump chamber 503 to a lesser extent due to the expansion or shrinkage of the bubbles. Accordingly, the amount of the liquid to be sent decreases. To address this, the pump chamber 503 is disposed in parallel with gravity so that the bubbles having entered the pump chamber 503 can easily gather in an upper portion of the pump chamber 503. In addition, the pump discharge hole 502 is disposed higher than the center of the pump chamber 503. This improves the ease of discharge of bubbles in the pump and thus stabilizes the flow rate.

<Flow of Ink inside Liquid Ejection Head>

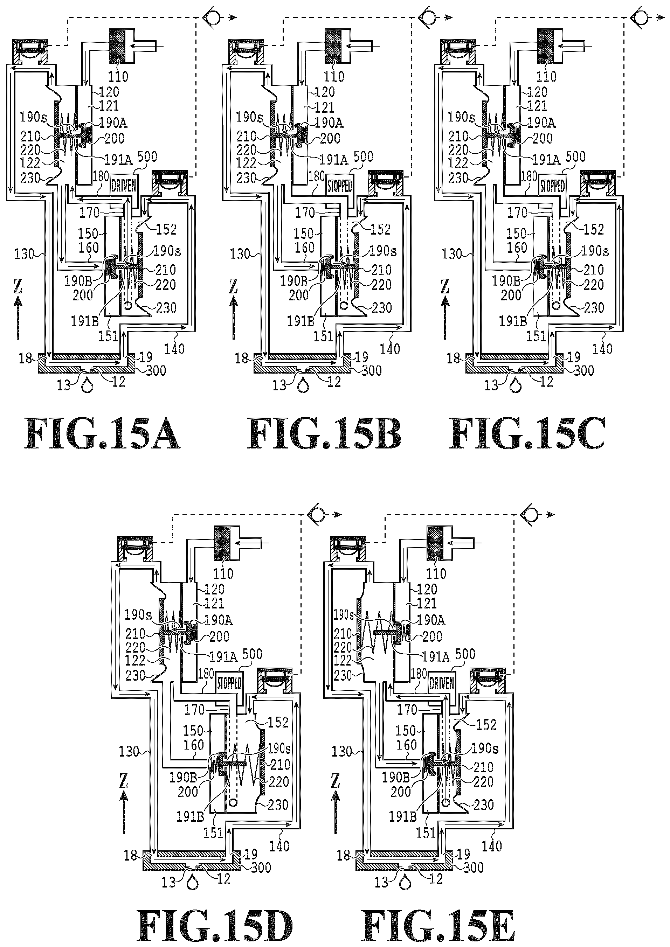

Figs. 15A to 15E are views describing a flow of an ink inside the liquid ejection head. The circulation of the ink performed inside the liquid ejection head 1 will be described with reference to Figs. 15A to 15E. The relative positions of the elements in Figs. 15A to 15E (such as the first pressure adjustment unit 120, the second pressure adjustment unit 150, and the circulation pump 500) are simplified for a clearer description of the ink circulation path. Thus, the relative positions of the elements are different from those of the elements in Fig. 9. Fig. 15A schematically illustrates the flow of the ink in a case of performing a print operation of performing printing by ejecting the ink from the ejection ports 13. Note that the arrows in Fig. 15A indicate the flow of the ink. In the present embodiment, to perform a print operation, both the ink supply unit 400 and the circulation pump 500 start being driven. Incidentally, the ink supply unit 400 and the circulation pump 500 may be driven in advance regardless of whether a print operation is to be performed or not. The ink supply unit 400 and the circulation pump 500 do not have to be driven in conjunction with each other, and may be driven independently of each other.

During the print operation, the circulation pump 500 is in an ON state (driven state), so that the ink flowing out of the first pressure control chamber 122 flows into the supply channel 130 and the bypass channel 160. The ink having flowed into the supply channel 130 passes through the ejection module 300 and then flows into the first collection channel 140. Thereafter, the ink is supplied into the second pressure control chamber 152.

On the other hand, the ink having flowed into the bypass channel 160 from the first pressure control chamber 122 flows into the second pressure control chamber 152 through the second valve chamber 151. The ink having flowed into the second pressure control chamber 152 passes through the pump inlet channel 170, the circulation pump 500, and the pump outlet channel 180 and then flows into the first pressure control chamber 122 again. At this time, based on the relation in Equation (2) mentioned earlier, the controlled pressure in the first valve chamber 121 is set higher than the controlled pressure in the first pressure control chamber 122. Thus, the ink in the first pressure control chamber 122 does not flow into the first valve chamber 121 but is supplied to the ejection module 300 again through the supply channel 130. The ink having flowed into the ejection module 300 flows into the first pressure control chamber 122 again through the first collection channel 140, the second pressure control chamber 152, the pump inlet channel 170, the circulation pump 500, and the pump outlet channel 180. Ink circulation that completes within the liquid ejection head 1 is performed as described above.

In the above ink circulation, the differential pressure between the controlled pressure in the first pressure control chamber 122 and the controlled pressure in the second pressure control chamber 152 determines the amount of circulation (flow rate) of the ink within the ejection module 300. Moreover, this differential pressure is set to obtain an amount of circulation that can suppress thickening of the ink near the ejection ports in the ejection module 300. Incidentally, the amount of the ink consumed by the printing is supplied from the ink tank 2 to the first pressure control chamber 122 through the filter 110 and the first valve chamber 121. How the consumed ink is supplied will now be described in detail. The ink in the circulation path decreases by the amount of the ink consumed by the printing. Accordingly, the pressure in the first pressure control chamber 122 drops, which in turn decreases the ink in the first pressure control chamber. As the ink in the first pressure control chamber 122 decreases, the inner volume of the first pressure control chamber 122 decreases accordingly. As this inner volume of the first pressure control chamber 122 decreases, the communication port 191A shifts to the open state, so that the ink is supplied from the first valve chamber 121 to the first pressure control chamber 122. This supplied ink experiences a pressure loss as it passes through the communication port 191A from the first valve chamber 121. As the ink flows into the first pressure control chamber 122, the positive pressure on the ink switches to a negative pressure. As the ink flows into the first pressure control chamber 122 from the first valve chamber 121, the pressure in the first pressure control chamber rises and the inner volume of the first pressure control chamber increases. As a result, the communication port 191A shifts to the closed state. As described above, the communication port 191A repetitively switches between the open state and the closed state according to the ink consumption. Incidentally, the communication port 191A is kept in the closed state in a case where the ink is not consumed.

Fig. 15B schematically illustrates the flow of the ink immediately after the print operation is finished and the circulation pump 500 shifts to an OFF state (stop state). At the point when the print operation is finished and the circulation pump 500 shifts to the OFF state, the pressure in the first pressure control chamber 122 and the pressure in the second pressure control chamber 152 are both the controlled pressures used in the print operation. For this reason, the ink moves as illustrated in Fig. 15B according to the differential pressure between the pressure in the first pressure control chamber 122 and the pressure in the second pressure control chamber 152. Specifically, the ink flow from the first pressure control chamber 122 to the ejection module 300 through the supply channel 130 and then to the second pressure control chamber 152 through the first collection channel 140 continues to be generated. Moreover, the ink flow from the first pressure control chamber 122 to the second pressure control chamber 152 through the bypass channel 160 and the second valve chamber 151 continues to be generated.

The amount of the ink moved from the first pressure control chamber 122 to the second pressure control chamber 152 by these ink flows is supplied from the ink tank 2 to the first pressure control chamber 122 through the filter 110 and the first valve chamber 121. Accordingly, the inner volume of the first pressure control chamber 122 is maintained constant. According to the relation in Equation (2) mentioned earlier, the spring force F1 of the valve spring 200, the spring force F2 of the pressure adjustment spring 220, the pressure reception area S1 of the valve 190, and the pressure reception area S2 of the pressing plate 210 are maintained constant in the case where the inner volume of the first pressure control chamber 122 is constant. Thus, the pressure in the first pressure control chamber 122 is determined according to how the pressure (gauge pressure) P1 in the first valve chamber 121 changes. In this way, in a case where the pressure P1 in the first valve chamber 121 does not change, the pressure P2 in the first pressure control chamber 122 is maintained at the same pressure as the controlled pressure in the print operation.

On the other hand, the pressure in the second pressure control chamber 152 changes with time according to the change in inner volume by the inflow of the ink from the first pressure control chamber 122. Specifically, the pressure in the second pressure control chamber 152 changes according to Equation (2) until the communication port 191 shifts from the state of Fig. 15B to the closed state to thereby allow no communication between the second valve chamber 151 and the second pressure control chamber 152 as illustrated in Fig. 15C. Thereafter, the pressing plate 210 and the valve shaft 190s come out of contact with each other, so that the communication port 191 shifts to the closed state. Then, as illustrated in Fig. 15D, the ink flows into the second pressure control chamber 152 from the first collection channel 140. This inflow of the ink displaces the pressing plate 210 and the flexible member 230. The pressure in the second pressure control chamber 152 changes according to Equation (4), specifically, the pressure rises until the inner volume of the second pressure control chamber 152 reaches the maximum.

Note that, once the state of Fig. 15C is reached, there is no more ink flow from the first pressure control chamber 122 into the second pressure control chamber 152 through the bypass channel 160 and the second valve chamber 151. Thus, the only flow generated is the ink in the first pressure control chamber 122 that is supplied to the ejection module 300 through the supply channel 130 and then flows into the second pressure control chamber 152 through the first collection channel 140. As mentioned earlier, the ink moves from the first pressure control chamber 122 to the second pressure control chamber 152 according to the differential pressure between the pressure in the first pressure control chamber 122 and the pressure in the second pressure control chamber 152. Thus, in a case where the pressure in the second pressure control chamber 152 becomes equal to the pressure in the first pressure control chamber 122, the ink stops moving.

Also, in the state where the pressure in the second pressure control chamber 152 is equal to the pressure in the first pressure control chamber 122, the second pressure control chamber 152 expands to the state illustrated in Fig. 15D. In a case where the second pressure control chamber 152 expands as illustrated in Fig. 15D, a reservoir portion capable of holding the ink is formed in the second pressure control chamber 152. Note that the transition to the state of Fig. 15D after stopping the circulation pump 500 takes about 1 to 2 minutes, although the time may vary depending on the shapes and sizes of the channels and properties of the ink. As the circulation pump 500 is driven in the state where the ink is held in the reservoir portion as illustrated in Fig. 15D, the ink in the reservoir portion is supplied to the first pressure control chamber 122 by the circulation pump 500. Accordingly, as illustrated in Fig. 15E, the amount of the ink in the first pressure control chamber 122 increases so that the flexible member 230 and the pressing plate 210 are displaced in the expanding direction. Then, as the circulation pump 500 continues to be driven, the state inside the circulation path changes to the state illustrated in Fig. 15A.

Note that, in the above description, Fig. 15A has been described as an example of the ink circulation during a print operation. However, the ink may be circulated without a print operation, as mentioned earlier. Even in this case, the ink flows as illustrated in Figs. 15A to 15E in response to the driving and stopping of the circulation pump 500.

Also, as described above, in the present embodiment, an example in which the communication port 191B in the second pressure adjustment unit 150 shifts to the open state in a case where the ink is circulated by driving the circulation pump 500, and shifts to the closed state in a case where the ink circulation stops, has been used. The controlled pressure may be set such that the communication port 191B in the second pressure adjustment unit 150 is in the closed state even in a case where the ink is circulated by driving the circulation pump 500. This will be specifically described below along with the function of the bypass channel 160.

The bypass channel 160 connecting the first pressure adjustment unit 120 and the second pressure adjustment unit 150 is provided in order that, in a case where the negative pressure generated inside the circulation path becomes stronger than a preset value, for example, the ejection module 300 can avoid the effect of it. The bypass channel 160 is also provided in order to supply the ink to the pressure chambers 12 from both the supply channel 130 and the first collection channel 140.

First, a description will be given of an example of avoiding the effect of the negative pressure becoming stronger than the preset value on the ejection module 300 by providing the bypass channel 160. For example, a change in environmental temperature sometimes changes a property (e.g., viscosity) of the ink. As the viscosity of the ink changes, the pressure loss within the circulation path changes as well. For example, as the viscosity of the ink drops, the amount of pressure loss within the circulation path decreases. As a result, the flow rate of the circulation pump 500 driven at a constant driving amount increases, and the flow rate through the ejection module 300 increases. Here, the ejection module 300 is kept at a constant temperature by a temperature adjustment mechanism not illustrated. Hence, the viscosity of the ink inside the ejection module 300 is maintained constant even if the environmental temperature changes. The viscosity of the ink inside the ejection module 300 remains unchanged whereas the flow rate of the ink flowing through the ejection module 300 increases, and therefore the negative pressure in the ejection module 300 becomes accordingly stronger due to channel resistance. If the negative pressure in the ejection module 300 becomes stronger than the preset value as described above, there is a possibility that the menisci in the ejection ports 13 may break and the ambient air may be taken into the circulation path, which may lead to a failure to perform normal ejection. Also, even if the menisci do not break, there is still a possibility that the negative pressure in the pressure chambers 12 may become stronger than a predetermined level and affect the ejection.

For these reasons, in the present embodiment, the bypass channel 160 is formed in the circulation path. By providing the bypass channel 160, the ink flows through the bypass channel 160 in the case where the negative pressure is stronger than the preset value. Thus, the pressure in the ejection module 300 is kept constant. Thus, for example, the controlled pressure may be set such that the communication port 191B in the second pressure adjustment unit 150 is maintained in the closed state even in the case where the circulation pump 500 is driven. Moreover, the controlled pressure in the second pressure adjustment unit 150 may be set such that the communication port 191B in the second pressure adjustment unit 150 shifts to the open state in the case where the negative pressure becomes stronger than the preset value. In other words, the communication port 191B may be in the closed state in the case where the circulation pump 500 is driven as long as the menisci do not collapse or a predetermined negative pressure is maintained even if the flow rate of the pump changes due to the change in viscosity caused by an environmental change or the like.

Next, a description will be given of an example where the bypass channel 160 is provided in order to supply the ink to the pressure chambers 12 from both the supply channel 130 and the first collection channel 140. The pressure in the circulation path may fluctuate due to the ejection operations of the ejection elements 15. This is because the ejection operations generate a force that draws the ink into the pressure chambers.

In the following, a description will be given of the fact that the ink to be supplied to the pressure chambers 12 is supplied from both the supply channel 130 side and the first collection channel 140 side in a case of continuing high-duty printing. While the definition of "duty" may vary depending on various conditions, in the following, a state where a 1200 dpi grid cell is printed by ejecting a single 4 pl ink droplet will be considered 100%. High-duty printing is, for example, printing performed at a duty of 100%.

In the case of continuing high-duty printing, the amount of the ink flowing into the second pressure control chamber 152 from the pressure chambers 12 through the first collection channel 140 decreases. On the other hand, the circulation pump 500 causes the ink to flow out in a constant amount. This breaks the balance between the inflow into and the outflow from the second pressure control chamber 152. Consequently, the ink inside the second pressure control chamber 152 decreases and the negative pressure in the second pressure control chamber 152 becomes stronger, so that the second pressure control chamber 152 shrinks. As the negative pressure in the second pressure control chamber 152 becomes stronger, the amount of inflow of the ink into the second pressure control chamber 152 through the bypass channel 160 increases, and the second pressure control chamber 152 becomes stable in the state where the outflow and the inflow are balanced. Thus, in the end, the negative pressure in the second pressure control chamber 152 becomes stronger according to the duty. Also, as mentioned above, with the configuration in which the communication port 191B is in the closed state in the case where the circulation pump 500 is driven, the communication port 191B shifts to the open state depending on the duty, so that the ink flows into the second pressure control chamber 152 from the bypass channel 160.

Moreover, as high-duty printing is continued further, the amount of inflow into the second pressure control chamber 152 from the pressure chambers 12 through the first collection channel 140 decreases and conversely the amount of inflow into the second pressure control chamber 152 from the communication port 191B through the bypass channel 160 increases. As this state progresses further, the amount of the ink flowing into the second pressure control chamber 152 from the pressure chambers 12 through the first collection channel 140 reaches zero, so that the ink flowing in from the communication port 191B is the entire ink flowing out into the circulation pump 500. As this state progresses further, this time, the ink backs up into the pressure chambers 12 from the second pressure control chamber 152 through the first collection channel 140. In this state, the ink flowing out of the second pressure control chamber 152 into the circulation pump 500 and the ink flowing out of the second pressure control chamber 152 into the pressure chambers 12 will flow into the second pressure control chamber 152 from the communication port 191B through the bypass channel 160. In this case, the ink from the supply channel 130 and the ink from the first collection channel 140 are filled into the pressure chambers 12 and ejected therefrom.

Note that this ink backflow that occurs in a case where the printing duty is high is a phenomenon that occurs due to the installation of the bypass channel 160. Also, as described above, an example has been described in which the communication port 191B in the second pressure adjustment unit shifts to the open state for the backflow of the ink. However, the backflow of the ink may also occur in the state where the communication port 191B in the second pressure adjustment unit is in the open state. Moreover, in a configuration without the second pressure adjustment unit, the above backflow of the ink can also occur by installing the bypass channel 160. Incidentally, it suffices that the bypass channel 160 allow at least one of the first channel or the first pressure adjustment unit 120 and the second channel to communicate with each other without the pressure chambers 12 therebetween.

<Configuration of Ejection Unit>

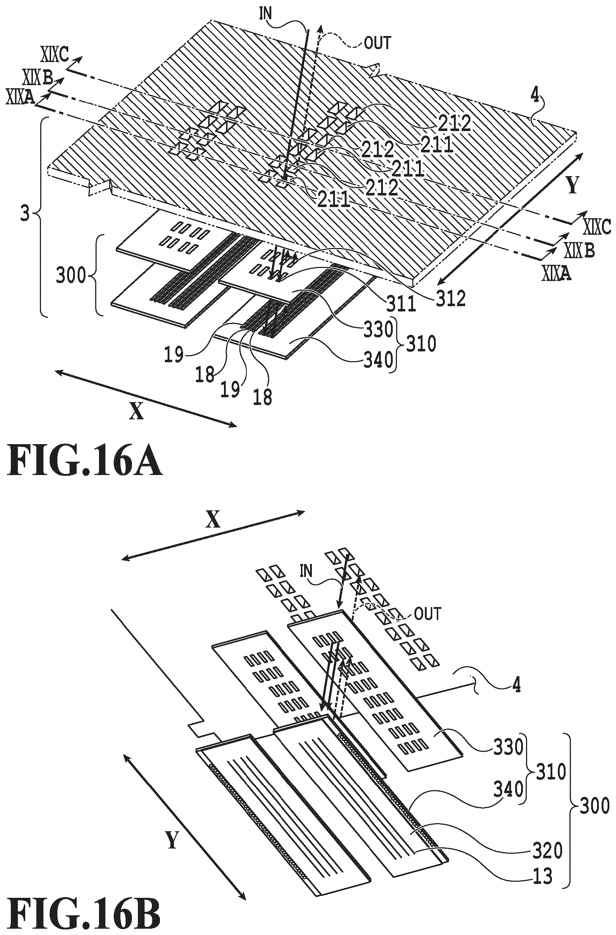

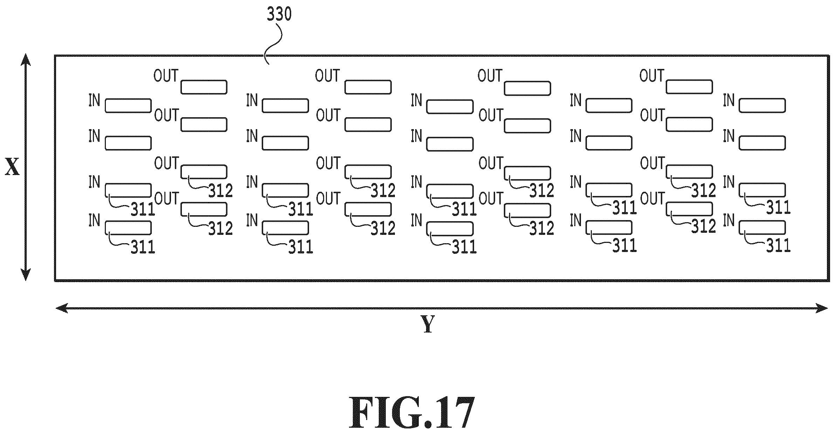

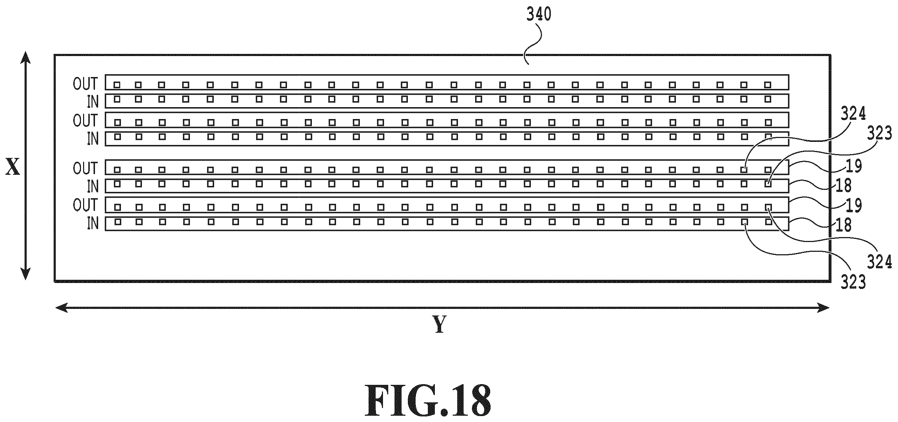

Figs. 16A and 16B are schematic views illustrating a circulation path for an ink of one color in the ejection unit 3 in the present embodiment. Fig. 16A is an exploded perspective view of the ejection unit 3 as seen from the first support member 4 side. Fig. 16B is an exploded perspective view of the ejection unit 3 as seen from the ejection module 300 side. Note that the arrows denoted as "IN" and "OUT" in Figs. 16A and 16B indicate the ink flow, and the ink flow will be described only for one color, but the inks of the other colors flow similarly. Moreover, in Figs. 16A and 16B, illustration of the second support member 7 and the electric wiring member 5 is omitted, and description of them is also omitted in the following description of the configuration of the ejection unit. Moreover, as for the first support member 4 in Fig. 16A, a cross section along the line XVI-XVI in Fig. 8A is illustrated. As described earlier, each ejection module 300 includes a silicon substrate 310 and a plurality of ejection elements 15. The silicon substrate 310 includes an ejection element substrate 340 and an opening plate 330. Fig. 17 is a view illustrating the opening plate 330. Fig. 18 is a view illustrating the ejection element substrate 340.

The ejection unit 3 is supplied with an ink from each circulation unit 54 through the joint member 8 (see Fig. 8A). An ink path for an ink to return to the joint member 8 after passing the joint member 8 will now be described. Note that illustration of the joint member 8 is omitted in the following drawings.

Each ejection module 300 includes an ejection element substrate 340 and an opening plate 330 forming its silicon substrate 310, and further includes an ejection port forming member 320. The ejection element substrate 340, the opening plate 330, and the ejection port forming member 320 become the ejection module 300 by being stacked and joined such that each ink's channels communicate with each other. The ejection module 300 is supported on the first support member 4. The ejection unit 3 is formed by supporting each ejection module 300 on the first support member 4. The ejection port forming member 320 is provided on the front surface of the ejection element substrate 340 (the lower surface in Fig. 16B). The ejection port forming member 320 includes a plurality of ejection port arrays each being a plurality of ejection ports 13 forming a line. Part of the ink supplied through ink channels in the ejection module 300 is ejected from the ejection ports 13. The ink not ejected is collected through ink channels in the ejection module 300.

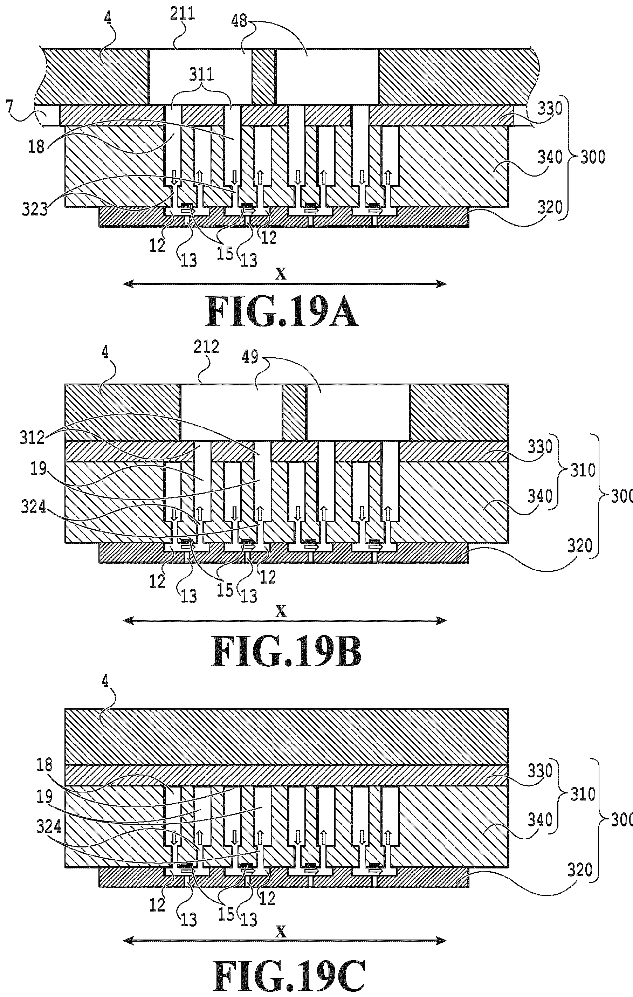

As illustrated in Figs. 16A and 16B and Fig. 17, the opening plate 330 includes a plurality of arrayed ink supply ports 311 and a plurality of arrayed ink collection ports 312. As illustrated in Fig. 18 and Figs. 19A to 19C, the ejection element substrate 340 includes a plurality of arrayed supply connection channels 323 and a plurality of arrayed collection connection channels 324. The ejection element substrate 340 further includes common supply channels 18 communicating with the plurality of supply connection channels 323 and common collection channels 19 communicating with the plurality of collection connection channels 324. The ink supply channels 48 and the ink collection channels 49 (see Fig. 8A) provided in the first support member 4 and the channels provided in each ejection module 300 communicate with each other to form the ink channels inside the ejection unit 3. Support member supply ports 211 are openings in cross section forming the ink supply channels 48. Support member collection ports 212 are openings in cross section forming the ink collection channels 49.

The ink to be supplied to the ejection unit 3 is supplied from the circulation unit 54 (see Fig. 8A) side to the ink supply channels 48 (see Fig. 8A) in the first support member 4. The ink having flowed in through the support member supply ports 211 in the ink supply channels 48 is supplied to the common supply channels 18 in the ejection element substrate 340 through the ink supply channels 48 (see Fig. 8A) and the ink supply ports 311 in the opening plate 330, and enters the supply connection channels 323. The channels up to this point are the supply-side channels. Thereafter, the ink passes through the pressure chambers 12 (see Fig. 8B) in the ejection port forming member 320 and flows into the collection connection channels 324, which are the collection-side channels. Details of the ink flow in the pressure chambers 12 will be described later.

In the collection-side channels, the ink having entered the collection connection channels 324 in the ejection element substrate 340 flows into the common collection channels 19. Thereafter, the ink flows into the ink collection channels 49 in the first support member 4 from the common collection channels 19 through the ink collection ports 312 in the opening plate 330, and is collected into the circulation unit 54 through the support member collection ports 212.

Regions of the opening plate 330 where the ink supply ports 311 or the ink collection ports 312 are not present correspond to regions of the first support member 4 for separating the support member supply ports 211 and the support member collection ports 212. Also, the first support member 4 does not have openings at these regions. Such regions are used as bonding regions in the case of bonding the ejection module 300 and the first support member 4.

As illustrated in Fig. 17, a plurality of arrays of openings arranged along the X direction are provided side by side in the Y direction in the opening plate 330, and the openings for supply (IN) and the openings for collection (OUT) are arrayed alternately in the Y direction while being shifted from each other by a half pitch in the X direction. Note that the ink supply ports 311 form the openings for supply (IN), and the ink collection ports 312 form the openings for collection (OUT). As illustrated in Fig. 18, in the ejection element substrate 340, the common supply channels 18 communicating with the plurality of supply connection channels 323 arrayed in the Y direction and the common collection channels 19 communicating with the plurality of collection connection channels 324 arrayed in the Y direction are arrayed alternately in the X direction. The common supply channels 18 and the common collection channels 19 are separated by the ink type. Moreover, the number of ejection port arrays for each color determines the number of common supply channels 18 and common collection channels 19 to be disposed. Also, the number of supply connection channels 323 and collection connection channels 324 disposed corresponds to the number of ejection ports 13. Note that a one-to-one correspondence is not necessarily essential, and a single supply connection channel 323 and a single collection connection channel 324 may correspond to a plurality of ejection ports 13.

Each ejection module 300 is formed by stacking and joining the opening plate 330 and the ejection element substrate 340 as above such that each ink's channels communicate with each other, and is supported on the first support member 4. As a result, ink channels including the supply channels and the collection channels as above are formed.

Figs. 19A to 19C are cross-sectional views illustrating ink flows at different portions of the ejection unit 3. Fig. 19A is a cross section taken along the line XLXA-XIXA in Fig. 16A, and illustrates a cross section of a portion of the ejection unit 3 where ink supply channels 48 and ink supply ports 311 communicate with each other. Fig. 19B is a cross section taken along the line XIXB-XIXB in Fig. 16A, and illustrates a cross section of a portion of the ejection unit 3 where ink collection channels 49 and ink collection ports 312 communicate with each other. Also, Fig. 19C is a cross section taken along the line XIXC-XIXC in Fig. 16A, and illustrates a cross section of a portion where ink supply ports 311 and ink collection ports 312 do not communicate with channels in the first support member 4.

As illustrated in Fig. 19A, the supply channels for supplying the inks supply the inks from the portions where the ink supply channels 48 in the first support member 4 and the ink supply ports 311 in the opening plate 330 overlap and communicate with each other. Moreover, as illustrated in Fig. 19B, the collection channels for collecting the inks collect the inks from the portions where the ink collection channels 49 in the first support member 4 and the ink collection ports 312 in the opening plate 330 overlap and communicate with each other. Furthermore, as illustrated in Fig. 19C, the ejection unit 3 locally has regions where no opening is provided in the opening plate 330. At such regions, the inks are neither supplied or collected between the ejection element substrate 340 and the first support member 4. The inks are supplied at the regions where the ink supply ports 311 are provided, as illustrated in Fig. 19A. The inks are collected at regions where the ink collection ports 312 are provided, as illustrated in Fig. 19B. Note that the present embodiment has been described by taking the configuration using the opening plate 330 as an example, but a configuration not using the opening plate 330 may be employed. For example, the configuration may be such that channels corresponding to the ink supply channels 48 and the ink collection channels 49 are formed in the first support member 4, and the ejection element substrate 340 is joined to the first support member 4.

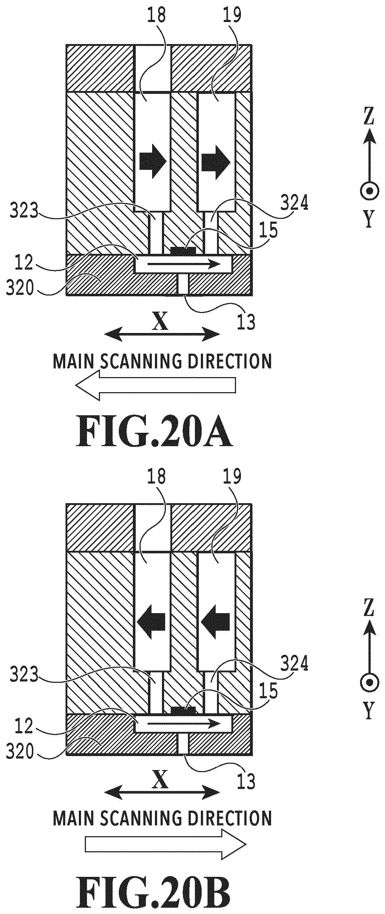

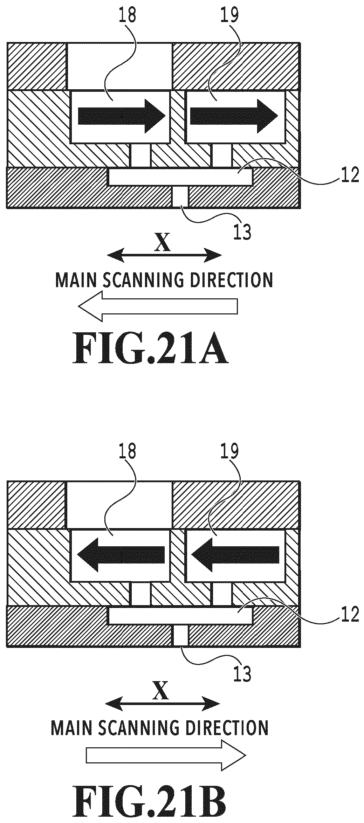

Figs. 20A and 20B are cross-sectional views illustrating the vicinity of an ejection port 13 in an ejection module 300. Figs. 21A and 21B are cross-sectional views illustrating an ejection module with a configuration as a comparative example in which the common supply channels 18 and the common collection channels 19 are widened in the X direction. Note that the bold arrows illustrated in the common supply channel 18 and the common collection channel 19 in Figs. 20A and 20B and Figs. 21A and 21B indicate the oscillating movement of an ink which occurs with the configuration using the serial liquid ejection apparatus 50. The ink supplied to the pressure chamber 12 through the common supply channel 18 and the supply connection channel 323 is ejected from the ejection port 13 as the ejection element 15 is driven. In a case where the ejection element 15 is not driven, the ink is collected into the common collection channel 19 from the pressure chamber 12 through the collection connection channel 324, which is a collection channel.

In the case of ejecting the ink circulated as above in the configuration using the serial liquid ejection apparatus 50, the ink ejection is affected to no small extent by the oscillating movement of the ink inside the ink channels caused by the main scanning of the liquid ejection head 1. Specifically, the effect of the oscillating movement of the ink inside the ink channels appears as a difference in the amount of the ink ejected and a deviation in ejection direction. In the case where the common supply channels 18 and the common collection channels 19 have cross-sectional shapes which are wide in the X direction, or the main scanning direction, as illustrated in Figs. 21A and 21B, the inks inside the common supply channels 18 and the common collection channels 19 more easily receive inertial forces in the main scanning direction, so that the inks oscillate greatly. This leads to a possibility that the oscillating movements of the inks may affect the ejection of the inks from the ejection ports 13. Moreover, widening the common supply channels 18 and the common collection channels 19 in the X direction widens the distance between the colors. This may lower the printing efficiency.

Hence, each common supply channel 18 and each common collection channel 19 in the present embodiment are configured such that, in the cross sections illustrated in Figs. 20A and 20B, they both extend in the Y direction and also extend in the Z direction, which is perpendicular to the X direction, or the main scanning direction. With such a configuration, the common supply channel 18 and the common collection channel 19 are given small channel widths in the main scanning direction. By giving the common supply channel 18 and the common collection channel 19 small channel widths in the main scanning direction, the oscillating movement of the ink inside the common supply channel 18 and the common collection channel 19 by the inertial force acting on the ink in the direction opposite to the main scanning direction (see the black bold arrows in Figs. 20A and 20B) during main scanning is made small. This reduces the effect of the oscillating movement of the ink on the ejection of the ink. Moreover, by extending the common supply channel 18 and the common collection channel 19 in the Z direction, the cross-sectional areas of the common supply channel 18 and the common collection channel 19 are increased. This reduces the channel pressure loss.

As described above, each common supply channel 18 and each common collection channel 19 are given small channel widths in the main scanning direction. This configuration reduces the oscillating movement of the ink inside the common supply channel 18 and the common collection channel 19 during main scanning but does not eliminate the oscillating movement of the ink. In the present embodiment, in order to reduce the difference in ejection between the ink types that may be generated by the reduced oscillating movement, the configuration is such that the common supply channel 18 and the common collection channel 19 are disposed at positions overlapping each other in the X direction.

As mentioned earlier, in the present embodiment, the supply connection channels 323 and the collection connection channels 324 are provided in correspondence with the ejection ports 13. Moreover, the correspondence between the supply connection channels 323 and the collection connection channels 324 is such that they are arrayed in the X direction with the ejection ports 13 interposed therebetween. Thus, if the common supply channel 18 and the common collection channel 19 have a portion(s) where they do not overlap each other in the X direction, the correspondence between the supply connection channels 323 and the collection connection channels 324 in the X direction breaks. This affects the ink flow in the pressure chambers 12 in the X direction and the ink ejection. If this is combined with the effect of the oscillating movement of the ink, there is a possibility that it may further affect the ink ejection from each ejection port.

Thus, by disposing the common supply channel 18 and the common collection channel 19 at positions overlapping each other in the X direction, the oscillating movement of the ink inside the common supply channel 18 and the common collection channel 19 during main scanning is substantially the same at any positions in the Y direction, in which the ejection ports 13 are arrayed. Thus, the pressure differences generated in the pressure chambers 12 between the common supply channel 18 side and the common collection channel 19 side do not greatly vary. This enables stable ejection.

Also, some liquid ejection heads which circulate an ink therein are configured such that the channel for supplying the ink to the liquid ejection head and the channel for collecting the ink are the same channel. However, in the present embodiment, the common supply channel 18 and the common collection channel 19 are different channels. Moreover, the supply connection channels 323 and the pressure chambers 12 communicate with each other, the pressure chambers 12 and the collection connection channels 324 communicate with each other, and the inks are ejected from the ejection ports 13 in the pressure chambers 12. That is, the configuration is such that the pressure chambers 12 serving as paths connecting the supply connection channels 323 and the collection connection channels 324 include the ejection ports 13. Hence, in each pressure chamber 12, an ink flow flowing from the supply connection channel 323 side to the collection connection channel 324 side is generated, and the ink inside the pressure chamber 12 is efficiently circulated. The ink inside the pressure chamber 12, which tends to be affected by evaporation of the ink from the ejection port 13, is kept fresh by efficiently circulating the ink inside the pressure chamber 12.

Also, since the two channels, namely the common supply channel 18 and the common collection channel 19, communicate with the pressure chamber 12, the ink can be supplied from both channels in a case where it is necessary to perform ejection with a high flow rate. That is, compared to the configuration in which only a single channel is formed for ink supply and collection, the configuration in the present embodiment has an advantage that not only efficient circulation can be performed but also ejection at a high flow rate can be handled.

Incidentally, the oscillating movement of the ink causes a less effect in a case where the common supply channel 18 and the common collection channel 19 are disposed at positions close to each other in the X direction. The configuration is desirably such that the gap between the channels is 75 $\mu$m to 100 $\mu$m.

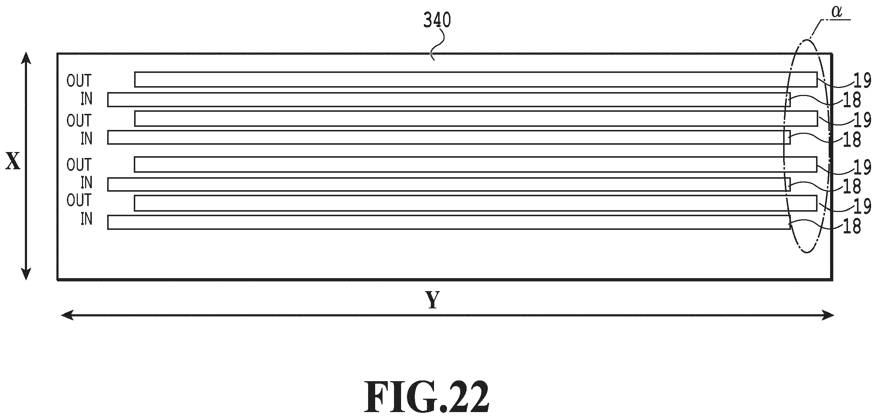

Fig. 22 is a view illustrating an ejection element substrate 340 as a comparative example. Note that illustration of the supply connection channels 323 and the collection connection channels 324 is omitted in Fig. 22. The inks having received thermal energy from the ejection elements 15 in the pressure chambers 12 flow into the common collection channels 19. Hence, the temperature of the inks flowing through the common collection channels 19 is higher than the temperature of the inks in the common supply channels 18. Here, in the comparative example, only the common collection channels 19 are present at one portion of the ejection element substrate 340 in the X direction, as indicated by a portion $\alpha$ circled with the long dashed short dashed line in Fig. 22. In this case, the temperature may locally rise at that portion, thereby causing temperature unevenness within the ejection module 300. This may affect the ejection.

The temperature of the inks flowing through the common supply channels 18 is lower than that in the common collection channels 19. Thus, if the common supply channels 18 and the common collection channels 19 are close to each other, the temperature of the ink in the common supply channels 18 and the temperature of the ink in the common collection channels 19 partly cancel each other out in the vicinity of them. This suppresses a temperature rise. For this reason, it is preferable that the common supply channels 18 and the common collection channels 19 have substantially the same length, be present at positions overlapping each other in the X direction, and be close to each other.

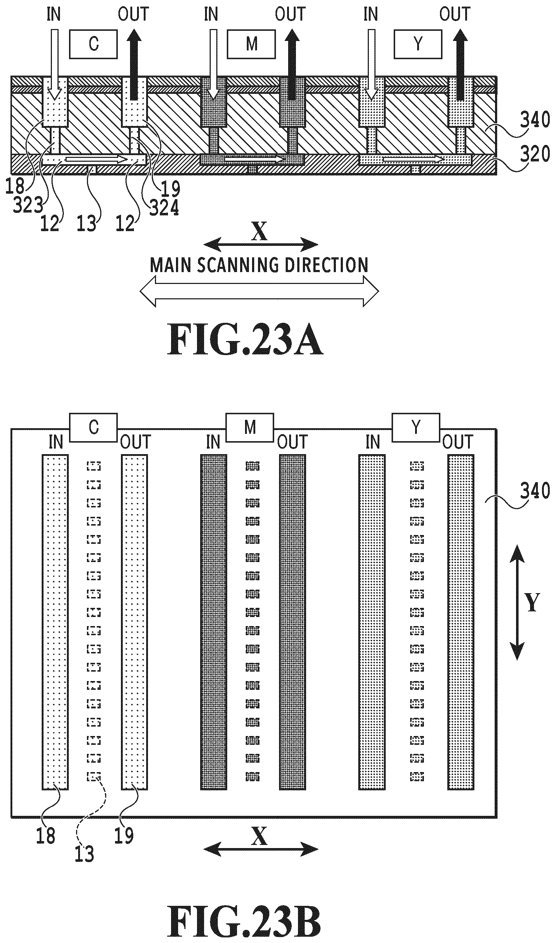

Figs. 23A and 23B are views illustrating a channel configuration of a liquid ejection head for three types of inks, namely cyan (C), magenta (M), and yellow (Y) inks. In the liquid ejection head for the three types of inks, a circulation channel is provided for each ink type as illustrated in Fig. 23A. The pressure chambers 12 are provided along the X direction, which is the main scanning direction of the liquid ejection head. Also, as illustrated in Fig. 23B, the common supply channels 18 and the common collection channels 19 are provided along the ejection port arrays, which are arrays of ejection ports 13. The common supply channels 18 and the common collection channels 19 are provided so as to extend in the Y direction with the ejection port arrays therebetween.

<Backflow of Inks in Vicinity of Ejection Ports>

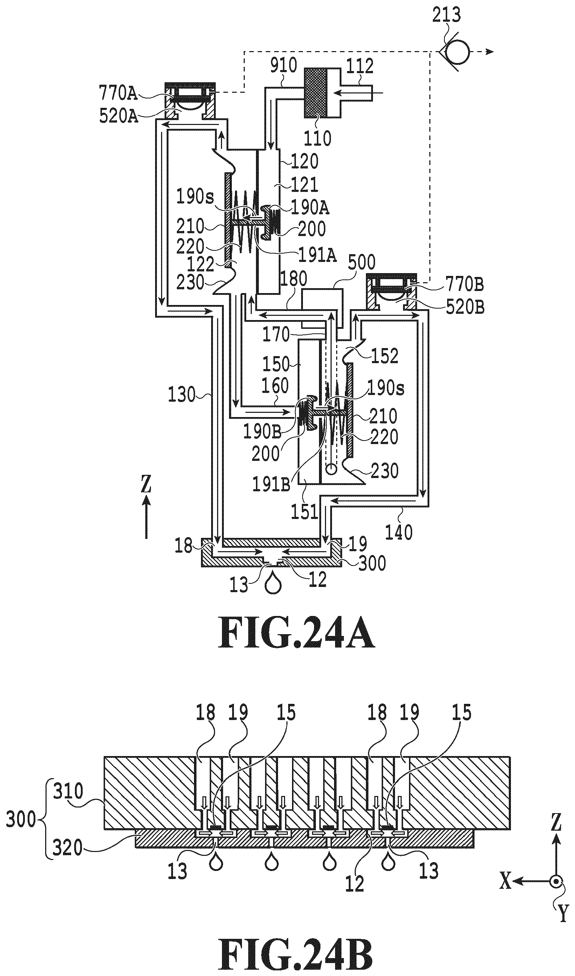

Figs. 24A and 24B are views schematically illustrating backflow of inks in the vicinity of ejection ports. Fig. 24A is a vertical cross-sectional view schematically illustrating backflow of an ink occurring in the circulation path illustrated in Fig. 10A. Fig. 24B is an enlarged view schematically illustrating backflow of inks occurring in the ejection module 300 illustrated in Fig. 8B. Figs. 24A and 24B illustrate flows such that the inks in the pressure chambers 12 have flowed thereinto from the common supply channels 18 or the common collection channels 19, and pass through the pressure chambers 12 and flow out from the ejection ports 13. As mentioned earlier, in a case of continuing high-duty printing, the inks back up into the pressure chambers 12 from the first collection channel 140 side as well. That is, as illustrated in Figs. 24A and 24B, each pressure chamber 12 is refilled with the ink from both the supply channel 130 (common supply channel 18) and the first collection channel 140 (common collection channel 19). Specifically, the ink supplied to the bypass channel 160 from the first pressure control chamber 122 is supplied to the second pressure control chamber 152 of the second pressure adjustment unit 150 through the second valve chamber 151. Thereafter, part of the ink supplied to the second pressure control chamber 152 is supplied to the first collection channel 140 and then supplied to the ejection ports 13 through the common collection channels 19.

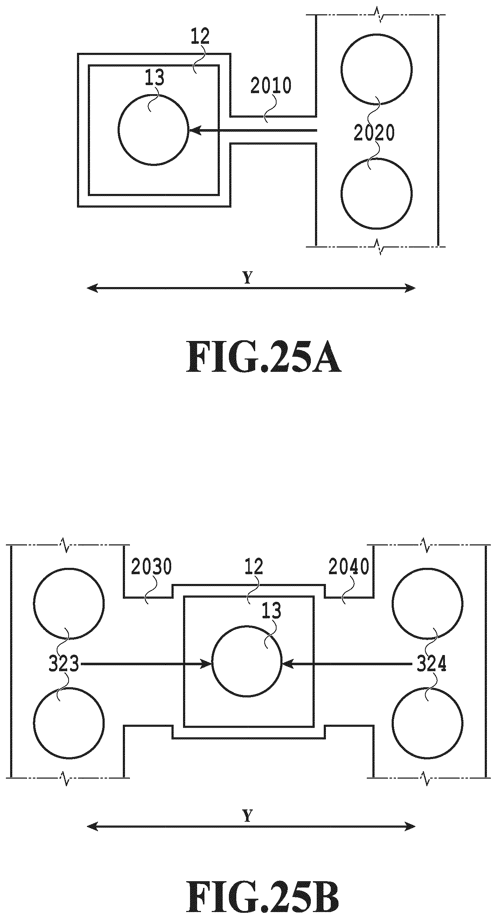

Figs. 25A and 25B are views illustrating ink supply inside an ejection module 300. Fig. 25A is a view illustrating a channel configuration in the vicinity of a pressure chamber 12, and is a view illustrating a comparative example different from the present embodiment. Fig. 25A represents a configuration in which only one side of the pressure chamber 12 communicates with a channel 2010. In this configuration, the supply of the ink to the pressure chamber 12 is one-side supply in which the ink is supplied only from the channel 2010. In the configuration of Fig. 25A, independent supply ports 2020 communicating with the pressure chamber 12 are connected to either the common supply channel 18 or the common collection channel 19 or both of them. In a case of using in particular a thermal-type ejection element as the ejection element 15, the ink is ejected from the ejection port 13 by generating a bubble inside the pressure chamber 12. Also, the pressure chamber 12 is refilled with the ink by bubble disappearance corresponding to the bubble generation. In such a channel configuration, the channel 2010 connected to the pressure chamber 12 is narrowed and lengthened to increase the rear resistance at the time of the bubble generation. This makes the generated bubble more symmetrical and improves the formation of a droplet. On the other hand, in a configuration as illustrated in Fig. 25A, the increased rear resistance lowers the ease of supply in the ink refill of the pressure chamber 12 at the time of the bubble disappearance after ejection. Accordingly, with the channel configuration illustrated in Fig. 25A, it is generally difficult to improve the refill frequency. In particular, in a case of performing a high-duty print operation, the amount of the ink to be supplied to each ejection port 13 becomes small, which leads to a possibility of lowering the ejection stability.

Fig. 25B, on the other hand, is a view illustrating a channel configuration in the vicinity of a pressure chamber 12 in the present embodiment. The supply connection channels 323 serving as first independent supply ports connect a first liquid channel 2030 communicating with the pressure chamber 12 and the common supply channel 18. The collection connection channels 324 serving as second independent supply ports connect a second liquid channel 2040 communicating with the pressure chamber 12 and the common collection channel 19. As mentioned earlier, in the present embodiment, the pressure chamber 12 is refilled with the amount of the ink ejected from the ejection port 13 from the first liquid channel 2030 and the second liquid channel 2040. As illustrated in Fig. 25B, a both-side supply configuration is employed in which both sides of the pressure chamber 12 communicate with the first liquid channel 2030 and the second liquid channel 2040. With such a configuration, although the channels communicating with the pressure chamber 12 are widened and shortened as illustrated in Fig. 25B, symmetrical rear resistances are exerted at the time of bubble generation, so that it is easier for the generated bubble to be more symmetrical. This tends to improve the formation of an ink droplet. Moreover, the rear resistances do not have to be increased. This improves the ease of ink supply in the ink refill of the pressure chamber 12 at the time of the bubble disappearance after ejection. As described above, according to the present embodiment, the ejection stability is improved even in the case of performing a high-duty print operation. That is, both the droplet formation and the refill frequency are improved.

Note that a case of using thermal-type ejection elements has been mainly described in the above embodiment. However, piezoelectric-type ejection elements may be used. With the thermal type, however, it is more difficult to improve both the droplet formation and the refill frequency. Hence, the present embodiment is more preferable for the thermal type.

<Connection between Main Body Part and Liquid Ejection Head>

Fig. 26 is a schematic view illustrating a state where an ink tank 2 and an ink supply unit 400 provided in a main body part of the liquid ejection apparatus 50 and the liquid ejection head 1 are connected in the present embodiment. The liquid ejection apparatus 50 in the present embodiment has such a configuration that only the liquid ejection head 1 can be easily replaced in a case where a trouble occurs in the liquid ejection head 1. Specifically, the liquid ejection apparatus 50 in the present embodiment is provided with the main body-side connecting member 470 and the head-side connecting member 800, which facilitate connection and disconnection of the second supply paths 112 and the third air channel 113, which are linked to the ink supply unit 400, and the liquid ejection head 1 to and from each other. This enables only the liquid ejection head 1 to be easily attached to and detached from the liquid ejection apparatus 50.

As illustrated in Fig. 26, the head-side connecting member 800 is detachably attached to the head housing 53 of the liquid ejection head 1. The head-side connecting member 800 is connected to the ink supply path (third supply path 910) in each circulation unit 54 through the corresponding filter 110. The head-side connecting member 800 is also connected to the first bubble discharge unit 770A and the second bubble discharge unit 770B through a deaeration channel 541 in the circulation unit 54.

The main body-side connecting member 470 is detachably connected to the head-side connecting member 800 attached to the head housing 53. In the state where the main body-side connecting member 470 is connected to the head-side connecting member 800, the second supply paths 112 communicate with the ink supply paths (third supply paths 910) in the circulation units 54 through the filters 110. Also, in the state where the main body-side connecting member 470 is connected to the head-side connecting member 800, the third air channel 113 communicates with the deaeration channels 541 in the circulation units 54. In this way, the second supply paths 112 (ink supply tube 450) and the third air channel 113 (deaeration tube 460) linked to the ink supply unit 400 can be easily connected to and disconnected from the liquid ejection head 1. Accordingly, the attachment, detachment, and replacement of the liquid ejection head 1 can be done easily.

<Configurations of Bubble Discharge Units>

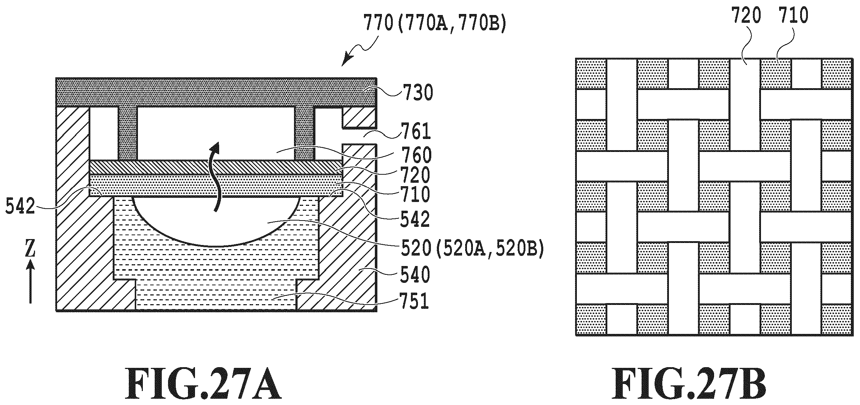

Figs. 27A and 27B are schematic views of a bubble discharge unit 770. Fig. 27A is a cross-sectional view of the bubble discharge unit 770. Fig. 27B is a schematic view of a deformation suppression member 720 of the bubble discharge unit 770. Note that the second bubble discharge unit 770B has a configuration similar to that of the first bubble discharge unit 770A. The second bubble accumulation chamber 520B has a configuration similar to that of the first bubble accumulation chamber 520A. For this reason, the first bubble discharge unit 770A and the second bubble discharge unit 770B may be described collectively as "bubble discharge unit 770" or "bubble discharge units 770." The first bubble accumulation chamber 520A and the second bubble accumulation chamber 520B may be described collectively as "bubble accumulation chamber 520" or "bubble accumulation chambers 520." As illustrated in Fig. 27A, the bubble discharge unit 770 (first bubble discharge unit 770A and second bubble discharge unit 770B) has the bubble accumulation chamber 520 (first bubble accumulation chamber 520A and second bubble accumulation chamber 520B) and the depressurization chamber 760. The bubble discharge unit 770 further has the gas permeable membrane 710, the deformation suppression member 720, a first communication port 751 through which the bubble accumulation chamber 520 and a liquid channel or a liquid chamber communicate with each other, and a second communication port 761 through which the depressurization chamber 760 and the ink supply unit 400 communicate with each other.

The bubble discharge unit 770 (first bubble discharge unit 770A and second bubble discharge unit 770B) communicates with the ink supply unit 400 provided in the main body part of the liquid ejection apparatus 50 and is depressurized by an operation of the ink supply unit 400. Further, the third check valve 213 is provided between the bubble discharge unit 770 and the ink supply unit 400. In this way, even in a case where the liquid ejection apparatus 50 is not constantly in operation, a depressurized state is maintained and therefore a bubble discharge operation can be performed. The third check valve 213 may be provided at each of the branching portions of the third air channel 113 between the ink supply unit 400 and the first and second bubble discharge units 770A and 770B. The third check valve 213 may be provided at the merged portion of the third air channel 113 between the ink supply unit 400 and the first and second bubble discharge units 770A and 770B.

As illustrated in Fig. 10A, the first bubble discharge unit 770A is provided on a vertically upper side of the supply channel 130, and the second bubble discharge unit 770B is provided on a vertically upper side of the first collection channel 140, but the configuration is not limited to this. For example, one bubble discharge unit 770 (first bubble discharge unit 770A) may be provided only on the supply channel 130. A bubble discharge unit 770 may be provided on a vertically upper side of the ink tank 2, the first supply path 111, the second supply path 112, the third supply path 910, the filter 110, the pump inlet channel 170, the pump outlet channel 180, the bypass channel 160, the pressure chamber 12, or the like. Also, as illustrated in Fig. 10B, the first bubble accumulation chamber 520A may communicate with a side surface of the supply channel 130, and the first bubble discharge unit 770A may be formed so as to extend on a lateral side of the first bubble accumulation chamber 520A. The second bubble accumulation chamber 520B may communicate with a side surface of the first collection channel 140, and the second bubble discharge unit 770B may be formed so as to extend on a lateral side of the second bubble accumulation chamber 520B. The bubble accumulation chambers 520 may communicate with side surfaces of fluid communication portions other than the supply channel 130 and the first collection channel 140 and the bubble discharge units 770 may be formed so as to extend on lateral sides of the respective bubble accumulation chambers 520, as long as they are configured to be capable of trapping bubbles and bringing them into contact with the respective gas permeable membranes 710. In other words, the bubble discharge units 770 may be formed so as to extend horizontally from the respective bubble accumulation chambers 520, instead of vertically upward from the bubble accumulation chambers 520.

<Gas Permeable Membrane>

As illustrated in Fig. 27A, the gas permeable membrane 710 is provided in a housing part of the circulation unit 54 in which the corresponding bubble accumulation chamber 520 is formed, so as to separate the bubble accumulation chamber 520 and the corresponding depressurization chamber 760. Hereinafter, the housing part of the circulation unit 54 in which the bubble accumulation chamber 520 is formed will be referred to as "unit housing 540." The gas permeable membrane 710 is bonded to the unit housing 540 by a bonding method such as thermal welding, ultrasonic welding, or laser welding, for example. Any of the bonding methods such as thermal welding, ultrasonic welding, and laser welding can be used as long as the bubble accumulation chamber 520 is sealed such that the liquid (ink) inside it will not leak into the depressurization chamber 760. The material of the gas permeable membrane 710 is desirably a resin. Specific examples of the material of the gas permeable membrane 710 include polypropylene (PP), polymethylpentene (TPX), polytetrafluoroethylene (PTFE), and so on. The gas permeability of the material of the gas permeable membrane 710 is desirably high in order to enhance the efficiency of bubble discharge. The material of the gas permeable membrane 710 is required to have certain gas permeability in order to achieve a level of bubble discharge efficiency necessary for the product. Also, productivity such as being easily bondable to the unit housing 540 by thermal welding is required from the material of the gas permeable membrane 710. The material of the gas permeable membrane 710 is required to have reliability against breakage of the gas permeable membrane 710, detachment of the gas permeable membrane 710, and the like. The material of the gas permeable membrane 710 is required to have reliability as a liquid-contacting material. Thus, it is desirable to select the material of the gas permeable membrane 710 from the perspectives of gas permeability, manufacturing method (productivity), and reliability.

Bubbles that flow into the bubble accumulation chamber 520 include: initial bubbles that remain after the initial filling (about 0.2 cc); tank replacement bubbles that flow in during normal use (about 0.015 cc/month); permeating bubbles that come in from the outside via gas permeation (about 0.001 cc/day); and so on. In order to process these bubbles, it is necessary to perform a bubble discharge operation at a bubble permeation amount of 0.01 cc/day or more.

In a case where such bubbles flowing into each bubble accumulation chamber 520 increase and reach the channel portion, some bubbles will be swept away by the ink flow and enter pressure chambers 12 while the liquid ejection apparatus 50 is in operation. This increases the possibility of impairing the ejection stability. Also, even while the liquid ejection apparatus 50 is not in operation, the increased bubbles increase the pressure on the ink, which leads to a higher possibility of ink leakage. To prevent such problems, it is effective to perform bubble discharge through the gas permeable membrane 710. Hence, the present inventors conducted a study on the amount of bubbles required to be discharged from each bubble accumulation chamber 520. The result of the study indicated that it is necessary to perform a bubble discharge operation with a gas permeation amount of 0.01 cc/day or more. It was confirmed that discharging bubbles from the bubble accumulation chamber 520 with the amount of gas permeation through the gas permeable membrane 710 set at 0.01 cc/day or more keeps the accumulated bubbles in the bubble accumulation chamber 520 from entering the pressure chambers 12 and prevents ink leakage due to an increase in the pressure on the ink.

As specified in "JIS K 7126-1," the amount of gas permeation through the gas permeable membrane 710 can be verified using a pressure sensor method or the like. The pressure sensor method is a method in which, of two sides separated by a test piece, one side (lower pressure side) is maintained at a vacuum while a test gas is introduced into the other side (higher pressure side), and the resulting increase in the pressure on the lower pressure side is measured to measure the gas permeability. By the pressure sensor method, a gas permeability coefficient can be calculated from the gas permeability and the thickness of the test piece. In pressure sensor method, the gas permeability of a gas permeable membrane as a test piece may be measured to verify the amount of gas permeation through the gas permeable membrane. In the initial filling by normal suction to be described later, the inks are filled into the liquid ejection head 1, and bubbles in each bubble accumulation chamber 520 are brought into contact with the entirety of the corresponding gas permeable membrane 710. The liquid ejection head 1 is allowed to stand at normal temperature and pressure with the pressure on the gas inside the depressurization chamber 760 maintained at a negative pressure of about 50 kPa by the ink supply unit 400. During such a series of operations, the amount of bubbles inside the bubble accumulation chamber 520 is measured in a time series manner by computed tomography (CT) scanning or the like. In this way, the amount of permeation of bubbles (gas) through the gas permeable membrane 710 can be verified. Since the gas permeable membrane 710 is welded to the unit housing 540 to seal the bubble accumulation chamber 520, the material of the gas permeable membrane 710 is desirably one that ensures high reliability in the welding of the gas permeable membrane 710 and high reliability as a liquid-contacting material. To achieve a bubble permeation amount of 0.01 cc/day or more, the thickness of the gas permeable membrane 710 is desirably 0.1 mm or less.

The amount of gas permeation through gas permeable membrane per unit time is affected by various factors, such as the pressure difference between the spaces on both sides of the gas permeable membrane, the area of the gas permeable membrane to be permeated (hereinafter referred to also as "permeated-portion area"), and the thickness of the gas permeable membrane. Here, the present inventors focused on and conducted a study on the thickness of the gas permeable membrane. The amount of gas permeation through the gas permeable membrane per unit time is in inverse proportion to the thickness of the gas permeable membrane. Specifically, the amount of gas permeation per unit time decreases to 1/2 in a case where the thickness of the gas permeable membrane becomes twice larger, and the amount of gas permeation per unit time decreases to 1/3 in a case where the thickness of the gas permeable membrane becomes three times larger, for example. Thus, the thickness of the gas permeable membrane only needs to be reduced in order to increase the amount of gas permeation per unit time. However, simply reducing the thickness of the gas permeable membrane lowers the rigidity of the gas permeable membrane, thus making the gas permeable membrane easily deformable by the depressurization of the depressurization chamber. In the case where the gas permeable membrane is easily deformable, there is a possibility that the gas permeable membrane may break over time.

Thus, the present inventors firstly conducted a study on the thickness of the gas permeable membrane 710 with which the amount of gas permeation through the gas permeable membrane 710 would be 0.01 cc/day or more with the pressure difference between the bubble accumulation chamber 520 and the depressurization chamber 760 set to 50 kPa. The result of the studies by the present inventors indicated that the thickness of a gas permeable membrane 710 of polypropylene (PP) with a permeated-portion area of 0.36 cm$^2$ needs to be 0.1 mm or less in order to achieve a gas permeation amount of 0.01 cc/day or more with a pressure difference of 50 kPa. Note that the "permeated-portion area" in the above is the maximum value of the area of the gas permeable membrane 710 which bubbles can contact, and the actual contact area decreases as bubbles shrink in the process of permeation of the gas in the bubbles. In the study, the permeated-portion area was fixed to 0.36 cm$^2$ for the purpose of defining the specifications of the gas permeable membrane 710. Further, a deformation suppression member 720 was provided along the gas permeable membrane 710 to suppress deformation of the gas permeable membrane 710. Details of the deformation suppression member 720 will be described later.

Also, the gas permeable membrane 710 is separate from the unit housing 540 and is bonded to the unit housing 540 by a bonding method such as laser welding, as mentioned earlier. Thus, the unit housing 540 includes a bonding margin portion 542 (see Fig. 27A) to which to bond the gas permeable membrane 710. The bonding margin portion 542 is provided such that the periphery of the gas permeable membrane 710 can be bonded to the unit housing 540. The width of the bonding margin portion 542 is desirably set as appropriate according to the bonding method. Making the gas permeable membrane 710 separate from the unit housing 540 as above simplifies the configuration of the unit housing 540 and also provides more choices for the material of the gas permeable membrane 710.

Also, as for a suitable physical property for the material of the gas permeable membrane 710, the oxygen permeability coefficient is desirably 2000 cc/m$^2$ · 24 hrs · atm or more in a case where the thickness is 0.025 mm.

As described above, in each bubble discharge unit 770 in the present embodiment, the pressure difference between the bubble accumulation chamber 520 and the depressurization chamber 760 is 50 kPa, and a gas permeable membrane 710 of polypropylene (PP) with a permeated-portion area of 0.36 cm$^2$ is used. Also, the thickness of gas permeable membrane 710 is set to 0.1 mm or less to achieve a gas permeation amount of 0.01 cc/day or more. This prevents bubbles in the ink from flowing into the pressure chambers 12 even in a case where a significant amount of a gas has been dissolved in the ink. Further, setting the amount of permeation to 0.01 cc/day or more prevents bubbles from remaining in the bubble accumulation chamber 520, and thus also suppresses the occurrence of ink leakage due to an increase in the pressure on the ink. Also, the deformation suppression member 720 suppresses deformation of the gas permeable membrane 710 and therefore suppresses breakage of the gas permeable membrane 710. Accordingly, it is possible to provide a liquid ejection head and liquid ejection apparatus capable of suppressing the occurrence ejection failure and ink leakage by preventing bubbles from flowing into their pressure chambers 12.

<Bubble Accumulation Chambers>

As illustrated in Fig. 10A, the first bubble accumulation chamber 520A is provided on a vertically upper side of the supply channel 130 so as to be in fluid communication with the supply channel 130 through the first communication port 751. The second bubble accumulation chamber 520B is provided on a vertically upper side of the first collection channel 140 so as to be in fluid communication with the first collection channel 140 through the first communication port 751. In this way, bubbles included in the ink in the first pressure adjustment unit 120, the second pressure adjustment unit 150, the supply channel 130, the first collection channel 140, and the like as a result of circulation and ejection operations will be trapped in the bubble accumulation chambers 520 and discharged from the ink by a bubble discharge operation. Examples of the bubbles included in the ink include upstream bubbles having entered the channels due to replacement of the ink tank 2, precipitated bubbles formed inside the channels due to environmental changes, unexpected bubbles unexpectedly formed inside the channels, and so on. Note that the types of bubbles to be discharged by the bubble discharge operation are not limited to these. As long as the amount of bubbles included in the ink is such that they can be trapped in the bubble accumulation chamber 520 and a sufficient bubble discharge rate can be achieved, it is possible to discharge these bubbles to the outside of the liquid ejection head 1.

Examples of the material of the unit housing 540 forming the bubble accumulation chamber 520 include polypropylene (PP), polyethylene (PE), and the like. The material of the unit housing 540 is desirably polypropylene from the perspective of the reliability of welding of the gas permeable membrane 710 and the ease of handling.

\<depressurization chamber\>

As illustrated in Fig. 27A, the depressurization chamber 760 has an opening portion at which to dispose the gas permeable membrane 710, an opening portion facing the above opening portion for welding the gas permeable membrane 710, and the second communication port 761. The depressurization chamber 760 is formed so as to be surround by the unit housing 540, the gas permeable membrane 710, and a cover member 730. The second communication port 761 is formed so as to penetrate through a side portion of the unit housing 540, and the depressurization chamber 760 and the deaeration channel 541 (see Fig. 26) communicate with each other therethrough. The opening portion for welding the gas permeable membrane 710 is sealed by bonding the cover member 730, which is a separate member, to the unit housing 540. Examples of the method of bonding the cover member 730 include thermal welding, ultrasonic welding, laser welding, and the like. Examples of the material of the cover member 730 include polypropylene (PP), polyethylene (PE), and the like. The material of the cover member 730 is desirably the same material as the unit housing 540 forming the bubble accumulation chamber 520 from the perspective of the reliability of welding of the cover member 730 and the ease of handling.

In the present embodiment, by setting the pressure difference between the bubble accumulation chamber 520 and the depressurization chamber 760 to 50 kPa and setting the area and thickness of the gas permeable membrane 710 to 0.36 cm$^2$ and 0.02 mm, respectively, the gas permeable membrane 710 can be welded reliably and achieve a gas permeation amount of 0.05 cc/day. Also, by using the deformation suppression member 720, deformation of the gas permeable membrane 710 toward the depressurization chamber 760 is suppressed.

\<Deformation Suppression Member\>

As illustrated in Fig. 27B, the deformation suppression member 720 is formed using a mesh filter of stainless steel (SUS) with a net-like structure. Incidentally, in Fig. 27B, the gas permeable membrane 710 is given a dotted pattern to make the deformation suppression member 720 stand out. The dotted pattern given to the gas permeable membrane 710 in Fig. 27B does not illustrate a cross section of the gas permeable membrane 710. As the ink supply unit 400 depressurizes the depressurization chamber 760, the gas permeable membrane 710 tries to deform toward the depressurization chamber 760. By contacting the gas permeable membrane 710 trying to deform toward the depressurization chamber 760, the deformation suppression member 720 suppresses the deformation of the gas permeable membrane 710 to prevent breakage or detachment of the gas permeable membrane 710. The deformation suppression member 720 is provided on a tip portion of the cover member 730. For example, the deformation suppression member 720 is bonded to the tip portion of the cover member 730 by a bonding method such as a thermal welding, ultrasonic welding, or laser welding. The deformation suppression member 720 is disposed so as to cover the gas permeable membrane 710 at a position at which the deformation suppression member 720 is in contact with the gas permeable membrane 710 or separated from the gas permeable membrane 710 by a certain distance in the state where the cover member 730 is bonded to the unit housing 540. Examples of the material of the deformation suppression member 720 include nickel (Ni) and the like, in addition to stainless steel (SUS). The material of the deformation suppression member 720 is desirably a material that ensures high reliability in the welding of the deformation suppression member 720 and is easy to handle.

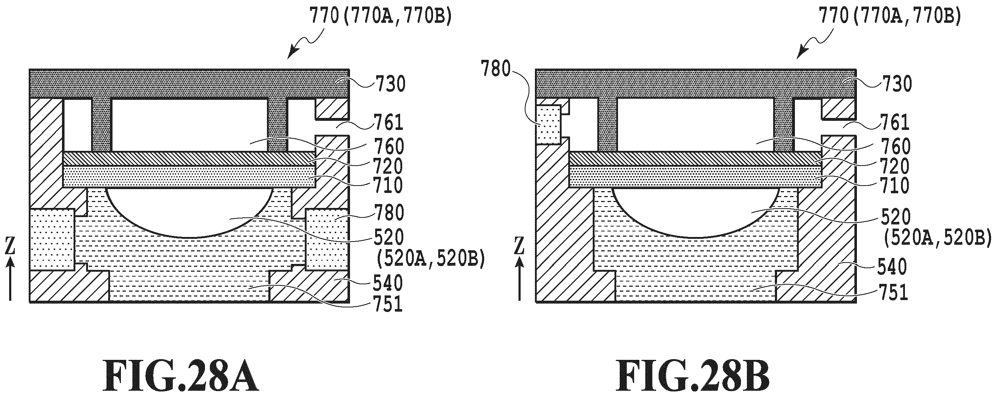

The bubble accumulation chamber 520 is formed by the unit housing 540, but is not limited to this. Figs. 28A and 28B are views illustrating modifications of the bubble discharge unit 770. Fig. 28A illustrates an example in which a side film 780 is used as part of the bubble accumulation chamber 520. Fig. 28B illustrates an example in which a side film 780 is used as part of the depressurization chamber 760. As illustrated in Fig. 28A, part of the bubble accumulation chamber 520 may be formed by a side film 780 welded to the unit housing 540. The material of the side film 780 is desirably a resin with an excellent gas barrier property, such as polyethylene terephthalate (PET) or nylon (Ny), in order to suppress an increase in the amount of bubbles in the bubble accumulation chamber 520, the liquid channel, the liquid chamber, and the like. The inner volume of the bubble accumulation chamber 520 may be any inner volume as long as the bubble accumulation chamber 520 can trap the amount of bubbles determined by the product's bubble design.

As illustrated in Fig. 28B, part of the depressurization chamber 760 may be formed by a side film 780 welded to the unit housing 540. The material of the side film 780 is desirably a resin with an excellent gas barrier property, such as polyethylene terephthalate (PET) or nylon (Ny), in order to reduce the amount of decrease in the degree of depressurization of the depressurization chamber 760. Also, the gas permeable membrane 710 may be disposed with an elastic member interposed between itself and the unit housing 540 for the bubble accumulation chamber 520 or between itself and the unit housing 540 for the depressurization chamber 760. In this case, the gas permeable membrane 710 does not need to be welded to the bubble accumulation chamber 520. This eliminates the need for an opening portion of the depressurization chamber 760 and the cover member 730 for sealing the opening portion. Hence, the depressurization chamber 760 may be formed by the unit housing 540 or the side film 780. The inner volume of the depressurization chamber 760 needs to be such an inner volume as to be capable of trapping the amount of bubbles determined by the product's bubble design.

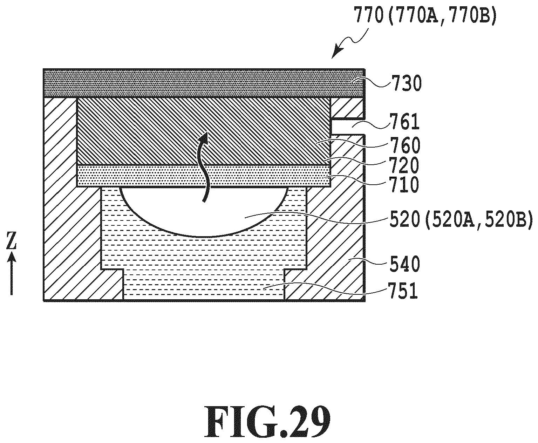

Fig. 29 is a cross-sectional view illustrating a first modification of the deformation suppression member 720. The deformation suppression member 720 is not limited to a mesh filter and may be formed using, for example, a non-woven fabric material with densely packed fibers, as illustrated in Fig. 29. In this case, it is necessary to use a non-woven fabric material having a certain degree of hardness or higher or set the degree of depressurization of the depressurization chamber 760 to a certain value or lower so that the non-woven fabric material will not be sucked in by the ink supply unit 400 at the time of depressurizing the depressurization chamber 760. Also, the non-woven fabric material has certain elasticity. Hence, by designing the deformation suppression member 720 such that its size is equivalent to the inner volume of the depressurization chamber 760, it is possible to dispose the deformation suppression member 720 inside the depressurization chamber 760 without extending the cover member 730 to the inside of the depressurization chamber 760.

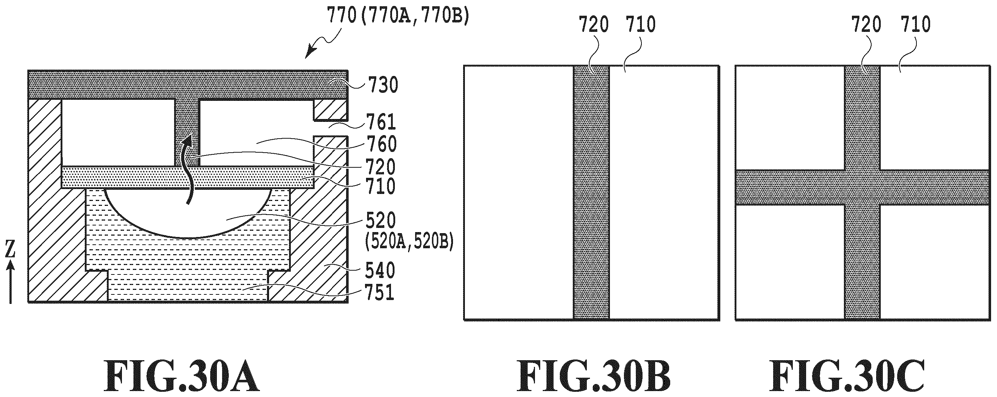

Figs. 30A to 30C are schematic views illustrating other modifications of the deformation suppression member 720. Fig. 30A is a cross-sectional view illustrating a second modification of the deformation suppression member 720. Fig. 30B is a schematic view illustrating the second modification of the deformation suppression member 720. Fig. 30C is a schematic view illustrating a third modification of the deformation suppression member 720. As illustrated in Fig. 30A, the deformation suppression member 720 may be a rib-shaped member formed integrally with the cover member 730. The rib shape of the deformation suppression member 720 may be a straight rib shape as illustrated in Fig. 30B. The rib shape of the deformation suppression member 720 is not limited to a straight rib shape, and may be a grid-like shape as illustrated in Fig. 30C. In this case, the rib shape of the deformation suppression member 720 is desirably a rib shape that contacts around the center of the gas permeable membrane 710 in order to reduce the amount of the greatest deformation of the gas permeable membrane 710. To reduce the amount of the greatest deformation of the gas permeable membrane 710, it is desirable to increase the number of ribs forming the deformation suppression member 720. Note that, in the case where the deformation suppression member 720 is provided on the tip portion of the cover member 730, the contact between part of the gas permeable membrane 710 and the deformation suppression member 720 reduces the effective area of the gas permeable membrane 710 which bubbles are caused to permeate through. For this reason, other members' configurations and the product's bubble design need to be adjusted. Also, in the case where the depressurization chamber 760 does not need the cover member 730, the deformation suppression member 720 may be installed in the unit housing 540 forming the bubble accumulation chamber 520 or the unit housing 540 forming the depressurization chamber 760.

<Principle of Bubble Discharge>

In a bubble discharge operation, the depressurization chamber 760 is brought into a depressurized state to thereby cause bubbles in the bubble accumulation chamber 520 to permeate through the gas permeable membrane 710 by means of the pressure difference between the pressure on the bubbles and the pressure on the gas in the depressurization chamber 760. The amount of permeation in the bubble discharge operation is represented by Equation (5) below.

$$Q = P \times p \times S \times t / L \dots (5)$$

Q: Gas permeation amount
P: Permeability coefficient
p: Degree of depressurization (gauge pressure)
S: Bubble contact area
t: Time

L: Thickness of the gas permeable membrane 710

The gas permeation amount represented by Q is the amount of permeation of the gas contained in the bubbles by the bubble discharge operation. The permeability coefficient represented by P is a numerical value determined by physical properties of the material of the gas permeable membrane 710, and represents a basic rate of the bubble discharge operation. The degree of depressurization represented by p is the degree of depressurization of the depressurization chamber 760 (gauge pressure). The bubble contact area represented by S is the area of contact between the bubbles and the gas permeable membrane 710. The numerical value represented by L is the thickness of the gas permeable membrane 710.

<Initial Filling>

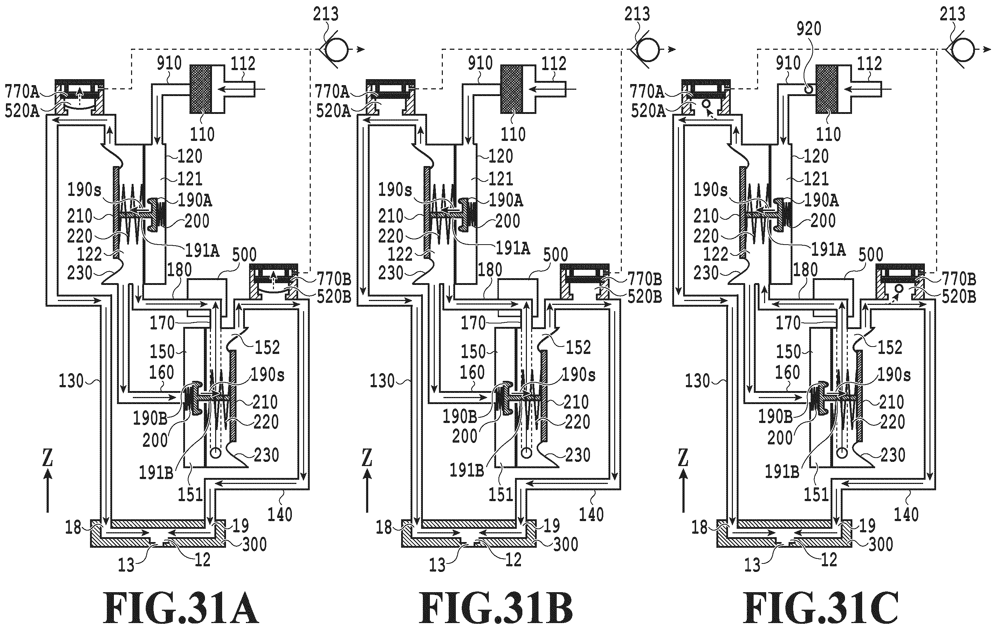

Figs. 31A to 31C are schematic views illustrating initial filling and operation of the bubble discharge units. Fig. 31A is a schematic view illustrating ink flows and remaining bubbles during the initial filling of the ink into the liquid ejection head 1. The initial filling is performed by bringing the cap member into tight contact with the ejection port surface of the liquid ejection head 1, in which the ejection ports are formed, and forcibly sucking in the ink from ejection ports. At this time, a negative pressure from a negative pressure source connected to the cap member is applied to the ejection ports to forcibly suck in the ink from the ejection ports. In the case of performing the initial filling, a small amount of bubbles may adhere to and remain on a wall or the like if a spot where the ink flow stagnates has been formed due to variations in the molding or assembly of parts. The suction operation includes normal suction, choke suction, and the like, and the filled state of the bubble discharge units changes depending on the method of the suction operation. In the normal suction, the suction is not preceded by any special operation. Hence, in the ink channel illustrated in Fig. 31A, the ink is supplied from an upstream side of the ink channel, resulting in a gas-liquid exchange, so that most part of the ink channel is filled with the ink. However, the gas-liquid exchange does not occur at the portions of the bubble accumulation chamber 520 (first bubble accumulation chamber 520A and second bubble accumulation chamber 520B) since they are not ink channels. Consequently, bubbles remain in most part of the bubble accumulation chambers 520. In the choke suction, the channel upstream of the ink channel is closed by means of a valve or the like, followed by a suction operation to sufficiently depressurize the entire liquid ejection head 1. Thereafter, the valve on the upstream side is opened to force the ink into the liquid ejection head 1 from the upstream side of the ink channel. In this way, in the ink channel illustrated in Fig. 31A, most part of the ink channel is filled with the ink, as in the normal suction. The amount of the ink to be filled into the bubble accumulation chambers 520 increases the higher the degree of depressurization achieved by the suction operation. For example, the ink would be filled up to about half of the bubble accumulation chambers 520 in a case of performing the choke suction at -50 kPa (gauge pressure).

<Operation of Bubble Discharge Units>

Fig. 31B is a schematic view illustrating the state of the inside of the circulation unit after the initial filling. Fig. 31C is a schematic view illustrating a state where bubbles have remained after the initial filling. The state after the initial filling is such that bubbles have been accumulated in each bubble accumulation chamber 520 (first bubble accumulation chamber 520A and second bubble accumulation chamber 520B). For this reason, the depressurization chamber 760 is brought into a depressurized state to discharge the bubbles. Due to constant gas permeation through the unit housing or the side film from the outside, a bubble discharge operation suitable for the product's bubble design needs to be performed on the bubble accumulation chamber 520. The depressurization chamber 760 shifts to the depressurized state by being depressurized through the second communication port 761 by the ink supply unit 400 in the main body part of the liquid ejection apparatus 50. The higher the degree of depressurization, the larger the amount of bubble permeation. Thus, the degree of depressurization is desirably set to at least 10 kPa or higher in order to achieve an amount of bubble permeation that is sufficient for processing bubbles that are formed during normal use. Also, in a case where the degree of depressurization is set to be extremely high, there is a possibility that the gas permeable membrane 710 may greatly deform toward the depressurization chamber 760 and the gas permeable membrane 710 may be detached at its welded portion. For this reason, it is desirable to set the degree of depressurization to about 70 kPa or lower. Also, the ink supply unit 400 uses a pressurizing unit on an upstream channel (e.g., the unidirectional pump 404 described earlier) also for depressurizing the depressurization chamber 760. For this reason, the degree of depressurization of the depressurization chamber 760 is affected by the operation or output of that pressurization unit. As can be understood from the above description, the degree of depressurization with which a sufficient amount of bubble permeation can be achieved and the reliability of the gas permeable membrane 710 is high and which is appropriate for the operation of the ink supply unit 400 is desirably about 50 kPa. The depressurization chamber 760 can be maintained in a depressurized state by continuously putting the liquid ejection apparatus 50 in operation. In a case of not putting the main body part of the liquid ejection apparatus 50 into operation, the third check valve 213, which is provided between the second communication port 761 (see Fig. 27A) and the ink supply unit 400, is used. The third check valve 213 tightly closes the depressurization chamber 760 when the depressurization chamber 760 reach a certain degree of depressurization. In this way, even in the case where the main body part of the liquid ejection apparatus 50 is not in operation, the depressurization chamber 760 is maintained in a depressurized state, so that a bubble discharge operation will be continued. This makes it possible to handle bubbles that increase, for example, due to the apparatus being left unused for a long period of time or due to other events. As illustrated in Fig. 31A, each depressurization chamber 760 is depressurized by the ink supply unit 400 after the initial filling, and the depressurized state is maintained by the third check valve 213, thereby causing the bubbles in the bubble accumulation chamber 520 to permeate. As a result, the bubbles are discharged from the ink. In a case where an ejection operation is performed, the ink flows in from the upstream side, and bubbles present on the upstream side also flow in at the same time. Moreover, unexpected bubbles which are small amounts of bubbles remaining at stagnant portions of the ink flow in the initial filling and the like are also caused to flow through the channel by the ejection operation and a circulation operation. As illustrated in Fig. 31C, the bubbles can be trapped in each bubble discharge unit 770 through its first communication port 751 (see Fig. 27A) with the bubbles' buoyancy, and the bubbles can be discharged from the ink by performing a bubble discharge operation with the depressurization chamber 760 depressurized. By repeating this bubble discharge operation, bubbles that newly form during normal use will not flow into the pressure chambers 12. This reduces the possibility of ejection failures. In the case of maintaining the depressurization chamber 760 in a depressurized state with the third check valve 213, performing a bubble discharge operation decreases the degree of depressurization of the depressurization chamber 760 due to the permeation of bubbles into the depressurization chamber 760. Accordingly, the efficiency of bubble discharge decreases. The amount of decrease in the degree of depressurization is represented by Equation (6) below.

$$(p2 \times Q + p1 \times Q1) / v \ldots (6)$$

p1: Atmospheric pressure (absolute pressure)
p2: Bubble internal pressure (absolute pressure)
v: Volume of the depressurization chamber 760
Q1: Amount of permeation from the outside

The bubble internal pressure represented by p2 is equal to the pressure on the ink. The larger the volume of the depressurization chamber 760 represented by v, the smaller the amount of decrease in the degree of depressurization by a bubble discharge operation, and the greater the extent to which the decrease in the efficiency of bubble discharge will be suppressed. The amount of permeation from the outside represented by Q1 is the amount of permeation of a gas into the depressurization chamber 760 from the outside, and is determined by the material of the unit housing forming the depressurization chamber 760, the surface area of the portion of the unit housing in contact with the air on the outside, and the thickness of the unit housing.

In the case where the degree of depressurization of the depressurization chamber 760 decreases, the third check valve 213 and the ink supply unit 400 can be caused to operate so as to increase the degree of depressurization of the depressurization chamber 760 to maintain the efficiency of bubble discharge. Note that a timer may be used to regularly perform the operation of increasing the degree of depressurization (e.g., the bubble discharge depressurization operation described earlier). The degree of depressurization of the depressurization chamber 760 may be detected with a sensor to perform the operation of increasing the degree of depressurization in response to a predetermined decrease in the degree of depressurization as a trigger. When the gas permeable membrane 710 deforms toward the depressurization chamber 760 in response to the depressurization chamber 760 becoming depressurized, the deformation suppression member 720 contacts the gas permeable membrane 710 from the depressurization chamber 760 side. The deformation suppression member 720 suppresses the deformation of the gas permeable membrane 710 by holding the gas permeable membrane 710 in such a direction as to suppress the deformation of the gas permeable membrane 710. Suppressing the deformation of the gas permeable membrane 710 reduces the load on the welded portion of the gas permeable membrane 710 and thus lowers the possibility of detachment of the gas permeable membrane 710.

In the present embodiment, the operation of each bubble discharge unit has been described with a configuration, as an example, in which the bubble discharge unit 770 (first bubble discharge unit 770A and second bubble discharge unit 770B) has the bubble accumulation chamber 520 (first bubble accumulation chamber 520A and second bubble accumulation chamber 520B), but the configuration is not limited to this. In a case where a portion between the pressure chambers 12 and the depressurization chamber 760 is provided as a liquid reservoir chamber to hold the liquid (ink) to be supplied to the pressure chambers 12, the configuration may be such that bubbles accumulate in part of the liquid reservoir chamber. In this case, a gas permeable membrane is formed at such a position as to abut the liquid reservoir chamber, and the depressurization chamber adjoins the liquid reservoir chamber with the gas permeable membrane therebetween.

Note that the configuration of the circulation paths in the present embodiment is not limited to the configuration described above. Thus, a first configuration example and a second configuration example of an ink path and modifications of a circulation path will now be described as other configurations of the circulation paths.

<First Configuration Example of Ink Path>

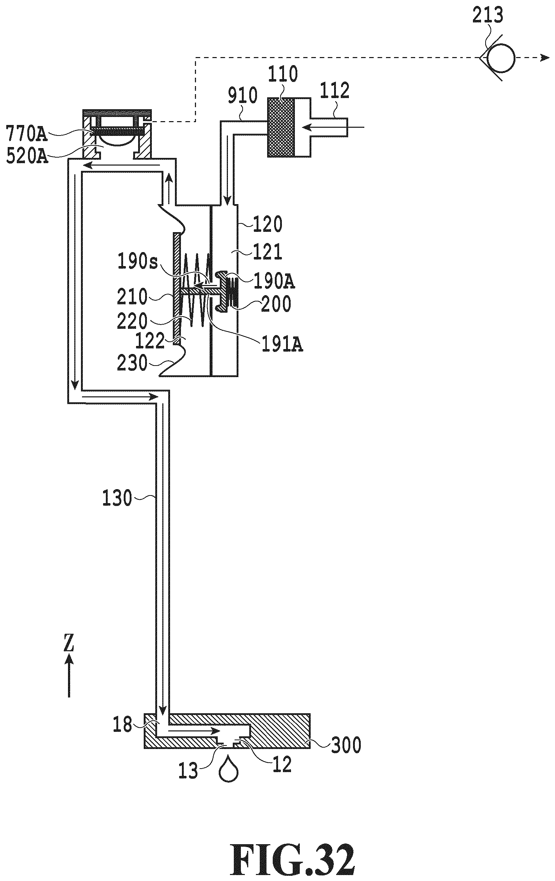

Fig. 32 is a view schematically illustrating the first configuration example of an ink path. The first configuration example of the ink path represents an example in which the second pressure adjustment unit 150, the second bubble accumulation chamber 520B, the circulation pump 500, the bypass channel 160, and the first collection channel 140 are not disposed. In the first configuration example of the ink path, the ink is not circulated. The ink supplied from the second supply path 112 flows sequentially through the first pressure adjustment unit 120, the supply channel 130, and the pressure chambers 12 and is ejected from the ejection ports 13. The pressures in the first pressure control chamber 122, the supply channel 130, and the pressure chambers 12 are controlled by the first pressure adjustment unit 120. Thus, stable ink ejection is achieved.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. In this way, bubbles included in the ink in the first pressure adjustment unit 120, the supply channel 130, or the like as a result of ejection operations will be trapped in the first bubble accumulation chamber 520A and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chamber 520 and with which a sufficient bubble discharge rate can be achieved. This significantly lowers the possibility of bubbles entering the ejection ports 13.

The first bubble discharge unit 770A communicates with the ink supply unit 400 in the main body part of the liquid ejection apparatus 50, and is depressurized by an operation of the ink supply unit 400. Further, the third check valve 213 is provided between the bubble discharge unit 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided on the third air channel 113 between the first bubble discharge unit 770A and the ink supply unit 400.

Two or more bubble accumulation chambers 520 and bubble discharge units 770 may be provided. Also, the bubble accumulation chamber 520 and the bubble discharge unit 770 do not need to be provided on the supply channel 130. For example, the bubble accumulation chamber 520 and the bubble discharge unit 770 may be provided on a vertically upper side of the ink tank 2, the first supply path 111, the second supply path 112, the third supply path 910, the filter 110, the pressure chambers 12, or the like. Also, the bubble accumulation chamber 520 and the bubble discharge unit 770 do not necessarily have to be provided on a vertically upper side of a fluid communication portion, such as the supply channel 130. The bubble accumulation chamber 520 may communicate with a side surface of the fluid communication portion and the bubble discharge unit 770 may be formed so as to extend on a lateral side of the bubble accumulation chamber 520, as long as they are configured to be capable of trapping bubbles and bringing them into contact with the gas permeable membrane. This also applies to a case where the bubble accumulation chamber 520 and the bubble discharge unit 770 are provided at a plurality of portions of fluid communication portions other than the supply channel 130 and the first collection channel 140.

<First Modification of Circulation Path>

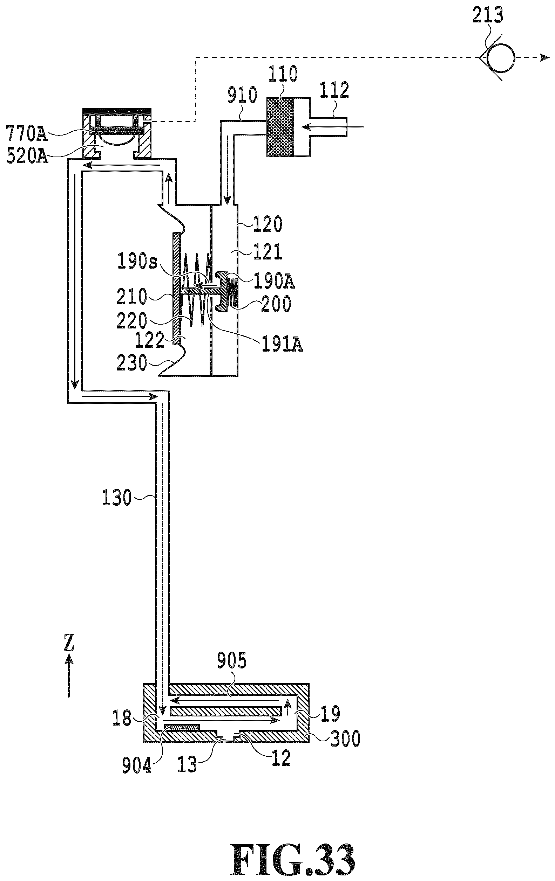

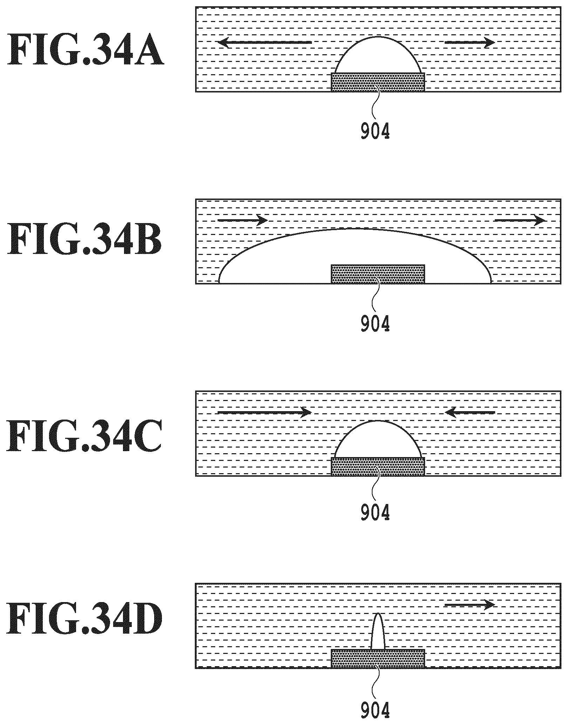

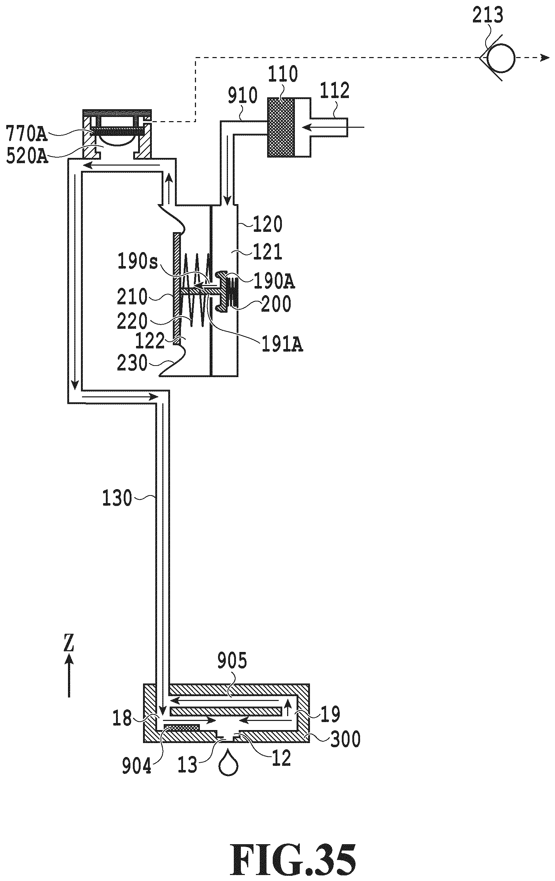

Figs. 33 and 35 are views schematically illustrating a first modification of a circulation path. Fig. 33 illustrates the circulation path in a case of performing circulation without performing ejection. Fig. 35 illustrates the circulation path in a case of performing high-duty printing. Also, Figs. 34A to 34D are views schematically illustrating the vicinity of a heating-type circulation pump 904. Figs. 34A to 34D illustrate an overview of the sending of the liquid by the heating-type circulation pump 904.

The first modification of the circulation path represents an example in which the second pressure adjustment unit 150, the second bubble accumulation chamber 520B, the circulation pump 500, the bypass channel 160, and the first collection channel 140 are not disposed. Also, the first modification of the circulation path represents an example where the heating-type circulation pump 904 provided between the supply channel 130 and the pressure chambers 12 and a second collection channel 905 through which the pressure chambers 12 and the supply channel 130 communicate with each other are disposed in place of the circulation pump 500 and the like. In the first modification of the circulation path, during circulation as illustrated in Fig. 33, the ink is circulated inside the ejection module 300 by the heating-type circulation pump 904. Also, during an ejection operation as illustrated in Fig. 35, the ink supplied from the second supply path 112 flows sequentially through the first pressure adjustment unit 120, the supply channel 130 or the second collection channel 905, and the pressure chambers 12 and is ejected from the ejection ports 13. Note that, in a case of performing high-duty printing, the ink in the second collection channel 905 flows in the opposite direction from that during circulation, so that the ink is supplied to the pressure chambers 12 and the ejection ports 13 from both the supply channel 130 and the second collection channel 905. The pressures in the first pressure control chamber 122, the supply channel 130, and the pressure chambers 12 are controlled by the first pressure adjustment unit 120. Thus, stable ink ejection is achieved.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. **In** this way, bubbles included in the ink in the first pressure adjustment unit 120, the supply channel 130, the second collection channel 905, and the like as a result of circulation and ejection operations will be trapped in the bubble accumulation chamber 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chamber 520 and with which a sufficient bubble discharge rate can be achieved. This significantly lowers the possibility of bubbles entering the ejection ports 13.

The first bubble discharge unit 770A communicates with the ink supply unit 400 in the main body part of the liquid ejection apparatus 50, and is depressurized by an operation of the ink supply unit 400. Further, the third check valve 213 is provided between the bubble discharge unit 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided on the third air channel 113 between the first bubble discharge unit 770A and the ink supply unit 400.

Two or more bubble accumulation chambers 520 and bubble discharge units 770 may be provided. Also, the bubble accumulation chamber 520 and the bubble discharge unit 770 do not need to be provided on the supply channel 130. For example, the bubble accumulation chamber 520 and the bubble discharge unit 770 may be provided on a vertically upper side of the ink tank 2, the first supply path 111, the second supply path 112, the third supply path 910, the filter 110, the pressure chambers 12, the second collection channel 905, or the like. Also, the bubble accumulation chamber 520 and the bubble discharge unit 770 do not necessarily have to be provided on a vertically upper side of a fluid communication portion, such as the supply channel 130. The bubble accumulation chamber 520 may communicate with a side surface of the fluid communication portion and the bubble discharge unit 770 may be formed so as to extend on a lateral side of the bubble accumulation chamber 520, as long as they are configured to be capable of trapping bubbles and bringing them into contact with the gas permeable membrane. This also applies to a case where the bubble accumulation chamber 520 and the bubble discharge unit 770 are provided at a plurality of portions of fluid communication portions other than the supply channel 130 and the first collection channel 140.

The heating-type circulation pump 904 is constructed using a heater member capable of heating the ink, and generates a bubble at its heater portion by heating the ink to send the ink. First, as illustrated in Fig. 34A, the ink is abruptly heated by the heater member forming the heating-type circulation pump 904, so that a bubble is generated and expands by film boiling. The amount of expansion of the bubble at this time is different between the upstream side and the downstream side of the ink. Then, as illustrated in Fig. 34B, the heating by the heater is stopped when the bubble expands to a certain level. Then, as illustrated in Fig. 34C, the bubble shrinks as a result of stopping the heating. The amount of shrinkage of the bubble at this time is different between the upstream side and the downstream side of the ink. Lastly, as illustrated in Fig. 34D, the bubble completely shrinks and collapses, thereby generating an ink flow from the upstream side toward the downstream side. The steps illustrated in Figs. 34A to 34D are repeated to steadily generate an ink flow from the supply channel 130 toward the second collection channel 905 through the pressure chambers 12. Note that the heating-type circulation pump 904 does not need to be provided between the supply channel 130 and the pressure chambers 12, and may be provided between the pressure chambers 12 and the second collection channel 905.

<Second Modification of Circulation Path>

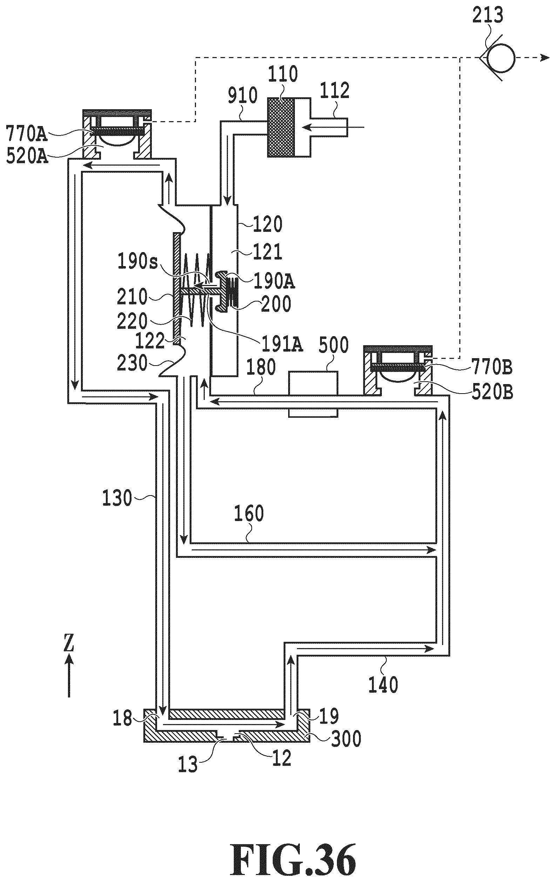

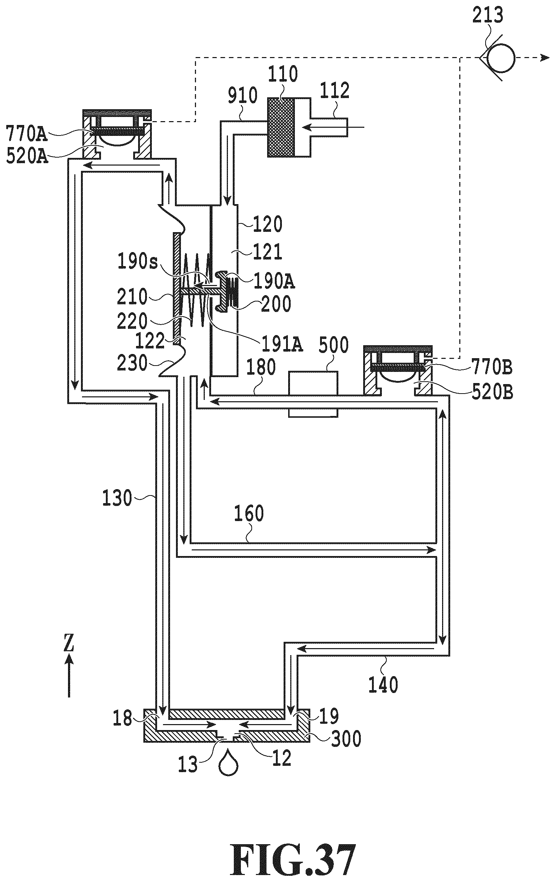

Figs. 36 and 37 are views schematically illustrating a second modification of a circulation path. Fig. 36 illustrates the circulation path in a case of performing circulation without performing ejection. Fig. 37 illustrates the circulation path in a case of performing high-duty printing. The second modification of the circulation path represents an example in which the second pressure adjustment unit 150 is not disposed, and the bypass channel 160 and the first collection channel 140 are directly connected to each other.

In the second modification of the circulation path, the channel resistance of a channel through which the ink flows to the first collection channel 140 through the bypass channel 160 is denoted as R1, and the channel resistance of a channel through which the ink flows to the first collection channel 140 from the supply channel 130 through the ejection module 300 will be denoted as R2. The flow rate of the ink flowing through each channel is in inverse ratio to the channel resistance. For this reason, the ratio between the flow rate of the ink through the channel passing through the bypass channel 160 and the flow rate of the ink through the channel passing through the ejection module 300 is R2 to R1. Based on this relationship, each channel resistance is set to obtain an amount of circulation that can suppress thickening of the ink near the ejection ports 13 in the ejection module 300. Specifically, each channel resistance is set such that the flow velocity of the ink in the pressure chambers 12 will be a predetermined flow velocity or more. The channel resistance R1 of the channel passing through the bypass channel 160 is controlled by, for example, changing the channel's cross-sectional area or the channel's length or providing the channel with a constriction.

In the second modification of the circulation path too, in a case of performing a high-duty print operation, the ink is supplied to each pressure chamber 12 from both sides, as illustrated in Fig. 37. Specifically, the ink supplied to the supply channel 130 from the first pressure control chamber 122 is supplied to the ejection ports 13 through the common supply channels 18 in the ejection module 300. On the other hand, part of the ink supplied to the bypass channel 160 from the first pressure control chamber 122 is supplied to the first pressure control chamber 122 through the circulation pump 500 and the pump outlet channel 180. Also, part of the ink supplied to the bypass channel 160 is supplied to the first collection channel 140 and then supplied to the ejection ports 13 through the common collection channels 19 in the ejection module 300. Thus, the ink to be ejected from the ejection ports 13 is supplied from both the supply channel 130 and the first collection channel 140.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. Also, the second bubble accumulation chamber 520B is provided on a vertically upper side of the first collection channel 140 so as to be in fluid communication with the first collection channel 140, and the second bubble discharge unit 770B is formed so as to extend vertically upward from the second bubble accumulation chamber 520B. In this way, bubbles included in the ink in the first pressure adjustment unit 120, the supply channel 130, the first collection channel 140, and the like as a result of circulation and ejection operations will be trapped in the bubble accumulation chambers 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chambers 520 and with which a sufficient bubble discharge rate can be achieved. This significantly lowers the possibility of bubbles entering the ejection ports 13.

The first bubble discharge unit 770A and the second bubble discharge unit 770B communicate with the ink supply unit 400 in the main body part of the liquid ejection apparatus 50 and are depressurized by an operation of the ink supply unit 400. Further, the third check valve 213 is provided between the bubble discharge units 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided at each of the branching portions of the third air channel 113 between the ink supply unit 400 and the first and second bubble discharge units 770A and 770B. The third check valve 213 may be provided at the merged portion of the third air channel 113 between the ink supply unit 400 and the first and second bubble discharge units 770A and 770B.

The bubble accumulation chambers 520 and the bubble discharge units 770 do not need to be provided on the two channels, namely the supply channel 130 and the first collection channel 140, and may be provided only on the supply channel 130 or provided only on the first collection channel 140. Also, three or more bubble accumulation chambers 520 and bubble discharge units 770 may be provided. The bubble accumulation chambers 520 and the bubble discharge units 770 do not need to be provided on the supply channel 130 or the first collection channel 140. For example, a bubble accumulation chamber 520 and a bubble discharge unit 770 may be provided on a vertically upper side of the ink tank 2, the first supply path 111, the second supply path 112, the third supply path 910, or the like. A bubble accumulation chamber 520 and a bubble discharge unit 770 may be provided on a vertically upper side of the filter 110, the pump outlet channel 180, the bypass channel 160, the pressure chambers 12, or the like. Also, the bubble accumulation chambers 520 and the bubble discharge units 770 do not necessarily have to be provided on vertically upper sides of fluid communication portions, such as the supply channel 130. The bubble accumulation chambers 520 may communicate with side surfaces of the fluid communication portions and the bubble discharge units 770 may be formed so as to extend on lateral sides of the bubble accumulation chambers 520, as long as they are configured to be capable of trapping bubbles and bringing them into contact with the gas permeable membranes. This also applies to a case where the bubble accumulation chambers 520 and the bubble discharge units 770 are provided at a plurality of portions of fluid communication portions other than the supply channel 130 and the first collection channel 140.

<Third Modification of Circulation Path>

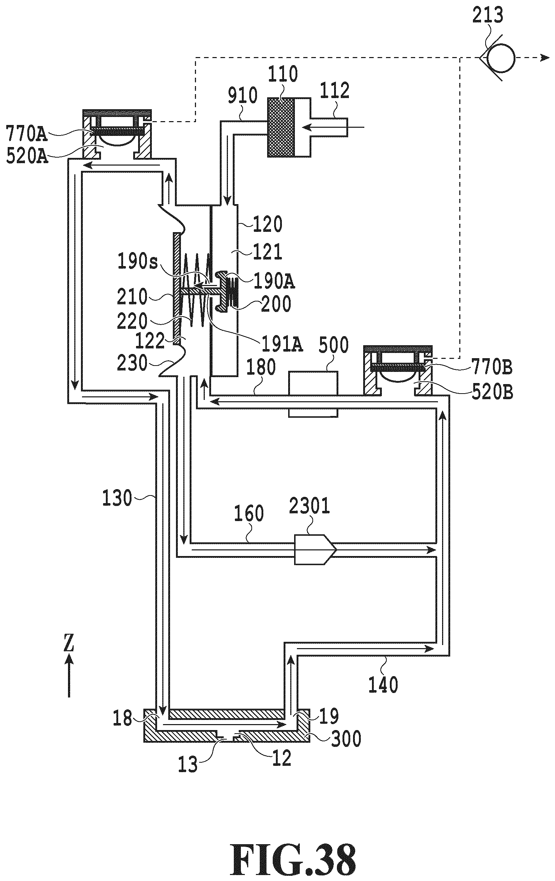

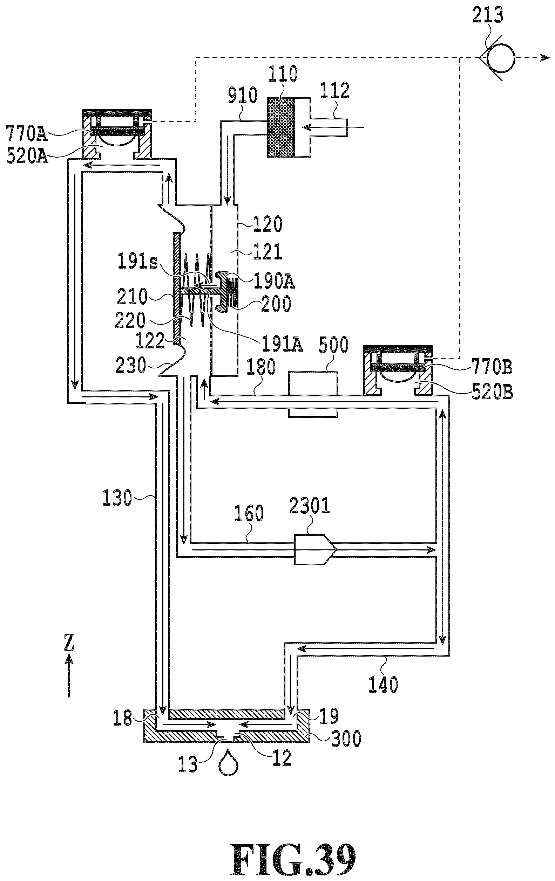

Figs. 38 and 39 are views schematically illustrating a third modification of a circulation path. Fig. 38 illustrates the circulation path in a case of performing circulation without performing ejection. Fig. 39 illustrates the circulation path in a case of performing high-duty printing. The third modification of the circulation path represents an example in which the second pressure adjustment unit 150 is not disposed, the bypass channel 160 and the first collection channel 140 are directly connected to each other, and a relief valve 2301 is disposed in the bypass channel 160.

The relief valve 2301 is configured such that the ink flows into the relief valve 2301 from the upstream side toward the downstream side of the relief valve 2301 in a case where the pressure on the ink downstream of the relief valve 2301 reaches a certain value or less. Specifically, the relief valve 2301 is configured to open in a case where the pressure on the ink on the collection channel side of the relief valve 2301 becomes lower than the pressure on the ink on the supply channel side of the relief valve 2301 to the certain value or less. The flow of the ink in the third modification of the circulation path is basically the same as in the case where the second pressure adjustment unit 150 is disposed, as illustrated in Figs. 38 and 39. The differential pressure between the controlled pressure in the first pressure control chamber 122 and the controlled pressure in the relief valve 2301 determines the amount of circulation within the ejection module 300. The controlled pressure in the relief valve 2301 is set to obtain an amount of circulation that can suppress thickening of the ink in the vicinity of the ejection ports 13 in the ejection module 300.

In the third modification of the circulation path too, in a case of performing a high-duty print operation, the ink is supplied to each pressure chamber 12 from both sides, as illustrated in Fig. 39. Specifically, the ink supplied to the supply channel 130 from the first pressure control chamber 122 is supplied to the ejection ports 13 through the common supply channels 18 in the ejection module 300. On the other hand, part of the ink supplied to the bypass channel 160 from the first pressure control chamber 122 passes through the relief valve 2301 and is supplied to the first pressure control chamber 122 through the circulation pump 500 and the pump outlet channel 180. Also, part of the ink supplied to the bypass channel 160 passes through the relief valve 2301, is supplied to the first collection channel 140, and is then supplied to the ejection ports 13 through the common collection channels 19 in the ejection module 300. Thus, the ink to be ejected from the ejection ports 13 is supplied from both the supply channel 130 and the first collection channel 140.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. Also, the second bubble accumulation chamber 520B is provided on a vertically upper side of the first collection channel 140 so as to be in fluid communication with the first collection channel 140, and the second bubble discharge unit 770B is formed so as to extend vertically upward from the second bubble accumulation chamber 520B. In this way, bubbles included in the ink in the first pressure adjustment unit 120, the supply channel 130, the first collection channel 140, and the like as a result of circulation and ejection operations will be trapped in the bubble accumulation chambers 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chambers 520 and with which a sufficient bubble discharge rate can be achieved. This significantly lowers the possibility of bubbles entering the ejection ports 13.

The first bubble discharge unit 770A and the second bubble discharge unit 770B communicate with the ink supply unit 400 in the main body part of the liquid ejection apparatus 50 and are depressurized by an operation of the ink supply unit 400. Further, the third check valve 213 is provided between the bubble discharge units 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided at each of the branching portions of the third air channel 113 between the ink supply unit 400 and the first and second bubble discharge units 770A and 770B. The third check valve 213 may be provided at the merged portion of the third air channel 113 between the ink supply unit 400 and the first and second bubble discharge units 770A and 770B.

The bubble accumulation chambers 520 and the bubble discharge units 770 do not need to be provided on the two channels, namely the supply channel 130 and the first collection channel 140, and may be provided only on the supply channel 130 or provided only on the first collection channel 140. Also, three or more bubble accumulation chambers 520 and bubble discharge units 770 may be provided. The bubble accumulation chambers 520 and the bubble discharge units 770 do not need to be provided on the supply channel 130 or the first collection channel 140. For example, a bubble accumulation chamber 520 and a bubble discharge unit 770 may be provided on a vertically upper side of the ink tank 2, the first supply path 111, the second supply path 112, the third supply path 910, or the like. A bubble accumulation chamber 520 and a bubble discharge unit 770 may be provided on a vertically upper side of the filter 110, the pump outlet channel 180, the bypass channel 160, the pressure chambers 12, or the like. Also, the bubble accumulation chambers 520 and the bubble discharge units 770 do not necessarily have to be provided on vertically upper sides of fluid communication portions, such as the supply channel 130. The bubble accumulation chambers 520 may communicate with side surfaces of the fluid communication portions and the bubble discharge units 770 may be formed so as to extend on lateral sides of the bubble accumulation chambers 520, as long as they are configured to be capable of trapping bubbles and bringing them into contact with the gas permeable membranes. This also applies to a case where the bubble accumulation chambers 520 and the bubble discharge units 770 are provided at a plurality of portions of fluid communication portions other than the supply channel 130 and the first collection channel 140.

<Second Configuration Example of Ink Path>

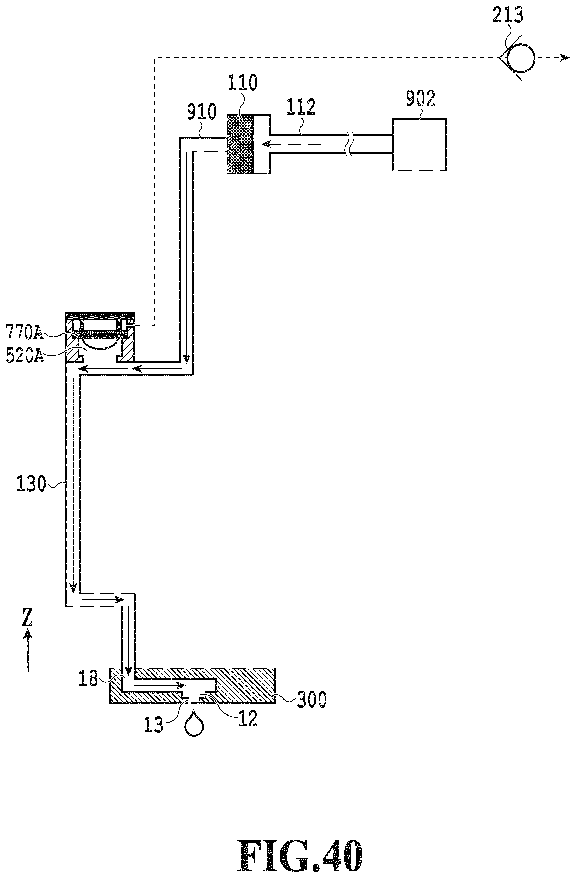

Fig. 40 is a view schematically illustrating a second configuration example of an ink path. The second configuration example of the ink path represents an example in which the first pressure adjustment unit 120, the second pressure adjustment unit 150, the second bubble accumulation chamber 520B, the circulation pump 500, the bypass channel 160, and the first collection channel 140 are not disposed. Also, the second configuration example of the ink path represents an example in which a third pressure adjustment unit 902 communicating with the second supply path 112 is disposed in place of the first pressure adjustment unit 120, the second pressure adjustment unit 150, and the like. In the second configuration example of the ink path, the ink is not circulated. The ink supplied from the second supply path 112 flows sequentially through the supply channel 130 and the pressure chambers 12 and is ejected from the ejection ports 13. The pressures in the second supply path 112, the third supply path 910, the supply channel 130, and the pressure chambers 12 are controlled the third pressure adjustment unit 902. Thus, stable ink ejection is achieved.

The third pressure adjustment unit 902 is disposed outside the liquid ejection head 1 and communicates with the third supply path 910 in the liquid ejection head 1 through the second supply path 112. The third pressure adjustment unit 902 is, for example, of a hydraulic head type utilizing a hydraulic head difference but any types can be employed. **In** this modification, ink supply types such as the ink cartridge type and the continuous ink supply system (CISS) type can be employed as well.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. In this way, bubbles included in the supply channel 130, or the like as a result of ejection operations will be trapped in the bubble accumulation chamber 520A and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chamber 520 and with which a sufficient bubble discharge rate can be achieved. This significantly lowers the possibility of bubbles entering the ejection ports 13.

The first bubble discharge unit 770A communicates with the ink supply unit 400 in the main body part of the liquid ejection apparatus 50, and is depressurized by an operation of the ink supply unit 400. Further, the third check valve 213 is provided between the bubble discharge unit 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided on the third air channel 113 between the first bubble discharge unit 770A and the ink supply unit 400.

Two or more bubble accumulation chambers 520 and bubble discharge units 770 may be provided. Also, the bubble accumulation chamber 520 and the bubble discharge unit 770 do not need to be provided on the supply channel 130. For example, the bubble accumulation chamber 520 and the bubble discharge unit 770 may be provided on a vertically upper side of the ink tank 2, the first supply path 111, the second supply path 112, the third supply path 910, the filter 110, the pressure chambers 12, or the like. Also, the bubble accumulation chamber 520 and the bubble discharge unit 770 do not necessarily have to be provided on a vertically upper side of a fluid communication portion, such as the supply channel 130. The bubble accumulation chamber 520 may communicate with a side surface of the fluid communication portion and the bubble discharge unit 770 may be formed so as to extend on a lateral side of the bubble accumulation chamber 520, as long as they are configured to be capable of trapping bubbles and bringing them into contact with the gas permeable membrane. This also applies to a case where the bubble accumulation chamber 520 and the bubble discharge unit 770 are provided at a plurality of portions of fluid communication portions other than the supply channel 130 and the first collection channel 140.

<Fourth Modification of Circulation Path>

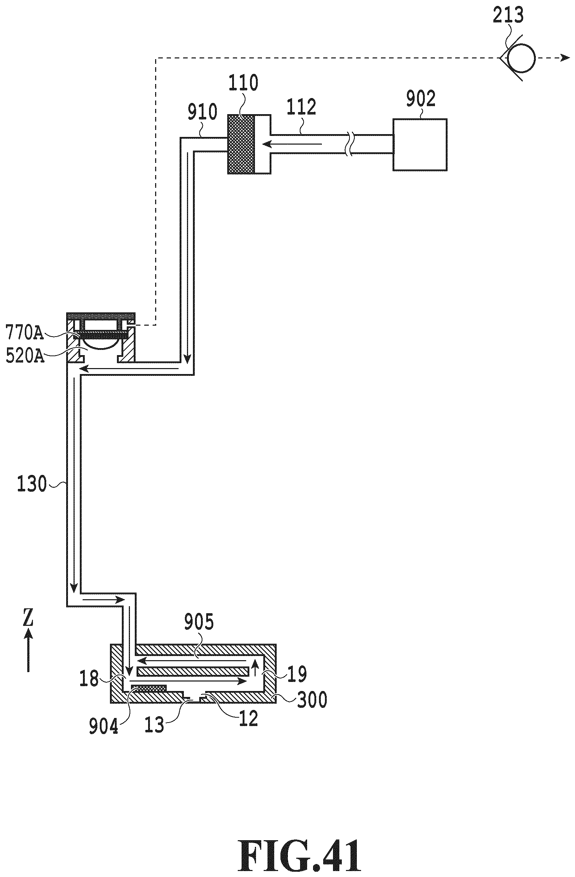

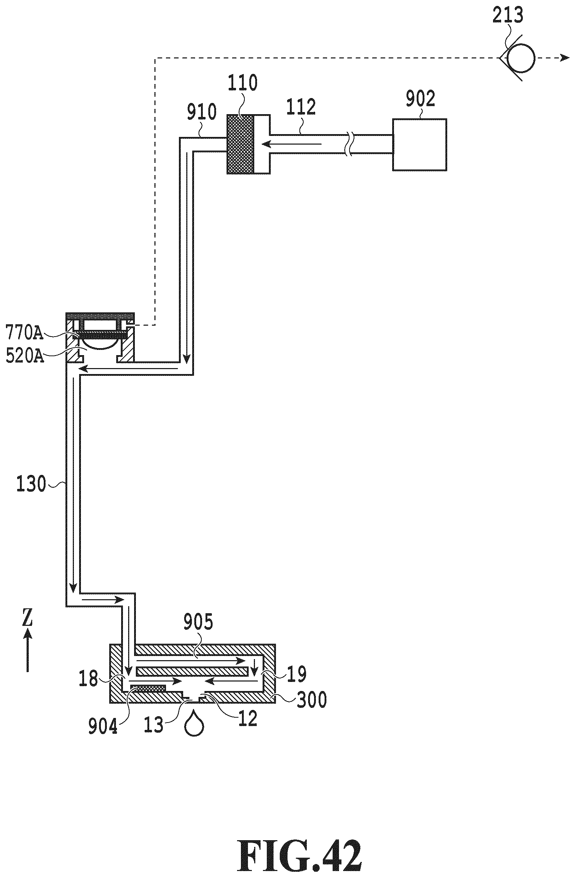

Figs. 41 and 42 are views schematically illustrating a fourth modification of a circulation path. Fig. 41 illustrates the circulation path in a case of performing circulation without performing ejection. Fig. 42 illustrates the circulation path in a case of performing high-duty printing. The fourth modification of the circulation path represents an example in which the first pressure adjustment unit 120, the second pressure adjustment unit 150, the second bubble accumulation chamber 520B, the circulation pump 500, the bypass channel 160, and the first collection channel 140 are not disposed. Also, the fourth modification of the circulation path represents an example where there are disposed a third pressure adjustment unit 902 communicating with the second supply path 112, a heating-type circulation pump 904 provided between the supply channel 130 and the pressure chambers 12, and a second collection channel 905 through which the pressure chambers 12 and the supply channel 130 communicate with each other. In the fourth modification of the circulation path, the ink flows similarly to Figs. 33 and 35. The pressures in the second supply path 112, the third supply path 910, the supply channel 130, and the pressure chambers 12 are controlled the third pressure adjustment unit 902. Thus, stable ink ejection is achieved.

The third pressure adjustment unit 902 is disposed outside the liquid ejection head 1 and communicates with the third supply path 910 in the liquid ejection head 1 through the second supply path 112. The third pressure adjustment unit 902 is, for example, of a hydraulic head type utilizing a hydraulic head difference but any types can be employed. In this modification, ink supply types such as the ink cartridge type and the continuous ink supply system (CISS) type can be employed as well.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. In this way, bubbles included in the ink in the first pressure adjustment unit 120, the supply channel 130, the second collection channel 905, and the like as a result of circulation and ejection operations will be trapped in the bubble accumulation chamber 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chamber 520 and with which a sufficient bubble discharge rate can be achieved. This significantly lowers the possibility of bubbles entering the ejection ports 13.

The first bubble discharge unit 770A communicates with the ink supply unit 400 in the main body part of the liquid ejection apparatus 50, and is depressurized by an operation of the ink supply unit 400. Further, the third check valve 213 is provided between the bubble discharge unit 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided on the third air channel 113 between the first bubble discharge unit 770A and the ink supply unit 400.

Two or more bubble accumulation chambers 520 and bubble discharge units 770 may be provided. Also, the bubble accumulation chamber 520 and the bubble discharge unit 770 do not need to be provided on the supply channel 130. For example, the bubble accumulation chamber 520 and the bubble discharge unit 770 may be provided on a vertically upper side of the ink tank 2, the first supply path 111, the second supply path 112, the third supply path 910, the filter 110, the pressure chambers 12, the second collection channel 905, or the like. Also, the bubble accumulation chamber 520 and the bubble discharge unit 770 do not necessarily have to be provided on a vertically upper side of a fluid communication portion, such as the supply channel 130. The bubble accumulation chamber 520 may communicate with a side surface of the fluid communication portion and the bubble discharge unit 770 may be formed so as to extend on a lateral side of the bubble accumulation chamber 520, as long as they are configured to be capable of trapping bubbles and bringing them into contact with the gas permeable membrane. This also applies to a case where the bubble accumulation chamber 520 and the bubble discharge unit 770 are provided at a plurality of portions of fluid communication portions other than the supply channel 130 and the first collection channel 140.

The heating-type circulation pump 904 sends the ink by performing an operation similar to that in Figs. 34A to 34D. Note that the heating-type circulation pump 904 does not need to be provided between the supply channel 130 and the pressure chambers 12, and may be provided between the pressure chambers 12 and the second collection channel 905.

<Fifth Modification of Circulation Path>

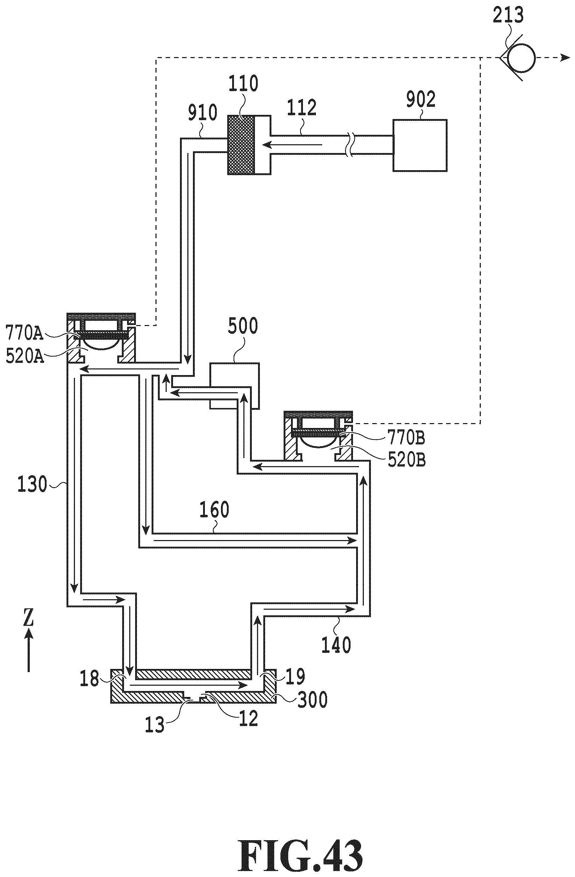

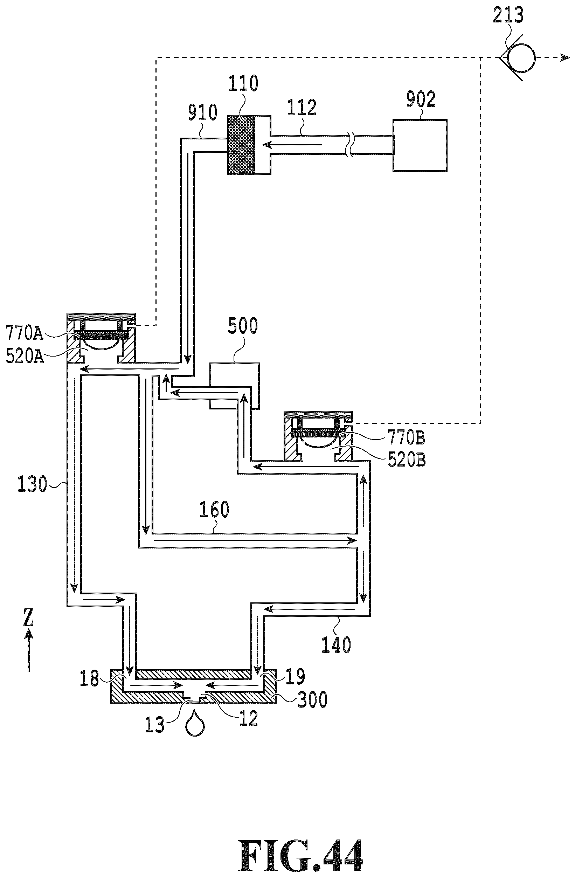

Figs. 43 and 44 are views schematically illustrating a fifth modification of a circulation path. Fig. 43 illustrates the circulation path in a case of performing circulation without performing ejection. Fig. 44 illustrates the circulation path in a case of performing high-duty printing. The fifth modification of the circulation path represents an example in which the first pressure adjustment unit 120 and the second pressure adjustment unit 150 are not disposed, and the bypass channel 160 and the first collection channel 140 are directly connected to each other.

In the fifth modification of the circulation path, the channel resistance of a channel through which the ink flows to the first collection channel 140 through the bypass channel 160 is denoted as R1, and the channel resistance of a channel through which the ink flows to the first collection channel 140 from the supply channel 130 through the ejection module 300 will be denoted as R2. The flow rate of the ink flowing through each channel is in inverse ratio to the channel resistance. For this reason, the ratio between the flow rate of the ink through the channel passing through the bypass channel 160 and the flow rate of the ink through the channel passing through the ejection module 300 is R2 to R1. Based on this relationship, each channel resistance is set to obtain an amount of circulation that can suppress thickening of the ink near the ejection ports 13 in the ejection module 300. Specifically, each channel resistance is set such that the flow velocity of the ink in the pressure chambers 12 will be a predetermined flow velocity or more. The channel resistance R1 of the channel passing through the bypass channel 160 is controlled by, for example, changing the channel's cross-sectional area or the channel's length or providing the channel with a constriction.

In the fifth modification of the circulation path too, in a case of performing a high-duty print operation, the ink is supplied to each pressure chamber 12 from both sides, as illustrated in Fig. 44. Specifically, the ink supplied to the supply channel 130 from the third supply path 910 is supplied to the ejection ports 13 of the ejection module 300. On the other hand, part of the ink supplied to the bypass channel 160 from the third supply path 910 is supplied to the third supply path 910 through the circulation pump 500. Also, part of the ink supplied to the bypass channel 160 from the third supply path 910 is supplied to the first collection channel 140 and then supplied to the ejection ports 13 of the ejection module 300. Thus, the ink to be ejected from the ejection ports 13 is supplied from both the supply channel 130 and the first collection channel 140.

The third pressure adjustment unit 902 is disposed outside the liquid ejection head 1 and communicates with the third supply path 910 in the liquid ejection head 1 through the second supply path 112. The third pressure adjustment unit 902 is, for example, of a hydraulic head type utilizing a hydraulic head difference but any types can be employed. In this modification, ink supply types such as the ink cartridge type and the continuous ink supply system (CISS) type can be employed as well.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. Also, the second bubble accumulation chamber 520B is provided on a vertically upper side of the first collection channel 140 so as to be in fluid communication with the first collection channel 140, and the second bubble discharge unit 770B is formed so as to extend vertically upward from the second bubble accumulation chamber 520B. In this way, bubbles included in the ink in the supply channel 130, the first collection channel 140, the pump inlet channel 170, the pump outlet channel 180, and the like as a result of circulation and ejection operations will be trapped in the bubble accumulation chambers 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chambers 520 and with which a sufficient bubble discharge rate can be achieved. This significantly lowers the possibility of bubbles entering the ejection ports 13.

The first bubble discharge unit 770A and the second bubble discharge unit 770B communicate with the ink supply unit 400 in the main body part of the liquid ejection apparatus 50 and are depressurized by an operation of the ink supply unit 400. Further, the third check valve 213 is provided between the bubble discharge units 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided at each of the branching portions of the third air channel 113 between the ink supply unit 400 and the first and second bubble discharge units 770A and 770B. The third check valve 213 may be provided at the merged portion of the third air channel 113 between the ink supply unit 400 and the first and second bubble discharge units 770A and 770B.

The bubble accumulation chambers 520 and the bubble discharge units 770 do not need to be provided on the two channels, namely the supply channel 130 and the first collection channel 140, and may be provided only on the supply channel 130 or provided only on the first collection channel 140. Also, three or more bubble accumulation chambers 520 and bubble discharge units 770 may be provided. The bubble accumulation chambers 520 and the bubble discharge units 770 do not need to be provided on the supply channel 130 or the first collection channel 140. For example, a bubble accumulation chamber 520 and a bubble discharge unit 770 may be provided on a vertically upper side of the ink tank 2, the first supply path 111, the second supply path 112, the third supply path 910, or the like. A bubble accumulation chamber 520 and a bubble discharge unit 770 may be provided on a vertically upper side of the filter 110, the pump inlet channel 170, the pump outlet channel 180, the bypass channel 160, the pressure chambers 12, or the like. Also, the bubble accumulation chambers 520 and the bubble discharge units 770 do not necessarily have to be provided on vertically upper sides of fluid communication portions, such as the supply channel 130. The bubble accumulation chambers 520 may communicate with side surfaces of the fluid communication portions and the bubble discharge units 770 may be formed so as to extend on lateral sides of the bubble accumulation chambers 520, as long as they are configured to be capable of trapping bubbles and bringing them into contact with the gas permeable membranes. This also applies to a case where the bubble accumulation chambers 520 and the bubble discharge units 770 are provided at a plurality of portions of fluid communication portions other than the supply channel 130 and the first collection channel 140.

<Sixth Modification of Circulation Path>

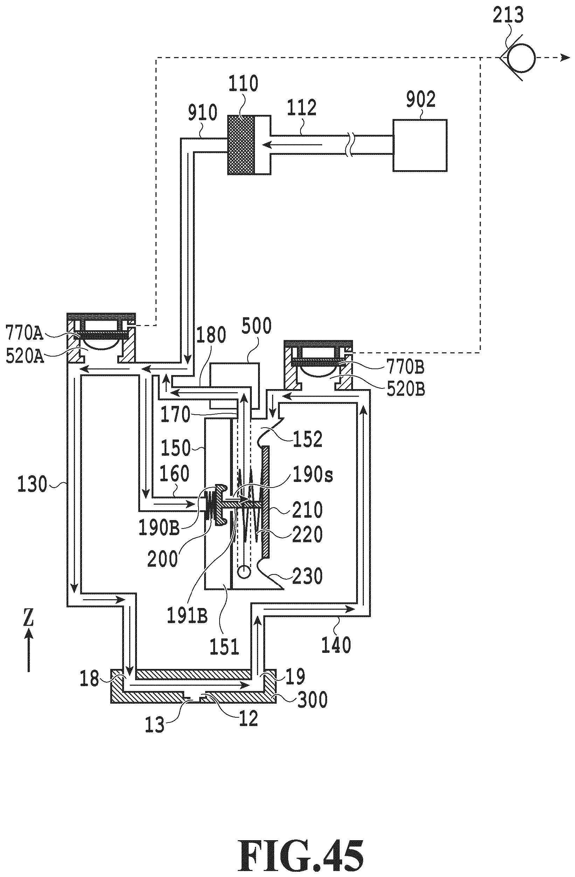

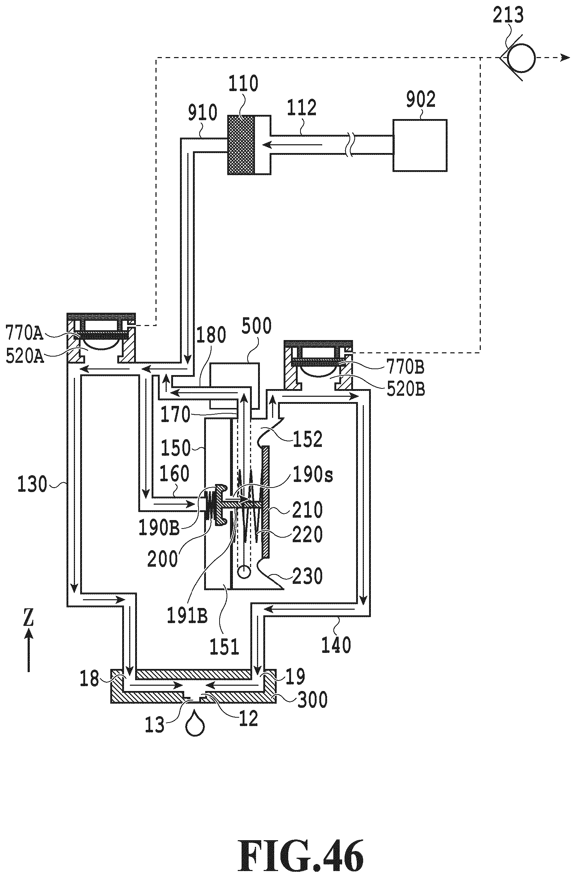

Figs. 45 and 46 are views schematically illustrating a sixth modification of a circulation path. Fig. 45 illustrates the circulation path in a case of performing circulation without performing ejection. Fig. 46 illustrates the circulation path in a case of performing high-duty printing. The sixth modification of the circulation path represents an example in which the first pressure adjustment unit 120 is not disposed and a third pressure adjustment unit 902 communicating with the second supply path 112 is disposed.

In the sixth modification of the circulation path too, in a case of performing a high-duty print operation, the ink is supplied to each pressure chamber 12 from both sides, as illustrated in Fig. 46. Specifically, the ink supplied to the supply channel 130 from the third supply path 910 is supplied to the ejection ports 13 of the ejection module 300. On the other hand, part of the ink supplied to the bypass channel 160 from the third supply path 910 is supplied to the third supply path 910 through the second pressure adjustment unit 150, the pump inlet channel 170, the circulation pump 500, and the pump outlet channel 180. Also, part of the ink supplied to the bypass channel 160 is supplied to the first collection channel 140 through the second pressure adjustment unit 150 and then supplied to the ejection ports 13 of the ejection module 300. Thus, the ink to be ejected from the ejection ports 13 is supplied from both the supply channel 130 and the first collection channel 140.

The third pressure adjustment unit 902 is disposed outside the liquid ejection head 1 and communicates with the third supply path 910 in the liquid ejection head 1 through the second supply path 112. The third pressure adjustment unit 902 is, for example, of a hydraulic head type utilizing a hydraulic head difference but any types can be employed. In this modification, ink supply types such as the ink cartridge type and the continuous ink supply system (CISS) type can be employed as well.

The first bubble accumulation chamber 520A is provided on a vertically upper side of the supply channel 130 so as to be in fluid communication with the supply channel 130, and the first bubble discharge unit 770A is formed so as to extend vertically upward from the first bubble accumulation chamber 520A. Also, the second bubble accumulation chamber 520B is provided on a vertically upper side of the first collection channel 140 so as to be in fluid communication with the first collection channel 140, and the second bubble discharge unit 770B is formed so as to extend vertically upward from the second bubble accumulation chamber 520B. In this way, bubbles included in the ink in the second pressure adjustment unit 150, the supply channel 130, the first collection channel 140, the pump outlet channel 180, and the like as a result of circulation and ejection operations will be trapped in the bubble accumulation chambers 520 and discharged from the ink by a bubble discharge operation. The bubbles included in the ink are bubbles such as upstream bubbles, precipitated bubbles, and unexpected bubbles mentioned earlier but are not limited to these, and it is possible to discharge, from the ink, any amount of bubbles which can be trapped in the bubble accumulation chambers 520 and with which a sufficient bubble discharge rate can be achieved. This significantly lowers the possibility of bubbles entering the ejection ports 13.

The first bubble discharge unit 770A and the second bubble discharge unit 770B communicate with the ink supply unit 400 in the main body part of the liquid ejection apparatus 50 and are depressurized by an operation of the ink supply unit 400. Further, the third check valve 213 is provided between the bubble discharge units 770 and the ink supply unit 400. In this way, even in a case where the main body part of the liquid ejection apparatus 50 is not constantly in operation, a depressurized state is maintained and therefore a bubble discharge operation can be performed. Note that the third check valve 213 may be provided at each of the branching portions of the third air channel 113 between the ink supply unit 400 and the first and second bubble discharge units 770A and 770B. The third check valve 213 may be provided at the merged portion of the third air channel 113 between the ink supply unit 400 and the first and second bubble discharge units 770A and 770B.

The bubble accumulation chambers 520 and the bubble discharge units 770 do not need to be provided on the two channels, namely the supply channel 130 and the first collection channel 140, and may be provided only on the supply channel 130 or provided only on the first collection channel 140. Also, three or more bubble accumulation chambers 520 and bubble discharge units 770 may be provided. The bubble accumulation chambers 520 and the bubble discharge units 770 do not need to be provided on the supply channel 130 or the first collection channel 140. For example, a bubble accumulation chamber 520 and a bubble discharge unit 770 may be provided on a vertically upper side of the ink tank 2, the first supply path 111, the second supply path 112, the third supply path 910, or the like. A bubble accumulation chamber 520 and a bubble discharge unit 770 may be provided on a vertically upper side of the filter 110, the pump inlet channel 170, the pump outlet channel 180, the bypass channel 160, the pressure chambers 12, or the like. Also, the bubble accumulation chambers 520 and the bubble discharge units 770 do not necessarily have to be provided on vertically upper sides of fluid communication portions, such as the supply channel 130. The bubble accumulation chambers 520 may communicate with side surfaces of the fluid communication portions and the bubble discharge units 770 may be formed so as to extend on lateral sides of the bubble accumulation chambers 520, as long as they are configured to be capable of trapping bubbles and bringing them into contact with the gas permeable membranes. This also applies to a case where the bubble accumulation chambers 520 and the bubble discharge units 770 are provided at a plurality of portions of fluid communication portions other than the supply channel 130 and the first collection channel 140.

<Other Modifications of Circulation Path>

Next, other modifications of a circulation channel will be described. As mentioned earlier, the configurations in which the ink backs up toward the pressure chambers 12 from the first collection channel 140 only need to be such that the bypass channel 160 is provided. Moreover, the configurations in which the ink backs up toward the pressure chambers 12 from the first collection channel 140 only need to be such that no mechanism that functions as a check valve is provided between the merging portion of the bypass channel 160 and the pressure chambers 12. Thus, with a circulation channel that can maintain this relationship, the ink can be supplied to the pressure chambers 12 from both sides, and the ejection stability can therefore be improved.

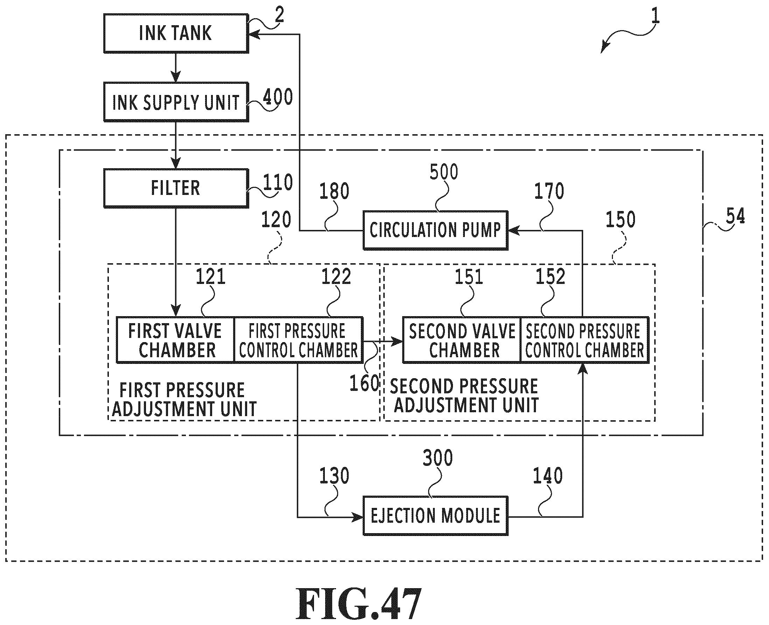

Figs. 47, 48, and 49 are block diagrams schematically illustrating other modifications of a circulation path. In Figs. 47, 48, and 49, illustration of the bubble discharge units 770 and the gas channels connected to the bubble discharge units 770 (e.g., the third air channel 113 and the like) is omitted.

Fig. 47 represents an example in which the pump outlet channel 180 located downstream of the circulation pump 500 is configured to be connected to the ink tank 2, not to the first pressure control chamber 122. This configuration can also improve the ejection stability similarly to the configurations described above.

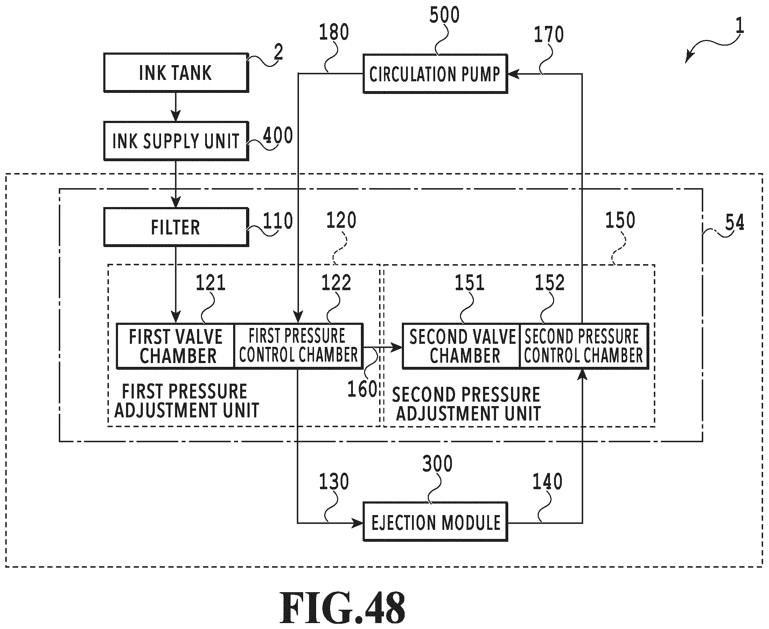

Fig. 48 represents an example in which each circulation pump 500, which is mounted in the liquid ejection head 1 in the above, is installed on the main body side of the liquid ejection apparatus 50. The pump inlet channel 170 and the pump outlet channel 180 are partly disposed outside the liquid ejection head 1 as well. This configuration can also improve the ejection stability similarly to the configurations described above.

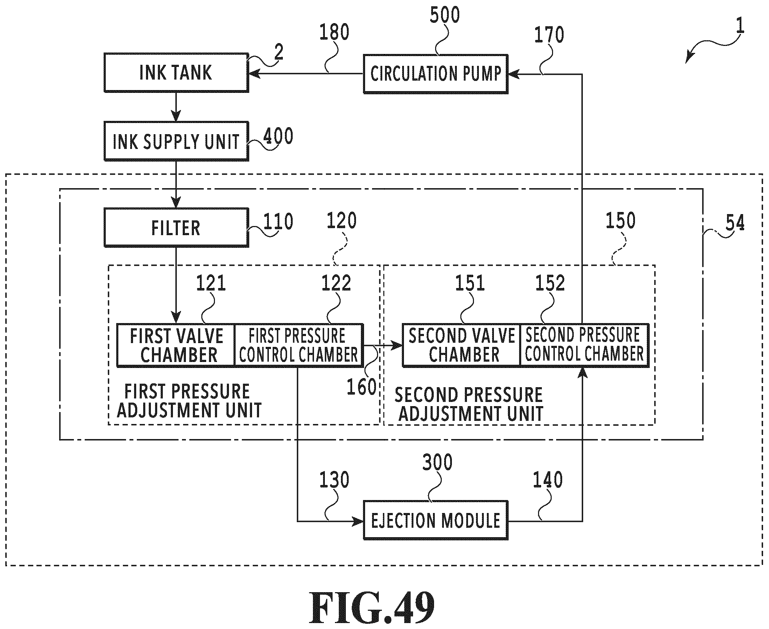

Fig. 49 represents an example in which each circulation pump 500, which is mounted in the liquid ejection head 1 in the above, is installed on the main body side of the liquid ejection apparatus 50, and the pump outlet channel 180 is connected to the corresponding ink tank 2. This configuration can also improve the ejection stability similarly to the configurations described above.

<Other Modifications>

The liquid ejection head 1 illustrated in Fig. 1A has been described by taking, as an example, a so-called serial liquid ejection head which ejects inks while moving in the main scanning direction, but is not limited to this. The liquid ejection head 1 may be a so-called full-line liquid ejection head in which ejection ports are formed over the entire width of the print medium P and which is capable of ejecting the inks onto the whole region of the print medium P in the width direction without moving in the main scanning direction.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A liquid ejection head (1) including:

   a pressure chamber (12) communicating with an ejection port (13) capable of ejecting a liquid;
   a liquid reservoir chamber capable of supplying the liquid to the pressure chamber (12);
   a depressurization chamber (760) adjoining the liquid reservoir chamber and configured such that an inside of the depressurization chamber (760) is depressurizable; and
   a gas permeable membrane (710) disposed between the liquid reservoir chamber and the depressurization chamber (760),
   the liquid ejection head (1) **characterized in that** the gas permeable membrane (710) is such that an amount of gas permeation through an area of 0.36 cm$^2$ from the liquid reservoir chamber into the depressurization chamber (760) is 0.01 cc/day or more in a case where a pressure difference between the depressurization chamber (760) and the liquid reservoir chamber is 50 kPa.

2. The liquid ejection head (1) according to claim 1, wherein a thickness of the gas permeable membrane (710) is 0.1 mm or less.

3. The liquid ejection head (1) according to claim 2, wherein the thickness of the gas permeable membrane (710) is 0.02 mm.

4. The liquid ejection head (1) according to any one of claims 1 to 3, wherein the gas permeable membrane (710) is formed to be separate from the liquid reservoir chamber and is bonded to the liquid reservoir chamber.

5. The liquid ejection head (1) according to claim 4, wherein a housing of the liquid reservoir chamber includes a bonding margin to which the gas permeable membrane (710) is bonded.

6. The liquid ejection head (1) according to any one of claims 1 to 5, further comprising a cover member (730) forming part of the depressurization chamber (760).

7.  The liquid ejection head (1) according to claim 6, wherein a deformation suppression member (720) which suppresses deformation of the gas permeable membrane (710) is provided in the depressurization chamber (760).

8.  The liquid ejection head (1) according to claim 7, wherein the deformation suppression member (720) is a mesh filter with a reticulated structure provided so as to cover the gas permeable membrane (710).

9.  The liquid ejection head (1) according to claim 7 or 8, wherein the deformation suppression member (720) is in abutment with part of the cover member (730).

10. The liquid ejection head (1) according to any one of claims 7 to 9, wherein a material of the deformation suppression member (720) is stainless steel.

11. The liquid ejection head (1) according to claim 1, wherein part of the liquid reservoir chamber or of the depressurization chamber (760) is formed of a film.

12. The liquid ejection head (1) according to claim 7, wherein the deformation suppression member (720) is a non-woven fabric member.

13. The liquid ejection head (1) according to claim 7, wherein the deformation suppression member (720) is a rib member formed integrally with the cover member (730).

14. The liquid ejection head (1) according to any one of claims 1 to 12, wherein a material of the gas permeable membrane (710) is polypropylene.

15. The liquid ejection head (1) according to any one of claims 1 to 13, wherein an oxygen permeability coefficient of the gas permeable membrane (710) with a thickness of 0.025 mm is 2000 cc/m$^2$ · 24 hrs · atm or more.

16. A liquid ejection apparatus (50) capable of being equipped with a liquid ejection head (1) including:

    a pressure chamber (12) communicating with an ejection port (13) capable of ejecting a liquid;
    a liquid reservoir chamber capable of supplying the liquid to the pressure chamber (12);
    a depressurization chamber (760) adjoining the liquid reservoir chamber and configured such that an inside of the depressurization chamber (760) is depressurizable; and
    a gas permeable membrane (710) disposed between the liquid reservoir chamber and the depressurization chamber (760),
    the liquid ejection apparatus (50) **characterized in that** the gas permeable membrane (710) is such that an amount of gas permeation through a region thereof with an area of 0.36 cm$^2$ from the liquid reservoir chamber into the depressurization chamber (760) is 0.01 cc/day or more in a case where a pressure difference between the depressurization chamber (760) and the liquid reservoir chamber is 50 kPa.

17. The liquid ejection apparatus (50) according to claim 16, further comprising a depressurization unit configured to depressurize the depressurization chamber (760).

**FIG.1A**

**FIG.1B**

FIG.2

EP 4 624 170 A1

**FIG.3**

**FIG.4**

— ATMOSPHERIC PRESSURE

— POSITIVE PRESSURE

— STRONG NEGATIVE PRESSURE

EP 4 624 170 A1

**FIG.5**

ATMOSPHERIC PRESSURE
POSITIVE PRESSURE
WEAK NEGATIVE PRESSURE
STRONG NEGATIVE PRESSURE

EP 4 624 170 A1

FIG.6

ATMOSPHERIC PRESSURE
POSITIVE PRESSURE
STRONG NEGATIVE PRESSURE

**FIG.7**

54
(54B)

54
(54C)

54
(54M)

54
(54Y)

53

89 (89C)
88 (88C)
89 (89B)
88 (88B)

88 (88M)
89 (89M)
88 (88Y)
89 (89Y)

8
48
49
4

3

XVI

XVI

7a  18 13

19

300

300

7a  5  7

# FIG.8A

18  19  15

18  19  15

310

300

320

323  324
13

12  13

Z

X

Y

# FIG.8B

**FIG.9**

FIG.10A

FIG.10B

**FIG.11**

**FIG.12A**            **FIG.12B**            **FIG.12C**

**FIG.13A**

**FIG.13B**

EP 4 624 170 A1

**FIG.14**

**FIG.15A**    **FIG.15B**    **FIG.15C**

**FIG.15D**    **FIG.15E**

**FIG.16A**

**FIG.16B**

**FIG.17**

EP 4 624 170 A1

**FIG.18**

EP 4 624 170 A1

**FIG.19A**

**FIG.19B**

**FIG.19C**

FIG.20A

FIG.20B

18   19

12

13

X

MAIN SCANNING DIRECTION

# FIG.21A

18   19

12

13

X

MAIN SCANNING DIRECTION

# FIG.21B

**FIG.22**

EP 4 624 170 A1

IN    OUT    IN    OUT    IN    OUT

C         M         Y

340
320

18
323         19
12  13  12  324

X

MAIN SCANNING DIRECTION

# FIG.23A

C         M         Y

IN    OUT    IN    OUT    IN    OUT

340

Y

18    19
13         X

# FIG.23B

**FIG.24A**

**FIG.24B**

**FIG.25A**

**FIG.25B**

**FIG.26**

**FIG.27A**

**FIG.27B**

EP 4 624 170 A1

EP 4 624 170 A1

770 (770A, 770B)

730
761
760
720
710
780
520
(520A, 520B)
540
751

Z

**FIG.28A**

770 (770A, 770B)

780
730
761
760
720
710
520
(520A, 520B)
540
751

Z

**FIG.28B**

**FIG.29**

**FIG.30A**

**FIG.30B**

**FIG.30C**

EP 4 624 170 A1

**FIG.31A**     **FIG.31B**     **FIG.31C**

EP 4 624 170 A1

**FIG.32**

**FIG.33**

FIG.34A

904

FIG.34B

904

FIG.34C

904

FIG.34D

904

**FIG.35**

**FIG.36**

**FIG.37**

FIG.38

**FIG.39**

**FIG.40**

**FIG.41**

**FIG.42**

**FIG.43**

FIG.44

**FIG.45**

**FIG.46**

**FIG.47**

EP 4 624 170 A1

**FIG.48**

EP 4 624 170 A1

**FIG.49**

Europäisches
Patentamt
European
Patent Office
Office européen
des brevets

# EUROPEAN SEARCH REPORT

**Application Number**

EP 25 16 5912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/227520 A1 (YAMANAKA AKIHIRO [JP] ET AL) 11 December 2003 (2003-12-11) * paragraphs [0087] - [0183], [0198] - [0323]; figures 1-4,9 * | 1-17 | INV. B41J2/175 B41J2/14 B41J2/19 |
| A | US 2013/187978 A1 (MUNAKATA MANABU [JP]) 25 July 2013 (2013-07-25) * paragraphs [0039] - [0104]; figures 1-12 * | 1-17 | |
| A | US 2023/191794 A1 (YOSHII KAZUYA [JP] ET AL) 22 June 2023 (2023-06-22) * the whole document * | 1-17 | |

**TECHNICAL FIELDS SEARCHED (IPC)**

B41J

The present search report has been drawn up for all claims

| Place of search | Date of completion of the search | Examiner |
|---|---|---|
| The Hague | 1 August 2025 | Bitane, Rehab |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 624 170 A1

## ANNEX TO THE EUROPEAN SEARCH REPORT
## ON EUROPEAN PATENT APPLICATION NO.

EP 25 16 5912

01-08-2025

| Patent document cited in search report | | | Publication date | Patent family member(s) | | | Publication date |
|---|---|---|---|---|---|---|---|
| US 2003227520 | A1 | | 11-12-2003 | AT | E374696 | T1 | 15-10-2007 |
| | | | | AU | 784532 | B2 | 27-04-2006 |
| | | | | CA | 2371024 | A1 | 09-08-2002 |
| | | | | CN | 1374196 | A | 16-10-2002 |
| | | | | DE | 60222711 | T2 | 03-07-2008 |
| | | | | EP | 1231062 | A2 | 14-08-2002 |
| | | | | HK | 1048286 | A1 | 28-03-2003 |
| | | | | JP | 3801003 | B2 | 26-07-2006 |
| | | | | JP | 2002307709 | A | 23-10-2002 |
| | | | | KR | 20020066234 | A | 14-08-2002 |
| | | | | SG | 115449 | A1 | 28-10-2005 |
| | | | | US | 2003227520 | A1 | 11-12-2003 |
| US 2013187978 | A1 | | 25-07-2013 | CN | 103213399 | A | 24-07-2013 |
| | | | | JP | 5994969 | B2 | 21-09-2016 |
| | | | | JP | 2013146963 | A | 01-08-2013 |
| | | | | US | 2013187978 | A1 | 25-07-2013 |
| US 2023191794 | A1 | | 22-06-2023 | CN | 116265248 | A | 20-06-2023 |
| | | | | EP | 4197797 | A1 | 21-06-2023 |
| | | | | KR | 20230092758 | A | 26-06-2023 |
| | | | | US | 2023191794 | A1 | 22-06-2023 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008173961 A